(19) Europäisches Patentamt
European Patent Office
Office européen des brevets

(11) Publication number: **0 267 158 B1**

(12) **EUROPEAN PATENT SPECIFICATION**

(45) Date of publication of patent specification: **02.01.92**

(51) Int. Cl.5: **G02B 1/04**, C08G 77/46, C08L 83/12

(21) Application number: **87810626.9**

(22) Date of filing: **02.11.87**

(54) **Substantially non-swellable contact lens containing block copolymer polysiloxane-polyoxyalkylene backbone units.**

(30) Priority: **06.11.86 US 928240**
**28.07.87 US 78346**

(43) Date of publication of application:
**11.05.88 Bulletin 88/19**

(45) Publication of the grant of the patent:
**02.01.92 Bulletin 92/01**

(84) Designated Contracting States:
**AT BE CH DE ES FR GB GR IT LI LU NL SE**

(56) References cited:
**DE-A- 2 446 818**
**US-A- 4 153 641**
**US-A- 4 260 725**
**US-A- 4 486 577**

(73) Proprietor: **CIBA-GEIGY AG**
**Klybeckstrasse 141**
**CH-4002 Basel(CH)**

(72) Inventor: **Su, Kai Chiang**
**13090 Hopewell Road**
**Alpharetta Georgia 30201(US)**
Inventor: **Robertson, Richard J.**
**3415 Aubusson Trace**
**Alpharetta Georgia 30201(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to ophthalmic devices, such as contact lenses and intraocular implants, and particularly contact lenses of a block copolymer containing polysiloxane and polyoxyalkylene oxide units possessing an advantageous blend of desirable properties including a) high oxygen permeability, b) good wettability, c) flexibility, d) optical clarity, and e) a substantial lack of aqueous swellability in the ocular environment of use.

The use of siloxane containing materials of various types in the fabrication of ophthalmic devices is well known.

Thus, in U.S. 3,996,187; 3,996,189; 3,341,490 and 3,228,741 there are described contact lenses fabricated from poly (organosiloxanes) containing fillers. While such lenses are generally soft and of high oxygen permeability, the use of fillers such as silica, is indicated in order to increase the otherwise generally poor tear strength and tensile strength. Also, such silicone rubber lenses are characteristically both hydrophobic and lipophilic.

U.S. 3,808,178 discloses hard contact lenses fabricated from copolymers of a polysiloxanylalkyl acrylate or methacrylate ester and an alkyl acrylate or methacrylate ester. The monomers and polymers of the patent are hydrophobic and are incompatible with hydrophilic materials such as hydroxyethyl methacrylate. While the disclosed lenses have increased oxygen permeability, they are rigid.

U.S. 4,136,250 discloses hydrogels of a copolymer of about 20 to about 90 % of a hydrophilic (or mixture of hydrophilic and hydrophobic) monomer and about 10 to about 80 % of a polyolefinic siloxane macromer which can be used to fabricate a contact lens. Typically, such hydrogels are recited to possess a degree of swelling of about 10 to about 12 %. It has been found, however, that the presence of substantial amounts of water in such hydrogels limits the oxygen permeability of such materials.

U.S. 4,153,641 relates, in relevant part, to contact lenses fabricated from a polymer of a polyorganosiloxane terminated with vinylic groups, or copolymers thereof with other monomers. The exemplified products therein are hydrophobic in nature.

U.S. 4,486,577 relates to copolymers of about 8 to 70 % of a polysiloxane macromer containing at least two vinyl groups and 30-92 % of a monomer which is at least predominantly water insoluble to make polymers useful, for example, as contact lenses.

Generally, such prior art contact lenses compositions are either insufficiently hydrophilic in terms of surface wettability to be acceptable to the contact lens profession, even though they may possess high oxygen permeability, or such contact lenses are of acceptable wettability but the hydrophilicity is coupled with water swellability, which tends to limit optimum oxygen permeability.

It is an object of the present invention to overcome these and other disadvantages of the art by providing ophthalmic devices, such as contact lenses and corneal implants as claimed in Claim 1, possessing a high degree of surface wettability but which are substantially non-swellable in the aqueous environment of use, and possessing a high degree of oxygen permeability by employing a crosslinked block polymer containing polysiloxane and polyalkylene oxide units.

A further object of the invention is the use of the claimed device for correcting visual defects in the form of refractive errors as claimed in Claim 47 by fitting to the patient's eye in need of the same a corrective contact lens of such polymer. A further object of the invention is a polymer as claimed in Claim 53. These and other objects of the invention are apparent from the following detailed description of the invention.

One embodiment of the present invention relates to an optically clear, hydrolytically stable, biologically inert, wettable, flexible, substantially non-swellable in aqueous ocular tear fluid, oxygen permeable ophthalmic device, such as a contact lens, which comprises a crosslinked polymer of a crosslinkable monomer having a segment S″ of the formula I,

$$-(D-S'-L-D-A-L)_a- \quad (I)$$

wherein a is 1 to 10;
each D is independently oxygen or $-N(R^{21})-$;
each S′ is independently a segment of formula II,

$$-(CH_2)_h-(\underset{R^2}{\overset{R^1}{Si}}O)_v-\underset{R^2}{\overset{R^1}{Si}}-(CH_2)_i-O- ; \qquad (II)$$

each A is independently a segment of formula III,

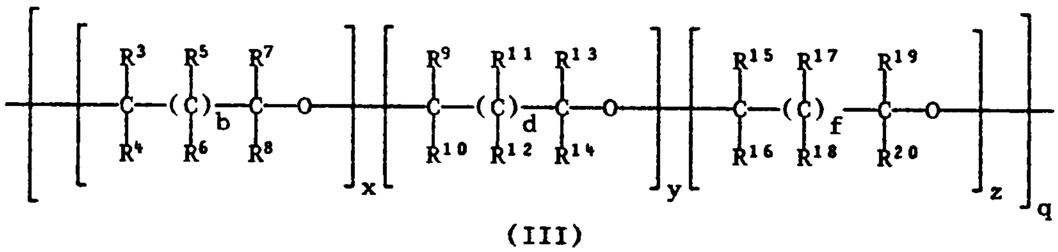

(III)

the terminal oxygen within each unit of formula II and III being replaceable by $-N(R^{21})-$;

each L is independently -BRB′-, the terminal L group within any one monomer of formula I also being capable of being -BR-;

wherein each b, d and f is independently 0 - 4; q is a number from 1 to 1000; each x, y and z is independently 0 to 100 provided at least one of x, y and z is at least 1; such that (x + y + z) multiplied by q is 4 to 1000, preferably 25 to 75;

each h and i is an integer from 1 to 6, v is an integer from 2 to 75, preferably 2 to 50, more preferably 10 to 50, most preferably 15 to 50;

$R^1$ and $R^2$ are independently alkyl of up to 18 carbon atoms, or aryl of up to 12 carbon atoms, preferably lower alkyl or phenyl, most preferably methyl;

each of $R^3$, $R^4$, $R^7$-$R^{10}$, $R^{13}$-$R^{16}$, $R^{19}$ and $R^{20}$ is independently selected from the group consisting of hydrogen, halogen, an aliphatic, aromatic or heterocyclic containing radical such as:

unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already singly bound to another oxygen atom;

$R^3$, $R^4$, $R^7$-$R^{10}$, $R^{13}$-$R^{16}$, $R^{19}$ and $R^{20}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said $R^3$ alkyl set forth above;

$R^5$, $R^6$, $R^{11}$, $R^{12}$, $R^{17}$ and $R^{18}$ are selected from the same group set forth above for $R^3$; and $R^5$, $R^6$, $R^{11}$, $R^{12}$, $R^{17}$ and $R^{18}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which may be further substituted by fluoro, aryl of up to 10 carbon atoms, or $C_1$-$C_{16}$ alkoxy, and $R^5$, $R^6$, $R^{11}$, $R^{12}$, $R^{17}$ and $R^{18}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom; or 2 adjacent groups, selected from $R^3$-$R^{20}$, together with the atoms to which they are attached may form a 5 - 8 membered cycloalkyl, oxacycloalkyl or bicycloalkyl ring.

The monomer of formula I preferably is of formula Ia,

$-(D\text{-}A\text{-}L\text{-}S'')_c-$ (Ia)

or of formula Ib,

$-(S'')_c\text{-}D\text{-}S'\text{-}L_a-$ (Ib)

even more preferably of formula Ic,

$L'\{(D-A-L)_e-S''\}_cL''$  (Ic)

and more preferably said monomer being divinylic; wherein D, A, L, S′, S″ are as defined hereinbefore; and wherein c is 1 to 10; e is zero or one; a times c is 1 to 10; $L_a$ is selected from -BRB′- and -BR-; L′ is hydrogen, P′-RB′-, or P′-BRB′-; and L″ is hydrogen, or -P′, or, in case that e is zero, also -D-S′-BR-P′ or -D-S′-BRB′-P′.

$R^{21}$ is independently selected from hydrogen, $C_1$-$C_4$ alkyl and phenyl, and is preferably hydrogen.

Each B and B′ is selected from

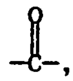, 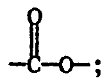; and 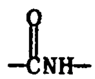

with the carbonyl group being bound to A, S′, D or P′;

each R is independently a divalent linking group preferably selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino;

b) a divalent 5 - 7 membered cycloaliphatic group having 5 - 25 carbon atoms;

c) a divalent arylene group having 6 - 25, preferably 7 - 15 carbon atoms; and

d) a divalent aralkyl or alkaryl group having 7 to 25, preferably 8 - 16 carbon atoms;

wherein groups b) and d) can be optionally interrupted by the same groups as in group a) and wherein the aryl rings in groups c) and d) may be further substituted with one or more substituents selected from halogen, preferably fluorine or chlorine, $C_1$-$C_4$ alkyl, preferably methyl, and $C_1$-$C_{12}$ perhalo alkyl, especially $C_1$-$C_{12}$ perfluoro alkyl;

and P′ is hydrogen, amino, hydroxy, or a moiety containing a crosslinkable group which may be crosslinked when coreacted with a suitable crosslinking agent or when irradiated by actinic radiation.

In the foregoing, all alkyl groups whether mentioned alone or as part of another group are preferably $C_1$-$C_4$ alkyl, such as methyl, ethyl, propyl and butyl, especially t-butyl, with the exception that adjacent groups on aryl rings cannot each be t-butyl. These alkyl groups may be straight chain or branched chain. When the alkyl is a substituent on a phenyl ring, it is preferably attached at the para position. Preferably alkenyl groups, whether alone or as part of another group, are $C_2$-$C_4$ alkenyl, such as ethenyl, propenyl and butenyl. Preferred aryl groups (whether alone or as part of another group) are phenyl and naphthyl, more preferably phenyl. Preferably the aryl groups are still further substituted by $C_1$-$C_4$ alkyl, more preferably t-butyl, most preferably in the para position. Halogen may be chloro, bromo, iodo or fluoro.

Preferably b, d and f are independently 0 - 3, more preferably 0 - 2, most preferably 0 or 1. While the group identified by formula I may be highly halogenated, it is preferably at least 25 % halogen free, more preferably 30 %, still more preferably 40 %, and most preferably substantially halogen free. Wherever cyclo groups are indicated, whether carbocyclic or heterocyclic they preferably have 5 - 6 ring members and the heterocyclics preferably have only carbon atoms and an oxygen atom as ring members.

Bicycloalkyl is understood to cover those groups when two adjacent R groups in a segment of formula III together form a ring and one of them already is a cycloalkyl group. In other words a fused ring system made up of two geminal R groups and the carbon atom to which they are attached results. For example if $R^3$ is cyclopropyl and $R^4$ is methyl then $R^3$ and $R^4$ together with the carbon to which it is attached could be (2,1,0) cyclopent-2,2-diyl.

In formula I, when b is greater than one, each of the multiple $R^5$ and $R^6$ groups may be the same or different; however preferably all of the $R^5$ groups are the same and all of the $R^6$ groups are the same. The same is true with respect to d, $R^{11}$, and $R^{12}$; and f, $R^{17}$, and $R^{18}$.

Preferably, each of b, d and f is independently an integer of 0 to 2, and most preferably zero or one.

In one aspect of the invention, each of $R^3$-$R^7$, $R^9$-$R^{13}$ and $R^{15}$-$R^{19}$ is hydrogen. Preferably the substituents $R^8$, $R^{14}$ and $R^{20}$ are alkyl of up to 16 carbon atoms; alkyl of up to 16 carbon atoms substituted by alkoxy of up to 8 carbon atoms, or fluoro; phenyl which is unsubstituted or substituted by fluoro, alkoxy of up to 6 carbon atoms or alkyl of up to 6 carbon atoms; benzyl wherein the phenyl ring thereof is unsubstituted or substituted by fluoro, alkoxy of up to 6 carbon atoms or alkyl of up to 6 carbon atoms; cyclohexyl; or oxacycloalkyl of 4 or 5 ring carbon atoms.

A highly advantageous subembodiment relates to wettable, non-swellable ophthalmic devices, preferably contact lenses, fabricated from a polymer of formula I wherein A is of the formula IV,

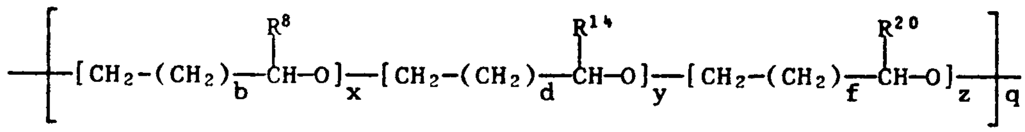

IV

wherein b, d, f, q, x, y, z, $R^8$, $R^{14}$ and $R^{20}$ are as defined above. There are two very highly advantageous embodiments having formula IV which are represented by either formula V

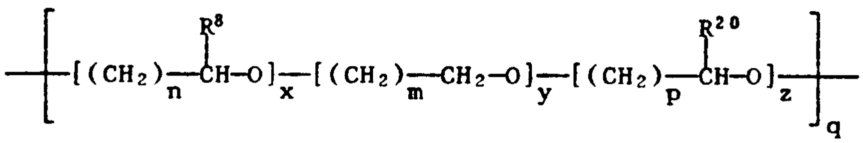

(V)

wherein n is b + 1; m is d + 1, p is f + 1; n, m and p each independently being preferably 1 - 3, more preferably 1 or 2, most preferably 1; and x, y, z and q are as defined above; $R^8$ and $R^{20}$ are hydrogen or one is, but preferably both are, an aliphatic, aromatic, or heterocyclic radical, preferably alkyl of up to 6 carbon atoms, alkyl of up to 6 carbon atoms substituted by alkoxy of up to 6 carbon atoms or fluoro; phenyl which is unsubstituted or substituted by fluoro, alkoxy of up to 6 carbon atoms or alkyl of up to 6 carbon atoms; benzyl wherein the phenyl ring thereof is unsubstituted or substituted by fluoro, alkoxy of up to 6 carbon atoms or alkyl of up to 6 carbon atoms; cyclohexyl or oxacycloalkyl of 4 or 5 ring carbon atoms; or which are represented by formula VI

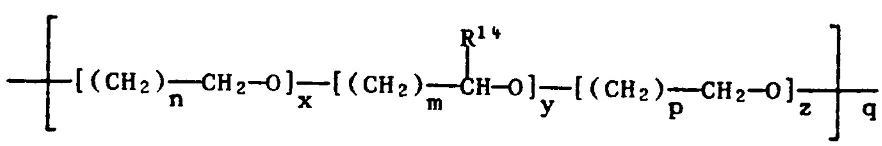

(VI)

wherein n, m, p, x, y, z and q are as defined above for formula V and $R^{14}$ is preferably selected from the same group as $R^8$ in formula V.

In the foregoing it is to be understood that the units of x, y and z may be positioned randomly, in block segments, or alternately.

Another preferred embodiment corresponds to formulae IV, V and VI wherein z is zero.

Desirably, the polymer segments of formula III or IV in the completed polymer are predominantly and preferably substantially devoid of free hydroxyl groups in the interior of the polymer as such groups tend to reduce oxygen permeability.

Free hydroxy groups on the outer surfaces of the formed polymer are acceptable as they increase wettability without drawing water into the polymer matrix. However, it is still preferable to have as few free hydroxy groups in the finished polymer as practical if a contact lens having high oxygen permeability is to be prepared. A suitable means of tying up the free hydroxy groups present would be to interact them with a color group.

Typical color groups useful in these embodiments include, but are not limited to, the hydroxy-reactive dyes known in the art under the tradename Remazol, manufactured by American Hoechst. Examples of the Remazol dyes which are especially useful are:

| Dye | Color Index Code |
|---|---|
| Remazol Brill Blue RW | Reactive Blue 19 |
| Remazol Yellow GR | Reactive Yellow 15 |
| Remazol Black B | Reactive Black 5 |
| Remazol Golden Orange 3GA | Reactive Orange 78 |
| Remazol Turquoise P | Reactive Blue 21 |

all of which have at least one group of the formula

$-SO_2-CH_2CH_2O-SO_3^{\ominus}$

which reacts with the polymer or monomer hydroxy group to yield a dye-$SO_2$-$CH_2$-$CH_2$-O-polymer or

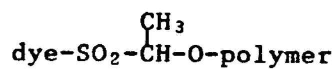

group, preferably the former. In such a manner, both excess free hydroxy groups are disposed of and colored contact lenses can be realized simultaneously. The color group or former can be reacted with monomer before the monomer is incorporated into the structure of formula I or afterwards. Another means of disposing of these excessive hydroxy groups is to utilize their presence to form various degrees and types of crosslinking.

A vinylic comonomer is frequently utilized to increase the hydrophilicity of the final product without substantially altering the other properties mentioned above. Typically, when the vinylic comonomer is a polyethylene glycol of the formula

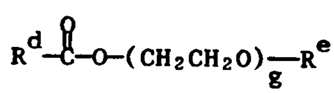

or pyrrolidone of the formula

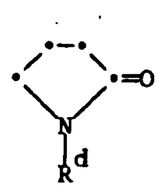

with g being 1 - 25, $R^e$ being hydrogen or methyl and $R^d$ being $CH_2=CH$-, $CH_2=C(CH_3)$- or other UV curable moiety, the resultant polymer is more hydrophilic than previously, but the Dk is essentially the same as when the comonomer is absent.

Usually, when present, the vinylic comonomer is used in an amount of about 2 % to about 10 % by weight of the resultant polymer. Advantageously, no more than 5 % of vinylic comonomer is used when the compound of formula V has a molecular weight in excess of 8000. Generally, when the compound of formula V has a molecular weight of under about 4000, up to 10 % by weight of vinylic comonomer can be used. When the compound of formula V has a molecular weight between 4000 and 8000, the maximum amount of vinylic comonomer is between 5 % and 10 % by weight.

When P′ is a vinyl containing group, for example a group containing the moiety

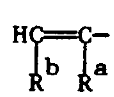

with $R^a$ and $R^b$ as defined below

(e.g. 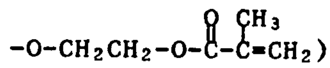),

then the monomer of formula I can be crosslinked in the presence or absence of up to less than about 50 %, preferably up to about 50 %, most preferably up to about 10 % by weight of other vinylic comonomers, provided that such comonomers are substantially free of hydroxy groups in the final product.

When P′ does not have a vinylic group, but takes part in crosslinking, P′ contains e.g. an active hydrogen. Preferably P′ terminates in an OH, $NHR^c$, ($R^c$ being hydrogen or lower alkyl), a leaving group bound directly to the B or B′ carbonyl, a conventional acyl leaving group when not so bound, SCN- or OCN-. Crosslinking is then typically carried out by condensation or addition with a bi- or polyfunctional coreactive monomer. For example, when P′ is OH, then the coreactive monomer functional group can be -$NHR^c$,-COOH, OCN-, SCN-, etc.; when P′ is $NHR^c$,the reactive comonomer functional group can be a conventional acyl, or acyl bound to a conventional leaving group; and when P′ has OCN- or SCN-, then the reactive comonomer functional group can be OH. Similarly, the other coreactive functional groups mentioned in terms of either P′ or the coreactive monomer can be interchanged (Those mentioned as part of P′ being on the coreactive monomer and those mentioned as part of the coreactive monomer being part of P′).

Suitable vinylic comonomers and coreactive monomers for condensation are set forth below. However, the list is not exhaustive and those of ordinary skill will appreciate the modifications, additions, and alternatives which may also be employed.

When either or both L′ and L″ are hydrogen, or terminate in P′ with P′ being hydrogen, at least one additional crosslinkable moiety must be present as one of, or as substituent on one of, the groups $R^3$-$R^{20}$. Such crosslinkable groups may also be present as a substituent on or in place of one or more of $R^3$-$R^{20}$ even when one or both of L′ and L″ have crosslinkable groups therein. However, the degree of crosslinking in the finished crosslinked polymer should not exceed 10 %, preferably not more than 5 %, and should be more preferably in the range of 1 - 4 %, most preferably in the range of 2 - 3 %.

Within the polymer fabricated from monomers of formula I, not more than 20-70 %, preferably not more than 50 % of the A groups are polyethylene glycol.

The number of A units and the chain length and nature of the substituents on the polyoxyethylene segment is determined by the degree of wettability desired in the polymer of the compound of formula I. In general, the polymer should be sufficiently hydrophilic in its surface properties such that the polymer exhibits a contact angle with distilled water at 20 ° C of less than 60 ° , preferably less than 40 ° , more preferably less than 25 ° , still more preferably less than 15 ° , most preferably less than 10 ° .

The greater the number of siloxane units, the greater the number of oxyalkylene units is generally required to reduce the contact angle to within the above limits.

Further, a large excess of unsubstituted oxyethylene units is to be avoided as such excess units tend to cause the polymer to be swellable. As water is taken up, the oxygen permeability of such polymers tends to be drastically reduced. Advantageously, the instant polymers absorb less than about 10 % by weight water, preferably less than about 5 % by weight, most preferably less than 3 % by weight water.

Highly preferred are those polymers which exhibit a contact angle of less than 25 ° , more preferably less than 15 ° and most preferably less than 10 ° .

Preferred crosslinked polymers are those consisting essentially of a polymer of a divinylic monomer according to formula I wherein $R^1$ and $R^2$ are methyl, h and i are 2 to 4, v is 2-20; b, d and f are zero; $R^3$, $R^4$ are hydrogen; $R^8$, $R^{14}$ and $R^{20}$ are independently alkyl of up to 8 carbon atoms, $(x+y+z)$ multiplied by q is 4-40 and P′ is:

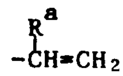

with $R^a$ being hydrogen or methyl.

Very highly advantageous are those polymers of reactive vinylic monomers of the formula VII,

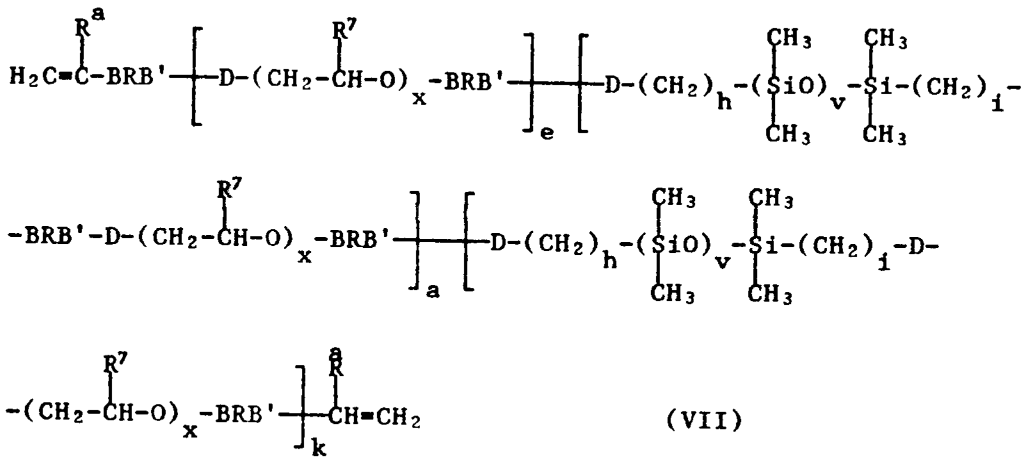

(VII)

where one of e and k is one and the other zero; $R^a$ is hydrogen or methyl;
each R is a divalent arylene group of 6 to 15 carbon atoms, a divalent $C_6$-$C_{10}$-arylene-amino carbonyloxy-$C_2$-$C_6$ alkylene;
or divalent $C_3$-$C_{15}$ cycloaliphatic;
B and B′ are each

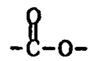 or 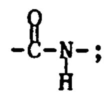

each $R^7$ is alkyl of 1 to 6 carbon atoms, or mixtures thereof with units wherein $R^7$ is hydrogen, preferably with the proviso that $R^7$ can be hydrogen in no more than about 75 %, more preferably 50 %, still more preferably no more than 30 %, of the units;
each x is 4-75, preferably 6-70, more preferably 8-66; v is 2-66, preferably 2-25, more preferably 2-20; i and h are independently 2, 3 or 4; and a is an integer of 1-10, preferably 1-8, more preferably 1-6, still more preferably 1-4, most preferably 1-2.

Within this very highly advantageous embodiment, $R^a$ is most preferably methyl; R is most preferably -phenylene-, $-CH_2CH_2OCONH$-phenylene- or $-CH_2CH_2OCONH$-tolylene-; $R^7$ is methyl, x is most preferably 60 to 66; v is most preferably 15 to 20; a is most preferably 1 to 3; k is most preferably zero; and e is most preferably one.

A very highly preferred embodiment are those polymers from monomers of formula VII wherein each

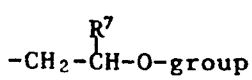

is of the formula

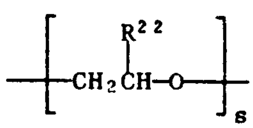

where $R^{22}$ is alkyl of 1 to 4 carbon atoms, most preferably methyl, and s is from about 6 to about 200, preferably from about 25 to about 100, and most preferably from about 50 to about 75.

Also highly preferred are those polymers of monomers of formula VII wherein each

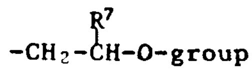

is of the formula VIII

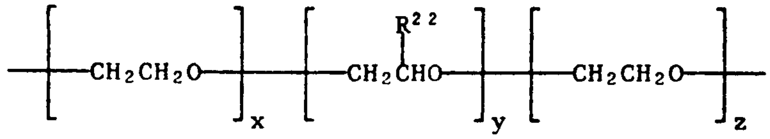 (VIII)

wherein x is from about 2 to about 20, y is from about 8 to about 100, and z from about 4 to about 80. Another valuable embodiment requires the value of y to be at least about twice that of x or z and $R^{22}$ to be alkyl of 1 to 4 carbon atoms, preferably methyl.

The reactive vinylic monomers of formula I can characteristically be polymerized to form crosslinked polymers under conventional polymerization conditions.

If desired, the monomer reaction mixture may contain a catalytic amount of a conventional polymerization catalyst, preferably a free radical catalyst. Of particular interest are conventional peroxide and azo catalysts, such as hydrogen peroxide, benzoyl peroxide, tert-butyl peroctoate, benzoyl peroxide or azobis-(isobutyronitrile).

The polymerization can generally be carried out at temperatures between about 20° and about 150°C, for a period between about 1 and about 24 hours. It is understood that the time and temperature in such a reaction are inversely related. Thus, temperatures employed in the upper end of the temperature range will generally provide reaction times near the lower end of the time range. Preferably, the polymerization is conducted in the presence of actinic radiation, such as UV light.

Depending upon the nature of the polymer mixture, it may be desirable for the polymers obtained from such polymerizations to be post cured, e.g. at a somewhat elevated temperature such as between about 60°C and about 150°C.

For the preparation of contact lenses, the polymer mixture may be cast directly in the shape of the lens, or the polymerization may be carried out in a mold having a shape convenient for further processing, such as in the shape of small cyclinders or "buttons", which can then be machined.

Minor amounts i.e. less than 50 %, preferably up to 30 %, and most preferably up to no more than about 10 % by weight, of conventional copolymerizible vinyl monomers, can be employed as extenders or hydrophilic modifiers, or the like, in the preparation of the instant polymer, as copolymer constituents. Suitable vinyl monomers include:

acrylates and methacrylates of the general formula

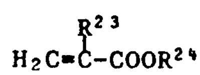

where $R^{23}$ is hydrogen or methyl and $R^{24}$ is a straight chain or branched aliphatic, cycloaliphatic or aromatic group having up to 20 carbon atoms which is unsubstituted or substituted by one or more alkoxy, alkanoyloxy or alkyl of up to 12 carbon atoms, or by halo, especially chloro or preferably fluoro, or $C_3$-$C_5$ polyalkyleneoxy of 2 to about 100 units;

acrylamides and methacrylamides of the general formula

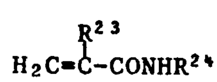

where $R^{23}$ and $R^{24}$ are defined above;

vinyl ethers of the formula

$H_2C=CH\text{-}O\text{-}R^{24}$

where $R^{24}$ is as defined above;
vinyl esters of the formula

$H_2C=CH\text{-}OOC\text{-}R^{24}$

where $R^{24}$ is as defined above;
maleates and fumarates of the formula

$R^{24}OOC\text{-}HC=CH\text{-}COOR^{24}$

where $R^{24}$ is as defined above;
and vinylic substituted hydrocarbons of the formula

$R^{23}CH=CHR^{24}$

where $R^{23}$ and $R^{24}$ are as defined above.

Useful monomers include, for example:
methyl-, ethyl-, propyl-, isopropyl-, butyl-, ethoxyethyl-, methoxyethyl-, ethoxypropyl-, phenyl-, benzyl-, cyclohexyl-, hexafluoroisopropyl-, or n-octyl-acrylates and -methacrylates as well as the corresponding acrylamides and methacrylamides:
dimethylfumarate, dimethylmaleate, diethylfumarate, methyl vinyl ether, ethoxyethyl vinyl ether, vinyl acetate, vinyl propionate, vinyl benzoate, acrylonitrile, styrene, alphamethyl styrene, 1-hexene, vinyl chloride, vinyl methyl ketone, vinyl stearate, 2-hexene and 2-ethylhexyl methacrylate.

As hydrophilic modifiers, to increase hydrophilicity without substantial loss of DK, the vinyl comonomer can be a N-(vinyl containing group)-pyrrolidone or a polyoxyethylene (of 1-25 repeating units) acrylate or methacrylate. Such a hydrophilic modifier should not be present in excess of about 10% by weight of the compound of formula I.

Most preferably, the instant polymers are free from copolymer units of such conventional vinyl monomers.

The vinylic monomers of formula I can be prepared by methods known, per se.

For example, the siloxane/polyalkylene oxide containing divinylic monomers of formula I may be prepared by reacting a siloxane diol of the formula HO-(S′)-H, wherein -S′- is a group of the formula II as defined hereinbefore with a sufficient amount of a difunctional reactive group containing compound having the group -Q- or -Q-Y-, wherein the difunctional reactive groups are isocyanate; activated carboxy, such as an anhydride, an acid halide or a carboxy ester; or is a leaving group, such as a halide, sulfato or the like, to form the corresponding reactive group containing endcapped derivative.

The resulting endcapped siloxane derivative can then be reacted with a polyoxyalkylene diol of the formula HO-(A)-H, wherein -A- is a group of the formula III above to form the corresponding polyoxyalkylene-siloxane-polyoxyalkylene diol. This diol can then be reacted with a reactive group containing vinylic monomer having the terminal $H_2C=C(R^a)$-BR- moiety, wherein the reactive group is an isocyanate; activated carboxy, such as an anhydride, an acid halide or carboxy ester, or is a leaving group such as halo, sulfato or the like to form the corresponding divinyl derivative where a is 1, and A is other than a direct bond. Alternatively, the aforementioned polyoxyalkylene - siloxane - polyoxyalkylene diols can be further sequentially reacted with a further difunctional reactive group containing compound having the group -BR- or -BRB′-D- to form the corresponding di-functional reactive endcapped derivative which is then reacted with a siloxane diol of the formula HO-(S′)-H. One may continue building up alternative polyoxylalkylene/siloxane unit containing diols in this manner, corresponding to the value of either "c(a plus e)" or c(a plus k)". Then this diol may be endcapped with a reactive group containing vinylic monomer having a terminal $H_2C=C(R^a)$-BR- moiety or the diol reacted with a sufficient amount of difunctional reactive group containing compound to endcap the diol with a reactive group, such as eg. an isocyanate, etc. group which is then reacted with the appropriate vinylic containing compound, such as an vinylic amine or alcohol, or other copolymerizable monomer having a crosslinkable group to obtain the corresponding product of formula I.

Of course, instead of starting with a siloxane diol of the formula HO-(S′)-H and building up the alternating sequence to the desired value of "a", one may instead begin with a polyoxyalkylene diol of the formula HO-(A)-H and, after endcapping the same with difunctional reactive groups, condense the same with the siloxane diol until the desired value of "a" is attained, and terminate the diol with vinylic groups as described above.

The above reactive vinylic monomers are characteristically polymerized under conventional polymerization conditions. In those vinylic monomers containing but one vinyl group, a minor amount e.g. from about 0.01 to about 5 weight percent, based on the monomer of formula I, of a conventional crosslinking agent, may be employed. Suitable crosslinking agents include diolefinic monomers such as:
Allyl acrylate and methacrylate, alkylene glycol and polyalkylene glycol diacrylates and dimethacrylates, such as ethyleneglycol dimethacrylate, diethylene glycol dimethacrylate, and propylene glycol dimethacrylate; trimethylol propane triacrylate; pentaerythritol tetraacrylate, divinylbenzene; divinyl ether; divinyl sulfone; bisphenol A diacrylate or dimethacrylate; methylene bisacrylamide; diallyl phthalate; triallyl melamine and hexamethylene diacrylate and dimethacrylate. Also, such minor amounts of a crosslinking agent may be employed, if desired, in the polymerization of the di-vinyl monomer of formula I and VII.

When the monomers of formula I have free hydroxy, isocyanato, carboxylic or amine groups, suitable crosslinking agents contain di-or polyfunctional co-reactive groups to form addition or condensation reactions linking 2 or more chains.

If desired, the monomer reaction mixture may contain a catalytic amount of a conventional catalyst, preferably a free radical catalyst. Of particular interest are conventional peroxide and azo catalysts, such as hydrogen peroxide, benzoyl peroxide, tert-butyl, peroctoate, benzoyl peroxide or azobis (isobutyronitrile).

The aforementioned reactions are generally straight forward additions or condensations and are typically conducted at a reaction temperature between about -10 ° C and about 100 ° C, depending upon the relative reactivity of the species involved, in the presence or absence of an inert diluent and in the optional presence of an addition or condensation catalyst if desired or appropriate. For reactions involving an isocyanate or acid halide, with a diol, for example, suitable optional catalysts include pyridine and triethylamine.

The siloxane diols of the formula HO-(S′)-H are known in the art and many are commercially readily available.

Also, the polyoxyalkylene diols of the formula HO-A-H are known or can be prepared by known methods.

Thus, the polyols of the formula HO-A-H are generally prepared by the addition reaction of xq moles of an epoxide of the formula IX,

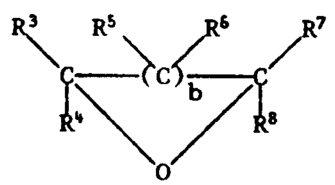

(IX)

where $R^3$-$R^8$, b, x, and q are as defined above, with yq moles of an epoxide of the formula X,

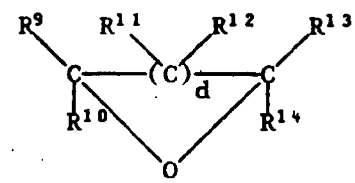

(X)

where $R^9$-$R^{14}$ , d, y, and q are as defined above, and zq moles of an epoxide of the formula XI,

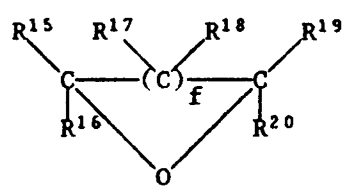

(XI)

wherein $R^{15}$-$R^{20}$, f, z, and q are as defined above, optionally in the presence of a conventional alkylation

catalyst, at atmospheric to elevated pressures of up to about 3000 kPa gauge, at temperatures between 0 °C and about 130 °C, optionally in the presence of an inert diluent. If desired, one may add to the reaction mixture, prior to the reaction of the epoxides, an aliphatic, aromatic or cycloaliphatic alcohol, acid or amine having up to 14 carbon atoms to prepare the corresponding mono-ols terminating in the group D.

The reaction between the epoxides, when mixtures of different epoxides are employed to obtain the polyol of the formula HO-A-H, can be conducted by admixing the epoxides to obtain random copolymers or terpolymers, etc., or the addition can be conducted sequentially to form block copolymers having terminal hydroxy groups. Suitable catalysts include alkaline earth oxides, alkaline earth carbonates, alkyl zinc compounds, aluminum alkoxides, hydrates of ferric chloride, bromide and acetate, and gamma radiation. The reaction may also be initiated by the presence of a glycol, such as ethylene glycol or propylene glycol or by a polyol of higher functionality such as sucrose, or by an amine, such as ethylene diamine, toluenediamine, and so forth. Generally the length of time of the reaction will depend in part on the alkylene oxide employed, but can generally be from less than one to several score hours. Thus, ethylene oxide generally is about three times as active as propylene oxide, which in turn reacts more rapidly than 1,2-butylene oxide. The preparation of polyoxetanes and polytetrahydrofurans is generally initiated via ring opening oxonium formation using trialkyloxonium salts, carboxonium salts, acylium salts and the like.

Suitable diols of the formula HO-A-H include those prepared from epoxides such as:
1,2-propylene oxide; 1,2-butylene oxide; 1,2-epoxydecane; 1,2-epoxydodecane; 1,2-epoxyoctane; 2,3-epoxynorbornane; 1,2-epoxy-3-ethoxypropane; 1,2-epoxy-3-phenoxypropane; 2,3-epoxypropyl 4-methoxyphenyl ether; tetrahydrofuran; 1,2-epoxy-3-cyclohexyloxypropane; oxetane; 1,2-epoxy-5-hexene; 1,2-epoxyethylbenzene; 1,2-epoxy-1-methoxy-2-methylpropane; perfluorohexylethoxypropylene oxide; benzyloxypropylene oxide, and the like. Also, the aforementioned epoxides may be employed as mixtures thereof. Further, certain cyclic ethers of formula IX, X or XI where b or d or f, respectively is 3 and the carbocyclic portion of the ring is substituted are resistant to polymerization alone, but copolymerize quite readily with more reactive cyclic ethers. Suitable co-monomers include, for example, 2-methyl-tetrahydrofuran an 3-methyl-tetrahydrofuran. Also, while ethylene oxide may be employed as a co-monomer, ethylene oxide polymers, in the absence of more hydrophobic units, is characteristically too hydrophilic and absorbs too much aqueous fluid to be of use in accordance with the instant invention. However, ethylene oxide/propylene oxide copolymeric diols wherein there is 30-80 %, preferably greater than 50 %, more preferably greater than 66 % propylene oxide, on a mole basis, is sufficiently hydrophobic so as to be substantially non-swellable in aqueous media, and yet sufficiently hydrophilic so as to exhibit a contact angle with water of less than 60 °; preferably less than 40 °, more preferably less than 25 °, more preferably less than 15 °, most preferably less than 10 °.

Many polymer diols of the formula HO-A-H are commercially available. Thus, suitable diol products include poloxamers having the general formula

$$HO(CH_2CH_2O)_{a'}\text{-}(CH(CH_3)CH_2O)_{b'}\text{-}(CH_2CH_2O)_{c'}\text{-}H$$

wherein b′ has a value between about 16 and 100 and the sum of a′ and c′ is between about 4 and about 100. Examples of such poloxamers, and their average values of a′, b′ and c′, include poloxamer 101 (a′ is 2, b′ is 16, c′ is 2); poloxamer 122 (a′ is 5, b′ is 21, c′ is 5); poloxamer 181 (a′ is 3, b′ is 30, c′ is 3); poloxamer 212 (a′ is 8, b′ is 35, c′ is 8); poloxamer 231 (a′ is 6, b′ is 39, c′ is 6); poloxamer 282 (a′ is 10, b′ is 47, c′ is 10); poloxamer 331 (a′ is 7, b′ is 54, c′ is 7); poloxamer 401 (a′ is 6, b′ is 67, c′ is 6).

Such poloxamers are available, e.g. from BASF Wyandotte under their Pluronic® brand name. Also suitable are the "reverse poloxamers", having polyethylene glycol bounded on each side by polypropylene glycol.

Polypropylene ether glycols include commercially available products having a molecular weight range between 400 and about 4,000.

As stated above, the polymers for use in the instant invention are those which exhibit a receding contact angle at 20 °C of less than 60 °, preferably less than 40 °, more preferably less than 25 °, more preferably less than 15 ° and most preferably less than 10 °. The measurement of such contact angle is conveniently performed using a modified "Wilhelmy Plate" technique, as described, for example, for J.D. Androde, et al. Surface and Interfacial Aspects of Biomedical Polymers, Vol. 1, Surface Chemistry and Physics, Plenum Press, 1985, wherein a specimen sample in the form of a plate of known dimensions is immersed into the wetting solution, pure water, at a slow controlled rate, e.g. at 2 - 20 mm per minute.

As mentioned above, the instant polymers for use in the present invention possess a high degree of oxygen permeability. The oxygen permeability, Dk($x10^{-10}$), is measured using a modification of ASTM standard D3985-81 in that (a) there is used 21 % oxygen, i.e. air, instead of 99 - 100 % oxygen, (b) the

surface area of sample employed is 0.50 square meters versus 100 square meters and the humidity is controlled to be at 95 - 100 % relative humidity instead of 0 % relative humidity. The unit of DK is (mm•ml $O_2/cm^2$•sec•mmHg).

Typically, conventional fully swollen polyhydroxyethyl methacrylate lenses which are sparingly crosslinked possess a Dk($x10^{-10}$), (mm•ml $O_2/cm^2$•sec•mmHg) value of about 5 - 7.

The instant polymers for use as an ophthalmic device, such as a contact lens, possess a Dk($x10^{-10}$) value generally greater than 7, preferably greater than about 15, more preferably greater than about 20 and most preferably greater than about 40.

The following examples are for illustrative purposes and are not to be construed as limiting the invention. All parts are by weight unless otherwise specified.

Table of abbreviations used throughout the examples:

PPG: polypropyleneglycol
HEMA: hydroxyethyl methacrylate
TDI: toluene diisocyanate
PEG: polyethyleneglycol

Example 1:

To a dry, 0.25-liter, three-neck flask equipped with a thermometer, constant pressure dropping funnel, nitrogen inlet and condenser under a dry, nitrogen atmosphere is added 1.74 g (0.010 moles) TDI, 10 ml dry dichloromethane and 0.05 g tin octoate. 10.00 g (0.005 moles) poly(propylene oxide) in 40 ml of dry dichloromethane are added to the flask dropwise over a 40 minute period, maintaining a temperature less than 30 °C. The reaction is continued for 2 hours. After 2 hours, 14.65 g (0.010 moles) hydroxybutyl terminated polydimethylsiloxane in 30 ml of dry dichloromethane are added rapidly to the system and the reaction is allowed to continue 17 hours. Then 1.74 g (0.010 moles) TDI are added; after 3 hours, 1.30 g (0.010 moles) HEMA are added and the reaction is stirred 18 hours. After 18 hours, the isocyanate band is not apparent in the infrared spectrum. The volatiles are then removed from the reaction system via vacuum rotary evaporation. The clear, viscous, reactive fluid is stored protected from light and thermal polymerization.

To the clear, viscous fluid is added one percent Darocur 1173 (UV initiator) and the mixture degassed and mixed via vacuum rotary evaporation. The material is then UV cured in the appropriate molds under UV light with an intensity of 2 to 3 milliwatts. The resulting film has an advancing contact angle of 65.5 and a receding angle of 16.2.

Examples 2 to 3:

Similar rections are conducted as described in example 1 but with reactive components of different molecular weights and other variations as outlined in Table 1. The solvents are adjusted proportionally based on the weight of the materials used.

Table 1*

| Example | PPG | Silicone | TDI | HEMA | Tin Octoate | Darocur | DK |
|---|---|---|---|---|---|---|---|
| 2 | 30.23 (0.01) | 40.03 (0.02) | 6.96 (0.04) | 2.60 (0.02) | 0.06 | 1 % | 159.0 |
| 3 | 6.40 (0.0016) | 10.77 (0.0032) | 1.12 (0.0064) | 0.42 (0.0032) | 0.08 | 1 % | 257 |

* Weight in grams.
Number in parentheses is molar quantity.
Initiator expressed in terms of percent of prepolymer in grams.
DK expressed in terms of DK units.

Example 4:

To a dry, 100 ml, three-neck flask equipped with a thermometer, constant pressure dropping funnel,

nitrogen inlet and condenser under a dry, nitrogen amosphere are added 3.48 g (0.020 moles) TDI, 150 ml dry dichloromethane and dibutyl tin dilaurate and heat to reflux. 4-Hydroxybutyl polydimethylsiloxane 14.65 g (0.010 moles) in 30 ml of dry dichloromethane are added dropwise to the flask. After 3 hours, 10.00 g (0.005 moles) poly(ethylene oxide) are added to the flask dropwise. The reaction is stirred at reflux for four hours and 1.30 g (0.010 moles) of HEMA are charged to the flask. After 17 hours the isocyanate band is no longer observed in the infrared spectrum. The volatiles are removed via vacuum rotary evaporation. The clear, viscous, reactive fluid is protected from light and thermal polymerization until it is ready for use.

One percent Darocur 1173 is added to the prepolymer and the mixture degassed and mixed via vacuum rotary evaporation. The prepolymer is transferred to the appropriate molds and cured under UV light of 3 to 5 milliwatt intensity. The clear films produced in this manner have oxygen permeabilities of 148.8 x $10^{-10}$.

Examples 5 to 11:

Similar reactions are conducted as described in example 4 but with reactive components of different molecular weights and other variations as outlined in Table 2. The solvents are adjusted proportionally based on the weight of the materials used.

Table 2*

| Example | PPG | Silicone | TDI | HEMA | Tin Octoate | Darocur | DK |
|---|---|---|---|---|---|---|---|
| 5 | 50.72 (0.013) | 37.15 (0.025) | 8.83 (0.050) | 3.30 (0.025) | 0.02 | 1 % | 125.4 |
| 6 | 30.77 (0.018) | 52.20 (0.036) | 12.40 (0.071) | 4.64 (0.036) | 0.03 | 0.5 % | 133.1 |
| 7 | 33.26 (0.017) | 50.31 (0.034) | 11.96 (0.069) | 4.47 (0.034) | 0.03 | 1 % | 179.1 |
| 8 | 32.67 (0.011) | 31.91 (0.022) | 7.58 (0.044) | 2.83 (0.022) | 0.08 | 1 % | 130.0 |
| 9 | 21.21 (0.011) | 43.65 (0.021) | 7.38 (0.042) | 2.76 (0.021) | 0.04 | 1 % | 258.5 |
| 10 | 19.07 (0.01) | 75.00 (0.02) | 6.96 (0.04) | 2.60 (0.02) | 0.11 | 1 % | 340.3 |
| 11 | 19.08 (0.01) | 55.27 (0.02) | 6.96 (0.04) | 2.61 (0.02) | 0.7 | 1 % | 388 |

* Weight in grams.
Number in parentheses is molar quantity.
Initiator expressed in terms of percent of prepolymer in grams.
DK expressed in terms of DK units.

Example 12:

To a dry, 100 ml, three-neck flask equipped with a thermometer, constant pressure dropping funnel, nitrogen inlet and condenser under a dry, nitrogen atmosphere are added 3.48 g (0.020 moles) TDI, 150 ml dry dichloromethane and dibutyl tin dilaurate and heat to reflux. 4-Hydroxybutyl polydimethylsiloxane 14.65 g (0.010 moles) in 30 ml of dry dichloromethane are added dropwise to the flask. After 3 hours, 10.00 g (0.005 moles) poly(ethylene oxide) are added to the flask dropwise. The reaction is stirred at reflux for four hours and 1.30 g (0.010 moles) of HEMA are charged to the flask. After 17 hours the isocyanate band is no longer observed in the infrared spectrum. The volatiles are removed via vacuum rotary evaporation. The clear, viscous, reactive fluid is protected from light and thermal polymerization until it is ready for use.

20 % by weight of PPGMM (Alcolac) and 1 % Darocur 1173 are added to the prepolymer and the mixture is degassed and mixed via vacuum rotary evaporation. The prepolymer is transferred to the appropriate molds and cured under UV light of 3 to 5 milliwatt per square centimeter intensity. The clear films produced in this matter have oxygen permeabilities of 208.2 x $10^{-10}$.

**Claims**

**Claims for the following Contracting States : AT, BE, CH, DE, FR, GB, GR, IT, LI, LU, NL, SE**

1. An optically clear, wettable, flexible, substantially nonswellable in aqueous ocular tear fluid, oxygen permeable ophthalmic device, comprising a crosslinked polymer of a crosslinkable monomer having a segment S" of the formula I,

-(D-S'-L-D-A-L)$_a$- (I)

wherein a is 1 to 10;
each D is independently oxygen or -N($R^{21}$)-;
each S' is independently a segment of formula II,

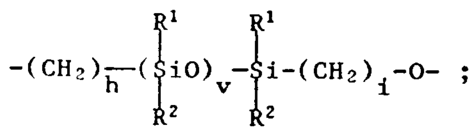 (II)

each A is independently a segment of formula III,

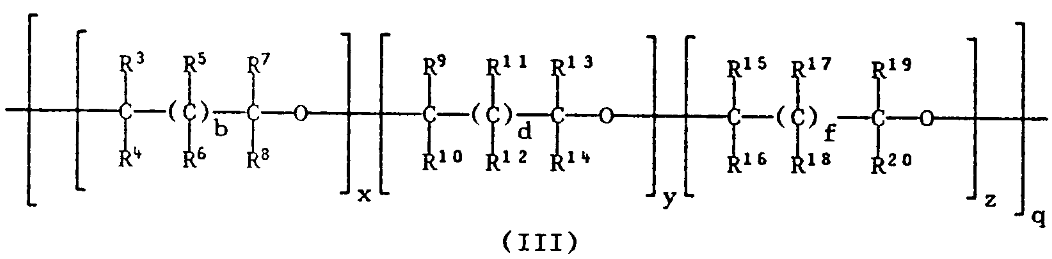

(III)

the terminal oxygen within each unit of formula II and III being replaceable by -N($R^{21}$)-;
each L is independently -BRB'-, the terminal L group within any one monomer of formula I also being capable of being -BR-;
wherein each b, d and f is independently 0 - 4; q is a number from 1 to 1000; each x, y and z is independently 0 to 100 provided at least one of x, y and z is at least 1; such that (x + y + z) multiplied by q is 4 to 1000;
each h and i is an integer from 1 to 6, v is an integer from 2 to 75;
$R^1$ and $R^2$ are independently alkyl of up to 18 carbon atoms, or aryl of up to 12 carbon atoms;
each of $R^3$, $R^4$, $R^7$-$R^{10}$, $R^{13}$-$R^{16}$, $R^{19}$ and $R^{20}$ is independently selected from the group consisting of hydrogen, halogen, an aliphatic, aromatic or heterocyclic containing radical selected from unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already singly bound to another oxygen atom;
$R^3$, $R^4$, $R^7$-$R^{10}$, $R^{13}$-$R^{16}$, $R^{19}$ and $R^{20}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said $R^3$ alkyl set forth above;
$R^5$, $R^6$, $R^{11}$, $R^{12}$, $R^{17}$ and $R^{18}$ are selected from the same group set forth above for $R^3$; and $R^5$, $R^6$, $R^{11}$, $R^{12}$, $R^{17}$ and $R^{18}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which may be further substituted by fluoro, aryl of up to 10 carbon atoms, or $C_1$-$C_{16}$ alkoxy, and $R^5$, $R^6$, $R^{11}$, $R^{12}$, $R^{17}$ and $R^{18}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having

a singly bound oxygen atom as its link to the rest of the molecule may not be a substituent on the same carbon atom which is singly bonded to another oxygen atom; or 2 adjacent groups, selected from $R^3$-$R^{20}$, together with the atoms to which they are attached may form a 5 - 8 membered cycloalkyl, oxacycloalkyl or bicycloalkyl ring; $R^{21}$ is independently selected from hydrogen, $C_1$-$C_4$ alkyl and phenyl; and wherein each B and B' is selected from

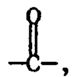, 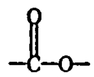; and 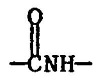

with the carbonyl group being bound to A, S' or D;
each R is independently a divalent linking group selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino;
b) a divalent 5 - 7 membered cycloaliphatic group having 5 - 25 carbon atoms;
c) a divalent arylene group having 6 - 25 carbon atoms; and
d) a divalent aralkyl or alkaryl group having 7 to 25 carbon atoms;

wherein groups b) and d) can be optionally interrupted by the same groups as in group a) and wherein the aryl rings in groups c) and d) may be further substituted with one or more substituents selected from halogen, $C_1$-$C_4$ alkyl, and $C_1$-$C_{12}$ perhalo alkyl; said device having a receding contact angle of less than 60°; having absorbed less than about 10 % water in its swollen state; and having a Dk $x10^{-10}$ (mm•ml $O_2$/$cm^2$•sec•mmHg) of at least about 7.

**2.** The device of claim 1 wherein a is one.

**3.** The device of claim 1 wherein each D is oxygen.

**4.** The device of claim 1 wherein each L is -BRB'-, each B and B' is -C(O)NH- wherein the nitrogen atom is bound to R, and R is

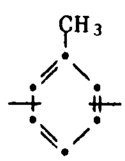.

**5.** The device of claim 4 wherein R is

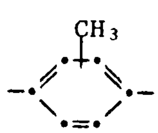

**6.** The device of claim 1 wherein each $R^1$ and $R^2$ is methyl.

**7.** The device of claim 1 wherein h and i are each 4.

**8.** The device of claim 1 wherein v is from about 15 to about 50.

**9.** The device of claim 6 wherein h is 4; i is 4; and v is from about 15 to about 50.

**10.** The device of claim 1 wherein (x + y + z) multiplied by q is from about 25 to about 75.

**11.** The device of claim 1 wherein
a) each b, d and f is 1 and $R^3$-$R^{20}$ are all hydrogen or b) each b, d and f is zero, each $R^3$, $R^4$, $R^8$-$R^{10}$, $R^{14}$-$R^{16}$, and $R^{20}$ is hydrogen, and each $R^7$, $R^{13}$ and $R^{19}$ is methyl.

**12.** The device of claim 11 wherein $(x+y+z)$ multiplied by q is about 25 to about 75.

**13.** The device of claim 1, wherein
a is one; each D is oxygen; each L is -BRB'-; each B and B' is -C(O)NH- with the nitrogen atom bound to R; each R is

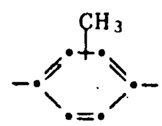
;

each $R^1$ and $R^2$ is methyl; h and i are each 4; v is from about 15 to about 50; $(x+y+z)$ multiplied by q is about 25 to about 75; and
a) each b, d, and f is 1 and $R^3$-$R^{20}$ are all hydrogen; or
b) each b, d, and f is zero; each $R^3$, $R^4$, $R^8$-$R^{10}$, $R^{14}$-$R^{16}$ and $R^{20}$ is hydrogen; and each $R^7$, $R^{13}$ and $R^{19}$ is methyl.

**14.** A wettable, flexible, oxygen permeable, substantially nonswellable ophthalmic device of claim 1
a) comprising a polymer of a crosslinkable monomer having a partial formula Ia,

$-(D\text{-}A\text{-}L\text{-}S'')_c-$ (Ia)

wherein each S" is independently a segment of formula I of claim 1; each D, A and L is independently as defined in claim 1; c is 1-10; and a times c is 1-10;
or b) comprising a polymer of a crosslinkable monomer having a partial formula Ib

$-(S'')_c\text{-}D\text{-}S'\text{-}L_a-$ (Ib)

wherein $L_a$ is selected from -BRB'- and -BR-; B, R, B' and S' are as defined in claim 1, and wherein S", c, D, A and L are as defined above.

**15.** The device of claim 14 wherein a is one.

**16.** The device of claim 14 wherein each D is oxygen.

**17.** The device of claim 14 wherein each L is -BRB'-, each B and B' is -C(O)NH- wherein the nitrogen atom is bound to R, and R is

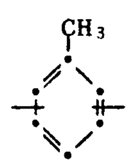
.

**18.** The device of claim 14 wherein R is

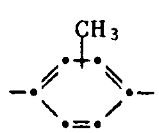
.

**19.** The device of claim 14 wherein each $R^1$ and $R^2$ is methyl.

**20.** The device of claim 14 wherein h and i are each 4.

**21.** The device of claim 14 wherein v is from about 15 to about 50.

**22.** The device of claim 14 wherein h is 4; i is 4; and v is from about 15 to about 50.

**23.** The device of claim 14 wherein (x + y + z) multiplied by q is from about 25 to about 75.

**24.** The device of claim 14 wherein
a) each b, d and f is 1 and $R^3$-$R^{20}$ are all hydrogen or b) each b, d and f is zero, each $R^3$, $R^4$, $R^8$-$R^{10}$, $R^{14}$-$R^{16}$, and $R^{20}$ is hydrogen, and each $R^7$, $R^{13}$ and $R^{19}$ is methyl.

**25.** The device of claim 24 wherein (x + y + z) multiplied by q is about 25 to about 75.

**26.** The device of claim 14 or 24 wherein c is 1.

**27.** The device of claim 14 wherein $L_a$ is -BRB'-.

**28.** The device of claim 14 wherein
a is one; each D is oxygen; each L is -BRB'-; each B and B' is -C(O)NH- with the nitrogen atom bound to R; each R is

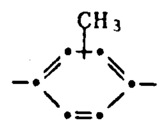 ;

each $R^1$ and $R^2$ is methyl; h and i are each 4; v is from about 15 to about 50; (x + y + z) multiplied by q is about 25 to about 75; and
a) each b, d, and f is 1 and $R^3$-$R^{20}$ are all hydrogen; or
b) each b, d, and f is zero; each $R^3$, $R^4$, $R^8$-$R^{10}$, $R^{14}$-$R^{16}$ and $R^{20}$ is hydrogen; and each $R^7$, $R^{13}$ and $R^{19}$ is methyl; c is 1; and $L_a$ is -BRB'-.

**29.** A wettable, flexible, oxygen permeable, substantially nonswellable ophthalmic device of claim 14 comprising a polymer of a monomer having the formula Ic

$L'\{(D\text{-}A\text{-}L)_e\text{-}S''\}_c L''$ (Ic)

wherein e is zero or 1; S" is of formula $-(D\text{-}S'\text{-}L\text{-}D\text{-}A\text{-}L)_a$ as defined in claim 1; each D, A, L, S', a and c is independently as defined in claim 14;
provided that when e = 1, the terminal L group (exclusive of L' and L") of formula Ic may also be selected from -BR-;
L' is hydrogen, P'-BRB'-; or P'-RB'-;
L" is -P'; or, in case that e is zero, also D-S'-BR-P' or D-S'-BRB'-P'; and P' is hydrogen, amino, hydroxy, or a moiety containing a crosslinkable group which may be crosslinked when coreacted with a suitable crosslinking agent or when irradiated by actinic radiation.

**30.** The device of claim 29 wherein a is one.

**31.** The device of claim 29 wherein each D is oxygen.

**32.** The device of claim 29 wherein each L is -BRB'-, each B and B' is -C(O)NH- wherein the nitrogen atom is bound to R, and R is

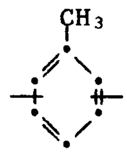 .

**33.** The device of claim 29 wherein R is

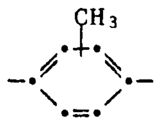 .

**34.** The device of claim 29 wherein each $R^1$ and $R^2$ is methyl.

**35.** The device of claim 29 wherein h and i are 4.

**36.** The device of claim 29 wherein v is from about 15 to about 50.

**37.** The device of claim 29 wherein h is 4; i is 4; and v is from about 15 to about 50.

**38.** The device of claim 29 wherein (x + y + z) multiplied by q is from about 25 to about 75.

**39.** The device of claim 29 wherein
a) each b, d and f is 1 and $R^3$-$R^{20}$ are all hydrogen or b) each b, d and f is zero, each $R^3$, $R^4$, $R^8$-$R^{10}$, $R^{14}$-$R^{16}$, and $R^{20}$ is hydrogen, and each $R^7$, $R^{13}$ and $R^{19}$ is methyl.

**40.** The device of claim 39 wherein (x + y + z) multiplied by q is about 25 to about 75.

**41.** The device of claim 29 wherein c is 1.

**42.** The device of claim 29 wherein L' is P'-BRB'-.

**43.** The device of claim 29 wherein L" is -D-S'-BRB'-P'.

**44.** The device of claim 29 wherein each P' is

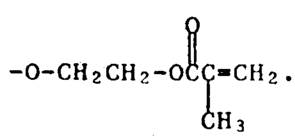

**45.** The device of claim 29 wherein
a is one; each D is oxygen; each L is -BRB'-; each B and B' is -C(O)NH- with the nitrogen atom bound to R; each R is

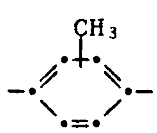 ;

each $R^1$ and $R^2$ is methyl; h and i are each 4; v is from about 15 to about 50; (x + y + z) multiplied by q is about 25 to about 75; and

a) each b, d, and f is 1 and $R^3$-$R^{20}$ are all hydrogen; or

b) each b, d, and f is zero; each $R^3$, $R^4$, $R^8$-$R^{10}$, $R^{14}$-$R^{16}$ and $R^{20}$ is hydrogen; and each $R^7$, $R^{13}$ and $R^{19}$ is methyl;

L' is P'-BRB'-; and P' is

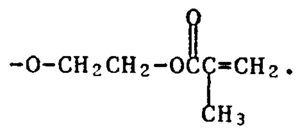

**46.** The device of claim 29 wherein c is 1 and L" is -D-S'-BRB'-P'.

**47.** Use of a device according to claims 1 to 46 or 48 to 52 for correcting visual defects.

**48.** The device of claim 1 wherein each A is of the formula V

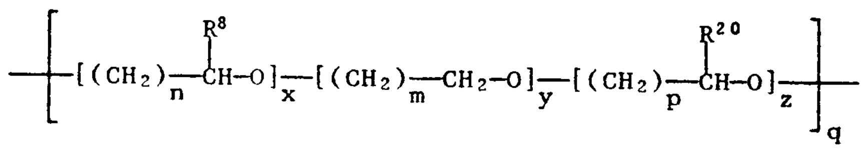
(V)

wherein n, m and p independently are 1 - 3; and x, y, z and q are as defined in claim 1 provided that each of them is greater than zero; $R^8$ and $R^{20}$ are alkyl of up to 6 carbon atoms; or of the formula VI

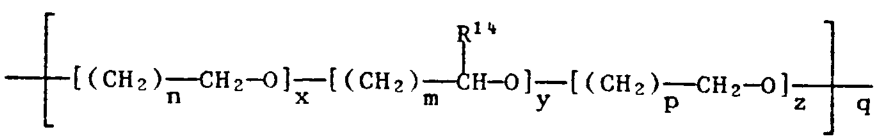
(VI)

wherein n, m, p, x, y, z and q are as defined above for formula V and $R^{14}$ is alkyl of up to six carbon atoms.

**49.** The device of claim 48 wherein in formula V each of n, m and p is one, x, y, z and q are as defined in claim 48, and $R^8$ and $R^{20}$ are methyl and wherein in formula VI each of n, m and p is one, x, y, z and q are as defined in claim 48, and $R^{14}$ is methyl.

**50.** The device of claim 49 wherein q is 1.

**51.** The device of claim 49 wherein x and z within any one A are the same.

**52.** The device of claim 49 wherein each x and each z has the same value.

**53.** An optically clear, wettable, flexible, substantially nonswellable, oxygen permeable polymer of a crosslinkable monomer having a segment S" of the formula I,

$-(D\text{-}S'\text{-}L\text{-}D\text{-}A\text{-}L)_a-$ (I)

wherein a is 1 to 10;
each D is independently oxygen or $-N(R^{21})-$;
each S' is independently a segment of formula II,

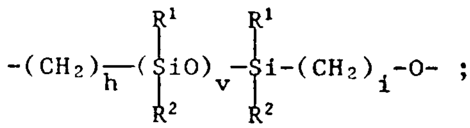

(II)

each A is independently a segment of formula III,

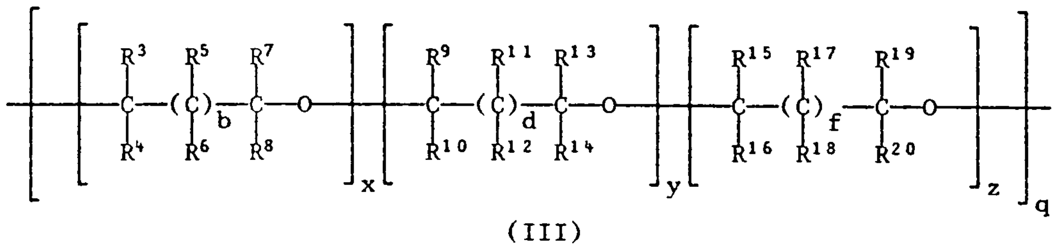

(III)

the terminal oxygen within each unit of formula II and III being replaceable by $-N(R^{21})-$;

each L is independently -BRB'-, the terminal L group within any one monomer of formula I also being capable of being -BR-;

wherein each b, d and f is independently 0 - 4; q is a number from 1 to 1000; each x, y and z is independently 0 to 100 provided at least one of x, y and z is at least 1; such that $(x+y+z)$ multiplied by q is 4 to 1000;

each h and i is an integer from 1 to 6, v is an integer from 2 to 75;

$R^1$ and $R^2$ are independently alkyl of up to 18 carbon atoms, or aryl of up to 12 carbon atoms;

each of $R^3$, $R^4$, $R^7$-$R^{10}$, $R^{13}$-$R^{16}$, $R^{19}$ and $R^{20}$ is independently selected from the group consisting of hydrogen, halogen, an aliphatic, aromatic or heterocyclic containing radical selected from unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already singly bound to another oxygen atom;

$R^3$, $R^4$, $R^7$-$R^{10}$, $R^{13}$-$R^{16}$, $R^{19}$ and $R^{20}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said $R^3$ alkyl set forth above;

$R^5$, $R^6$, $R^{11}$, $R^{12}$, $R^{17}$ and $R^{18}$ are selected from the same group set forth above for $R^3$; and $R^5$, $R^6$, $R^{11}$, $R^{12}$, $R^{17}$ and $R^{18}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which may be further substituted by fluoro, aryl of up to 10 carbon atoms, or $C_1$-$C_{16}$ alkoxy, and $R^5$, $R^6$, $R^{11}$, $R^{12}$, $R^{17}$ and $R^{18}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom; or 2 adjacent groups, selected from $R^3$-$R^{20}$, together with the atoms to which they are attached may form a 5 - 8 membered cycloalkyl, oxacycloalkyl or bicycloalkyl ring; $R^{21}$ is independently selected from hydrogen, $C_1$-$C_4$ alkyl and phenyl; and wherein each B and B' is selected from

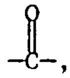, 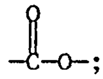; and 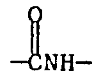

with the carbonyl group being bound to A, S' or D;
each R is independently a divalent linking group selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino;
b) a divalent 5 - 7 membered cycloaliphatic group having 5 - 25 carbon atoms;
c) a divalent arylene group having 6 - 25 carbon atoms; and
d) a divalent aralkyl or alkaryl group having 7 to 25 carbon atoms;

wherein groups b) and d) can be optionally interrupted by the same groups as in group a) and wherein the aryl rings in groups c) and d) may be further substituted with one or more substituents selected from halogen, $C_1$-$C_4$ alkyl, and $C_1$-$C_{12}$ perhalo alkyl; said polymer having a receding contact angle of less than 60°; having absorbed less than about 10 % water in its swollen state; and having a Dk x$10^{-10}$ (mm•ml $O_2$/$cm^2$•sec•mmHg) of at least about 7.

**54.** A wettable, flexible, oxygen permeable, substantially non-swellable polymer of claim 53

a) of a crosslinkable monomer having a partial formula Ia,

$-(D-A-L-S'')_c-$ (Ia)

wherein each S" is independently a segment of formula I of claim 53; each D, A and L is independently as defined in claim 53; c is 1-10; and a times c is 1-10:
or b) of a crosslinkable monomer having a partial formula Ib

$-(S'')_c-D-S'-L_a-$ (Ib)

wherein $L_a$ is selected from -BRB'- and -BR-; B, R, B' and S' are as defined in claim 53, and wherein S", c, D, A and L are as defined above.

**55.** A wettable, flexible, oxygen permeable, substantially non-swellable polymer of claim 54 of a monomer having the formula Ic

$L'\{(D-A-L)_e-S''\}_cL''$ (Ic)

wherein e is zero or 1; S" is of formula $-(D-S'-L-D-A-L)_a$ as defined in claim 54; each D, A, L, S', a and c is independently as defined in claim 53;
provided that when e = 1, the terminal L group (exclusive of L' and L") of formula Ic may also be selected from -BR-;
L' is hydrogen, P'-BRB'-; or P'-RB'-;
L" is -P'; or, in case that e is zero, also D-S'-BR-P' or D-S'-BRB'-P'; and P' is hydrogen, amino, hydroxy, or a moiety containing a crosslinkable group which may be crosslinked when coreacted with a suitable crosslinking agent or when irradiated by actinic radiation.

**Claims for the following Contracting State : ES**

**1.** An optically clear, wettable, flexible, substantially non-swellable in aqueous ocular tear fluid, oxygen permeable ophthalmic device, comprising a crosslinked polymer of a crosslinkable monomer having a segment S" of the formula I,

$-(D-S'-L-D-A-L)_a-$ (I)

wherein a is 1 to 10;
each D is independently oxygen or $-N(R^{21})-$;
each S' is independently a segment of formula II,

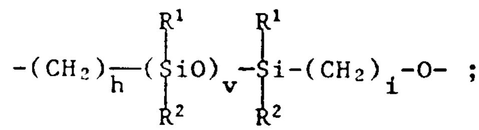 (II)

each A is independently a segment of formula III,

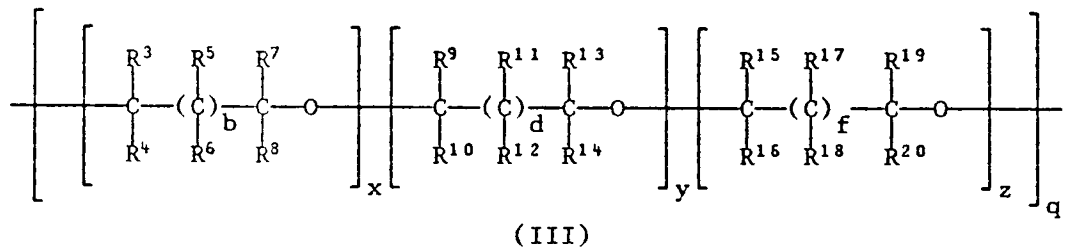

(III)

the terminal oxygen within each unit of formula II and III being replaceable by $-N(R^{21})-$;
each L is independently -BRB'-, the terminal L group within any one monomer of formula I also being capable of being -BR-;
wherein each b, d and f is independently 0 - 4; q is a number from 1 to 1000; each x, y and z is independently 0 to 100 provided at least one of x, y and z is at least 1; such that (x + y + z) multiplied by q is 4 to 1000;
each h and i is an integer from 1 to 6, v is an integer from 2 to 75;
$R^1$ and $R^2$ are independently alkyl of up to 18 carbon atoms, or aryl of up to 12 carbon atoms;
each of $R^3$, $R^4$, $R^7$-$R^{10}$, $R^{13}$-$R^{16}$, $R^{19}$ and $R^{20}$ is independently selected from the group consisting of hydrogen, halogen, an aliphatic, aromatic or heterocyclic containing radical selected from unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already singly bound to another oxygen atom;
$R^3$, $R^4$, $R^7$-$R^{10}$, $R^{13}$-$R^{16}$, $R^{19}$ and $R^{20}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said $R^3$ alkyl set forth above;
$R^5$, $R^6$, $R^{11}$, $R^{12}$, $R^{17}$ and $R^{18}$ are selected from the same group set forth above for $R^3$; and $R^5$, $R^6$, $R^{11}$, $R^{12}$, $R^{17}$ and $R^{18}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which may be further substituted by fluoro, aryl of up to 10 carbon atoms, or $C_1$-$C_{16}$ alkoxy, and $R^5$, $R^6$, $R^{11}$, $R^{12}$, $R^{17}$ and $R^{18}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom; or 2 adjacent groups, selected from $R^3$-$R^{20}$, together with the atoms to which they are attached may form a 5 - 8 membered cycloalkyl, oxacycloalkyl or bicycloalkyl ring; $R^{21}$ is independently selected from hydrogen, $C_1$-$C_4$ alkyl and phenyl; and wherein each B and B' is selected from

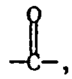, 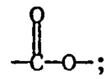; and 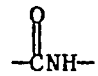

with the carbonyl group being bound to A, S' or D;
each R is independently a divalent linking group selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino;
b) a divalent 5 - 7 membered cycloaliphatic group having 5 - 25 carbon atoms;
c) a divalent arylene group having 6 - 25 carbon atoms; and
d) a divalent aralkyl or alkaryl group having 7 to 25 carbon atoms;

wherein groups b) and d) can be optionally interrupted by the same groups as in group a) and wherein the aryl rings in groups c) and d) may be further substituted with one or more substituents selected from halogen, $C_1$-$C_4$ alkyl, and $C_1$-$C_{12}$ perhalo alkyl; said device having a receding contact angle of less than 60$^\circ$; having absorbed less than about 10 % water in its swollen state; and having a Dk x$10^{-10}$ (mm•ml $O_2$/cm$^2$•sec•mmHg) of at least about 7.

**2.** The device of claim 1 wherein a is one.

**3.** The device of claim 1 wherein each D is oxygen.

**4.** The device of claim 1 wherein each L is -BRB'-, each B and B' is -C(O)NH- wherein the nitrogen atom is bound to R, and R is

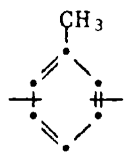 .

**5.** The device of claim 4 wherein R is

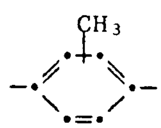

**6.** The device of claim 1 wherein each $R^1$ and $R^2$ is methyl.

**7.** The device of claim 1 wherein h and i are each 4.

**8.** The device of claim 1 wherein v is from about 15 to about 50.

**9.** The device of claim 6 wherein h is 4; i is 4; and v is from about 15 to about 50.

**10.** The device of claim 1 wherein (x + y + z) multiplied by q is from about 25 to about 75.

**11.** The device of claim 1 wherein
a) each b, d and f is 1 and $R^3$-$R^{20}$ are all hydrogen or b) each b, d and f is zero, each $R^3$, $R^4$, $R^8$-$R^{10}$, $R^{14}$-$R^{16}$, and $R^{20}$ is hydrogen, and each $R^7$, $R^{13}$ and $R^{19}$ is methyl.

**12.** The device of claim 11 wherein (x + y + z) multiplied by q is about 25 to about 75.

**13.** The device of claim 1, wherein
a is one; each D is oxygen; each L is -BRB'-; each B and B' is -C(O)NH- with the nitrogen atom bound to R; each R is

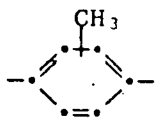 ;

each $R^1$ and $R^2$ is methyl; h and i are each 4; v is from about 15 to about 50; (x + y + z) multiplied by q is about 25 to about 75; and
a) each b, d, and f is 1 and $R^3$-$R^{20}$ are all hydrogen; or
b) each b, d, and f is zero; each $R^3$, $R^4$, $R^8$-$R^{10}$, $R^{14}$-$R^{16}$ and $R^{20}$ is hydrogen; and each $R^7$, $R^{13}$ and $R^{19}$ is methyl.

**14.** A wettable, flexible, oxygen permeable, substantially non-swellable ophthalmic device of claim 1
a) comprising a polymer of a crosslinkable monomer having a partial formula Ia,

$-(D\text{-}A\text{-}L\text{-}S'')_c-$ (Ia)

wherein each S" is independently a segment of formula I of claim 1; each D, A and L is independently as defined in claim 1; c is 1-10; and a times c is 1-10;
or b) comprising a polymer of a crosslinkable monomer having a partial formula Ib

$-(S'')_c\text{-}D\text{-}S'\text{-}L_a-$ (Ib)

wherein $L_a$ is selected from -BRB'- and -BR-; B, R, B' and S' are as defined in claim 1, and wherein S", c, D, A and L are as defined above.

**15.** The device of claim 14 wherein a is one.

**16.** The device of claim 14 wherein each D is oxygen.

**17.** The device of claim 14 wherein each L is -BRB'-, each B and B' is -C(O)NH- wherein the nitrogen atom is bound to R, and R is

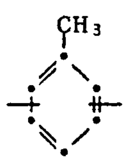 .

**18.** The device of claim 14 wherein R is

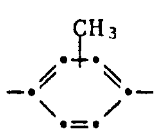 .

**19.** The device of claim 14 wherein each $R^1$ and $R^2$ is methyl.

**20.** The device of claim 14 wherein h and i are each 4.

**21.** The device of claim 14 wherein v is from about 15 to about 50.

**22.** The device of claim 14 wherein h is 4; i is 4; and v is from about 15 to about 50.

**23.** The device of claim 14 wherein (x + y + z) multiplied by q is from about 25 to about 75.

**24.** The device of claim 14 wherein
a) each b, d and f is 1 and $R^3$-$R^{20}$ are all hydrogen or b) each b, d and f is zero, each $R^3$, $R^4$, $R^8$-$R^{10}$, $R^{14}$-$R^{16}$, and $R^{20}$ is hydrogen, and each $R^7$, $R^{13}$ and $R^{19}$ is methyl.

**25.** The device of claim 24 wherein (x + y + z) multiplied by q is about 25 to about 75.

**26.** The device of claim 14 or 24 wherein c is 1.

**27.** The device of claim 14 wherein $L_a$ is -BRB'-.

**28.** The device of claim 14 wherein
a is one; each D is oxygen; each L is -BRB'-; each B and B' is -C(O)NH- with the nitrogen atom bound to R; each R is

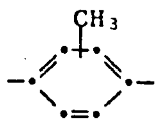 ;

each $R^1$ and $R^2$ is methyl; h and i are each 4; v is from about 15 to about 50; (x + y + z) multiplied by q is about 25 to about 75; and
a) each b, d, and f is 1 and $R^3$-$R^{20}$ are all hydrogen; or
b) each b, d, and f is zero; each $R^3$, $R^4$, $R^8$-$R^{10}$, $R^{14}$-$R^{16}$ and $R^{20}$ is hydrogen; and each $R^7$, $R^{13}$ and $R^{19}$ is methyl; c is 1; and $L_a$ is -BRB'-.

**29.** A wettable, flexible, oxygen permeable, substantially non-swellable ophthalmic device of claim 14 comprising a polymer of a monomer having the formula Ic

$$L'\{(D\text{-}A\text{-}L)_e\text{-}S''\}_c L'' \qquad (Ic)$$

wherein e is zero or 1; S" is of formula $-(D\text{-}S'\text{-}L\text{-}D\text{-}A\text{-}L)_a$ as defined in claim 1; each D, A, L, S', a and c is independently as defined in claim 14;
provided that when e = 1, the terminal L group (exclusive of L' and L") of formula Ic may also be selected from -BR-;
L' is hydrogen, P'-BRB'-; or P'-RB'-;
L" is -P'; or, in case that e is zero, also D-S'-BR-P' or D-S'-BRB'-P'; and P' is hydrogen, amino, hydroxy, or a moiety containing a crosslinkable group which may be crosslinked when coreacted with a suitable crosslinking agent or when irradiated by actinic radiation.

**30.** The device of claim 29 wherein a is one.

**31.** The device of claim 29 wherein each D is oxygen.

**32.** The device of claim 29 wherein each L is -BRB'-, each B and B' is -C(O)NH- wherein the nitrogen atom is bound to R, and R is

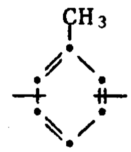 .

**33.** The device of claim 29 wherein R is

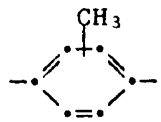 .

**34.** The device of claim 29 wherein each $R^1$ and $R^2$ is methyl.

**35.** The device of claim 29 wherein h and i are 4.

**36.** The device of claim 29 wherein v is from about 15 to about 50.

**37.** The device of claim 29 wherein h is 4; i is 4; and v is from about 15 to about 50.

**38.** The device of claim 29 wherein $(x+y+z)$ multiplied by q is from about 25 to about 75.

**39.** The device of claim 29 wherein
a) each b, d and f is 1 and $R^3$-$R^{20}$ are all hydrogen or b) each b, d and f is zero, each $R^3$, $R^4$, $R^8$-$R^{10}$, $R^{14}$-$R^{16}$, and $R^{20}$ is hydrogen, and each $R^7$, $R^{13}$ and $R^{19}$ is methyl.

**40.** The device of claim 39 wherein $(x+y+z)$ multiplied by q is about 25 to about 75.

**41.** The device of claim 29 wherein c is 1.

**42.** The device of claim 29 wherein L' is P'-BRB'-.

**43.** The device of claim 29 wherein L" is -D-S'-BRB'-P'.

**44.** The device of claim 29 wherein each P' is

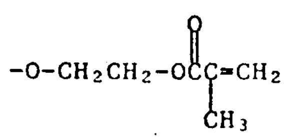 .

**45.** The device of claim 29 wherein
a is one; each D is oxygen; each L is -BRB'-; each B and B' is -C(O)NH- with the nitrogen atom bound to R; each R is

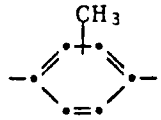 ;

each $R^1$ and $R^2$ is methyl; h and i are each 4; v is from about 15 to about 50; (x + y + z) multiplied by q is about 25 to about 75; and

a) each b, d, and f is 1 and $R^3$-$R^{20}$ are all hydrogen; or

b) each b, d, and f is zero; each $R^3$, $R^4$, $R^8$-$R^{10}$, $R^{14}$-$R^{16}$ and $R^{20}$ is hydrogen; and each $R^7$, $R^{13}$ and $R^{19}$ is methyl;

L' is P'-BRB'-; and P' is

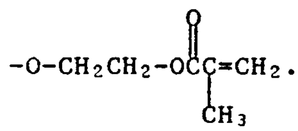

**46.** The device of claim 29 wherein c is 1 and L" is -D-S'-BRB'-P'.

**47.** Use of a device according to claims 1 to 46 or 48 to 52 for correcting visual defects.

**48.** The device of claim 1 wherein each A is of the formula V

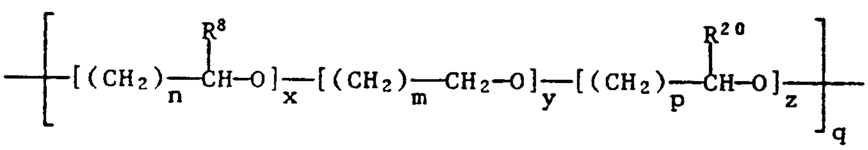
(V)

wherein n, m and p independently are 1 - 3; and x, y, z and q are as defined in claim 1 provided that each of them is greater than zero; $R^8$ and $R^{20}$ are alkyl of up to 6 carbon atoms; or of the formula VI

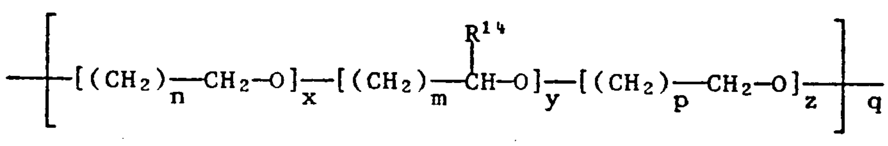
(VI)

wherein n, m, p, x, y, z and q are as defined above for formula V and $R^{14}$ is alkyl of up to six carbon atoms.

**49.** The device of claim 48 wherein in formula V each of n, m and p is one, x, y, z and q are as defined in claim 48, and $R^8$ and $R^{20}$ are methyl and wherein in formula VI each of n, m and p is one, x, y, z and q are as defined in claim 48, and $R^{14}$ is methyl.

**50.** The device of claim 49 wherein q is 1.

**51.** The device of claim 49 wherein x and z within any one A are the same.

**52.** The device of claim 49 wherein each x and each z has the same value.

**53.** A process for the manufacture of an optically clear, wettable, flexible, substantially nonswellable, oxygen permeable polymer of a crosslinkable monomer having a segment S" of the formula I,

$-(D\text{-}S'\text{-}L\text{-}D\text{-}A\text{-}L)_a-$ (I)

wherein a is 1 to 10;

each D is independently oxygen or $-N(R^{21})-$;

each S' is independently a segment of formula II,

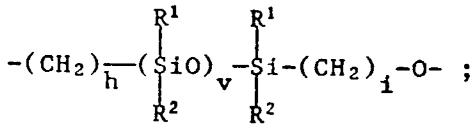 (II)

each A is independently a segment of formula III,

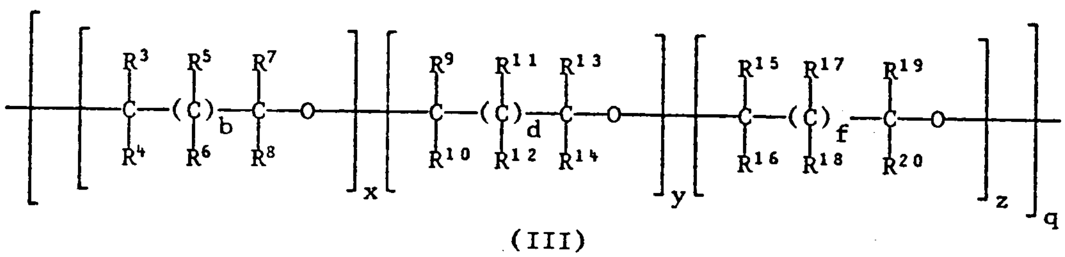

(III)

the terminal oxygen within each unit of formula II and III being replaceable by $-N(R^{21})-$;

each L is independently -BRB'-, the terminal L group within any one monomer of formula I also being capable of being -BR-;

wherein each b, d and f is independently 0 - 4; q is a number from 1 to 1000; each x, y and z is independently 0 to 100 provided at least one of x, y and z is at least 1; such that (x+y+z) multiplied by q is 4 to 1000;

each h and i is an integer from 1 to 6, v is an integer from 2 to 75;

$R^1$ and $R^2$ are independently alkyl of up to 18 carbon atoms, or aryl of up to 12 carbon atoms;

each of $R^3$, $R^4$, $R^7$-$R^{10}$, $R^{13}$-$R^{16}$, $R^{19}$ and $R^{20}$ is independently selected from the group consisting of hydrogen, halogen, an aliphatic, aromatic or heterocyclic containing radical selected from unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, $C_1$-$C_{16}$ alkanoyloxy, aryloxy of up to 10 carbon atoms, $C_3$-$C_6$ alkenoyloxy, aroyl of up to 10 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being, in turn, optionally substituted by $C_1$-$C_6$ alkyl, fluoro or a $C_1$-$C_6$ alkoxy provided said last mentioned alkoxy is not bound to a carbon atom already singly bound to another oxygen atom;

$R^3$, $R^4$, $R^7$-$R^{10}$, $R^{13}$-$R^{16}$, $R^{19}$ and $R^{20}$ being further independently selected from aryl of up to 10 carbon atoms, $C_3$-$C_8$ cycloalkyl, and oxacycloalkyl of up to 7 carbon atoms, each of which may be unsubstituted or further substituted with a substituent selected from the group of substituents for said $R^3$ alkyl set forth above;

$R^5$, $R^6$, $R^{11}$, $R^{12}$, $R^{17}$ and $R^{18}$ are selected from the same group set forth above for $R^3$; and $R^5$, $R^6$, $R^{11}$, $R^{12}$, $R^{17}$ and $R^{18}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which may be further substituted by fluoro, aryl of up to 10 carbon atoms, or $C_1$-$C_{16}$ alkoxy, and $R^5$, $R^6$, $R^{11}$, $R^{12}$, $R^{17}$ and $R^{18}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which may be further substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom; or 2 adjacent groups, selected from $R^3$-$R^{20}$, together with the atoms to which they are attached may form a 5 - 8 membered cycloalkyl, oxacycloalkyl or bicycloalkyl ring; $R^{21}$ is independently selected from hydrogen, $C_1$-$C_4$ alkyl and phenyl; and wherein each B and B' is selected from

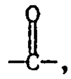, 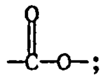; and 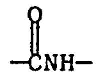

with the carbonyl group being bound to A, S' or D;

each R is independently a divalent linking group selected from

a) a divalent aliphatic group of up to 25 carbon atoms which may be interrupted by oxy, carbonyloxy, amino, aminocarbonyl, oxycarbonyl, ureido, oxycarbonylamino, or carbonylamino;

b) a divalent 5 - 7 membered cycloaliphatic group having 5 - 25 carbon atoms;

c) a divalent arylene group having 6 - 25 carbon atoms; and

d) a divalent aralkyl or alkaryl group having 7 to 25 carbon atoms;

wherein groups b) and d) can be optionally interrupted by the same groups as in group a) and wherein the aryl rings in groups c) and d) may be further substituted with one or more substituents selected from halogen, $C_1$-$C_4$ alkyl, and $C_1$-$C_{12}$ perhalo alkyl; said polymer having a receding contact angle of less than 60°; having absorbed less than about 10 % water in its swollen state; and having a Dk $x10^{-10}$ (mm•ml $O_2/cm^2$•sec•mmHg) of at least about 7, by reacting the required intermediates in a manner known per se.

**54.** The process of claim 53 wherein said wettable, flexible, oxygen permeable, substantially non-swellable polymer is

a) fabricated from a crosslinkable monomer having a partial formula Ia,

$-(D\text{-}A\text{-}L\text{-}S")_c-$ (Ia)

wherein each S" is independently a segment of formula I of claim 53; each D, A and L is independently as defined in claim 53; c is 1-10; and a times c is 1-10;

or b) fabricated from a crosslinkable monomer having a partial formula Ib

$-(S")_c\text{-}D\text{-}S'\text{-}L_a-$ (Ib)

wherein $L_a$ is selected from -BRB'- and -BR-; B, R, B' and S' are as defined in claim 53, and wherein S", c, D, A and L are as defined above.

**55.** The process of claim 53 wherein said wettable, flexible, oxygen permeable, substantially non-swellable polymer is fabricated from a monomer having the formula Ic

$L'\{(D\text{-}A\text{-}L)_e\text{-}S"\}_cL"$ (Ic)

wherein e is zero or 1; S" is of formula $-(D\text{-}S'\text{-}L\text{-}D\text{-}A\text{-}L)_a$ as defined in claim 54; each D, A, L, S', a and c is independently as defined in claim 53;

provided that when e = 1, the terminal L group (exclusive of L' and L") of formula Ic may also be selected from -BR-;

L' is hydrogen, P'-BRB'-; or P'-RB'-;

L" is -P'; or, in case that e is zero, also D-S'-BR-P' or D-S'-BRB'-P'; and P' is hydrogen, amino, hydroxy, or a moiety containing a crosslinkable group which may be crosslinked when coreacted with a suitable crosslinking agent or when irradiated by actinic radiation.

**Revendications**

**Revendications pour les Etats contractants suivants : AT, BE, CH, DE, FR, GB, GR, IT, LI, LU, NL, SE**

**1.** Dispositif ophtalmique optiquement clair, mouillable, flexible, essentiellement non gonflable dans le fluide lacrymal oculaire aqueux, perméable à l'oxygène, comprenant un polymère réticulé d'un monomère réticulable ayant un segment S" de formule I,

$-(W\text{-}S'\text{-}L\text{-}D\text{-}A\text{-}L)_a-$ (Ia)

où a vaut de 1 à 10 ;

chaque D représente indépendamment un oxygène, ou - $N(R^{21})$- ;
chaque S' représente indépendamment un segment de formle II,

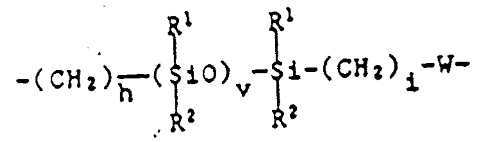

(II

chaque A représente indépendamment un segment de formule III,

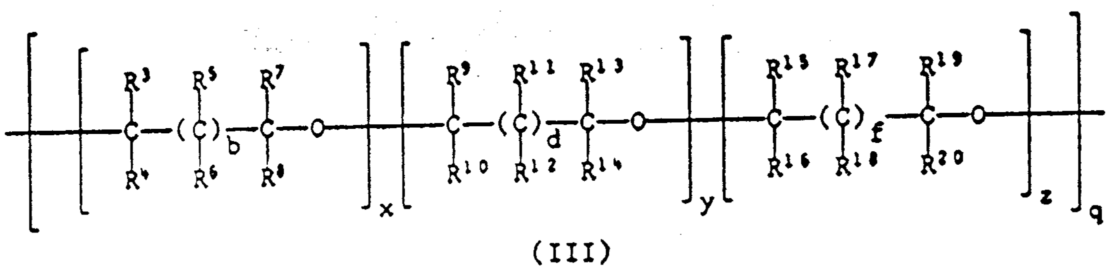

(III)

l'oxygène terminal dans chaque unité de formule II et III étant remplaçable par $-N(R^{21})-$ ;
chaque L représente indépendamment -BRB'-, le groupe L-terminal dans n'importe quel monomère de formule I pouvant également être -BR- ;
l'oxygène terminal dans chaque unité de formule III étant remplaçable par $-N(R^{21})-$ ;
où chaque b, d et f vaut indépendamment 0-4 ; q est un nombre allant de 1 à 1000 ; chaque x, y et z vaut indépendamment 0 à 100, à condition qu'au moins un des symboles x, y et z vale au moins 1 ; de manière que $(x + y + z)$ multiplié par q vaille de 4 à 1000 ; chaque h et est un nombre entier allant de 1 à 6, v est un nombre entier allant de 2 à 300 ; $R^1$ et $R^2$ représentent indépendamment un alcoyle ayant jusqu'à 18 atomes de carbone, ou un aryle ayant jusqu'à 12 atomes de carbone ;
chacun des radicaux $R^3$, $R^4$, $R^7$-$R^{10}$, $R^{13}$-$R^{16}$ et $R^{20}$ est indépendamment choisi dans le groupe constitué par hydrogène, halogène un radical aliphatique, aromatique ou hétérocyclique choisi parmi : alcoyle en $C_{1-16}$ non-substitué ; alcoyle en $C_{1-16}$ substitué ; alcényle en $C_{2-16}$ non substitué ; et alcényle en $C_{2-16}$ substitué où les substituants alcoyle et alcényle sont choisis indépendamment parmi un alcoxy en $C_{1-16}$-carbonyle, alcényloxy en $C_{2-16}$-carbonyle, fluoro, aryle ayant jusqu'à 10 atomes de carbone, alcoxy en $C_{1-16}$, de préférence en $C_{1-8}$, alcanoyloxy en $C_{1-16}$, aryloxy ayant jusqu'à 10 atomes de carbone, alcénoyloxy en $C_{3-6}$, aroyle ayant jusqu'à 10 atomes de carbone, aroyloxy ayant jusqu'à 11 atomes de carbone, cycloalcoyle en $C_{3-8}$, cycloalcoxy en $C_{3-8}$, cycloalcoyle en $C_{3-8}$-carbonyloxy, cycloalcoxy en $C_{3-8}$-carbonyle, oxacycloalcoyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy et aryl (jusqu'à 10 atomes de carbone)-oxy-carbonyle, chacun desdits substituants alcoyle et alcényle étant à son tour éventuellement substitué par un alcoyle en $C_{1-6}$, un fluoro ou un alcoxy en, $C_{1-6}$ à condition que ledit alcoxy mentionné en dernier ne soit pas lié à un atome de carbone déjà lié par une liaison simple à un autre atome d'oxygène ;
$R^3$, $R^4$, $R^{7-10}$, $R^{13-16}$, $R^{19}$ et $R^{20}$ étant en outre indépendamment choisis parmi aryle ayant jusqu'à 10 atomes de carbone, cycloalcoyle en $C_{3-8}$, et oxacycloalcoyle ayant jusqu'à 7 atomes de carbone, dont chacun peut être non substitué ou encore substitué par un substituant choisi dans le groupe des substituants pour ledit $R^3$ alcoyle exposé ci-dessus ;
$R^5$, $R^6$, $R^{11}$, $R^{12}$, $R^{17}$ et $R^{18}$ sont choisis dans le même groupe que celui présenté ci-dessus pour $R^3$ ; et $R^5$, $R^6$, $R^{11}$, $R^{12}$, $R^{17}$ et $R^{18}$ sont en outre indépendamment choisis parmi alcoxy en $C_{1-16}$-carbonyle, alcénoyloxy en $C_{3-16}$, alcényloxy en $C_{2-16}$-carbonyle, alcénoyloxy en $C_{3-16}$, alcényloxy en $C_{2-16}$-carbonyle, et alcanoyloxy en $C_{1-16}$ et chacun d'entre eux peut être en outre substitué par un fluoro, un aryle allant jusqu'à 10 atomes de carbone, un alcoxy en $C_{1-16}$ et $R^5$, $R^6$, $R^{11}$, $R^{12}$, $R^{17}$ et $R^{18}$ sont encore en outre indépendamment choisis parmi aryloxy allant jusqu'à 10 atomes de carbone, cycloalcoxy allant jusqu'à 8 atomes de carbone, cycloalcoyle (allant jusqu'à 8 atomes de carbone)-carbonyloxy, cycloalcoxy (allant jusqu'à 8 atomes de carbone)-carbonyle, aroyloxy allant jusqu'à 11 atomes de

carbone, oxacycloalcoxy allant jusqu'à 7 atomes de carbone, oxacycloalcényloxy allant jusqu'à 7 atomes de carbone, oxacycloalcoxy (allant jusqu'à 7 atomes de carbone)-carbonyle, oxycycloalcoyle (allant jusqu'à 7 atomes de carbone)carbonyloxy, et aryloxy (allant jusqu'à 10 atomes de carbone)-carbonyle, dont chacun peut être en outre substitué par un fluoro, alcoyle en $C_{1-6}$ ou alcoxy en $C_{1-6}$, à condition que tout substituant ayant un atome d'oxygène comme liaison au reste de la molécule ne peut pas être un substituant sur le même atome de carbone qui est lié par une liaison simple à un autre atome d'oxygène ; en outre, deux groupes adjacents, choisis parmi $R^3$ à $R^{20}$, ensemble avec les atomes auxquels ils sont attachés, peuvent former un noyau cycloalcoyle, oxacycloalcoyle, ou bicycloalcoyle à 5 à 8 chaînons ; et chaque $R^{21}$est indépendamment choisi parmi hydrogène, alcoyle en $C_{1-4}$ et phényle

chaque B et B' est choisi parmi

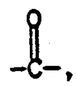 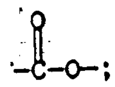 et 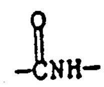

le groupe carbonyle étant lié à A, S' ou D ;

et chaque R est indépendamment un groupe de liaison bivalent chosi parmi

a) un groupe aliphatique bivalent allant jusqu'à 25 atomes de carbone, qui peut être interrompu par un oxy, carbonyloxy, amino, aminocarbonyle, oxycarbonyle, uréido, oxycarbonylamino- ou carbonylamino ;

b) un groupe cycloaliphatique bivalent à 5 à 7 chaînons ayant de 5 à 25 atomes de carbone ;

c) un groupe arylène bivalent ayant de 6 à 25 atomes de carbone ; et

d) un groupe aralcoyle ou aryle différent ayant de 7 à 25 atomes de carbone ; où les groupes b) et d) peuvent être éventuellement interrompus par les mêmes groupes que dans le groupe a) et où les noyaux aryle dans les groupes c) et d) peuvent être encore substitués par un ou plusieurs substituants choisis parmi halogène, alcoyle en $C_{1-4}$ et perhalo-alcoyle en $C_{1-12}$ ; ledit dispositif ayant un angle de contact de fuite inférieur à 60°, ayant absorbé moins d'environ 10% d'eau dans son état gonflé ; et ayant un Dk $\times$ $10^{-10}$ (mm.ml $O_2$/$cm^2$.sec. mmHg) d'au moins environ 7.

**2.** Dispositif de la revendication 1, où a vaut 1.

**3.** Dispositif de la revendication 1, où chaque D est un oxygène.

**4.** Dispositif de la revendication 1, où chaque L est -BRB'-, chaque B et B' est -C(O)NH-, où l'atome d'azote est lié à R et R représente

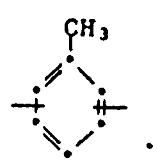

**5.** Dispositif de la revendication 4 où R représente

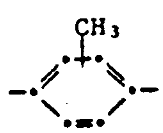

**6.** Dispositif de la revendication 1, où chaque $R^1$ et $R^2$ est un méthyle.

**7.** Dispositif de la revendication 1, où h et i valent tous deux 4.

**8.** Dispositif de la revendication 1, où v vaut d'environ 15 à environ 50.

**9.** Dispositif de la revendication 6, où h vaut 4 ; i vaut 4 ; et v vaut d'environ 15 à environ 50.

**10.** Dispositif de la revendication 1, où $(x+y+z)$ multiplié par q vaut d'environ 25 à environ 75.

**11.** Dispositif de la revendication 1 où
a)chaque b, d et f vaut 1 et $R^3$-$R^{20}$ représentent tous des hydrogène ou
b) chaque b, d, et f vaut zéro, chaque $R^3$, $R^4$, $R^8$-$R^{10}$, $R^{14}$-$R^{16}$, et $R^{20}$ est un hydrogène, et chaque $R^7$, $R^{13}$ et $R^{19}$ est un méthyle.

**12.** Dispositif de la revendication 11, où $(x+y+z)$ multiplié par q vaut d'environ 25 à environ 75.

**13.** Dispositif de la revendication 1, où a vaut 1 ; chaque D est un oxygène ; chaque L est -BRB'- ; chaque B et B' sont -C(O)NH- avec l'atome d'azote lié à R ; chaque R est

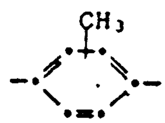 ;

chaque $R^1$ et $R^2$ est un méthyle ; h et i valent chacun 4 ; v vaut d'environ 15 à environ 50 ; $(x+y+z)$ multiplié par q vaut d'environ 25 à environ 75 ; et
a) chaque b, d, et f vaut 1 et $R^3$-$R^{20}$ sont des hydrogènes ; ou
b) chaque b, d et f vaut zéro ; chaque $R^3$, $R^4$, $R^8$-$R^{10}$, $R^{14}$-$R^{16}$ et $R^{20}$ est un hydrogène ; chaque $R^7$, $R^{13}$ et $R^{19}$ est un méthyle.

**14.** Dispositif ophtalmique mouillable, flexible, perméable à l'oxygène, essentiellement non-gonflable, de la revendication 1
a) comprenant un polymère d'un monomère réticulable ayant la formule partielle Ia,

$-(D\text{-}A\text{-}L\text{-}S'')_c-$ (Ia)

où chaque S" est indépendamment un segment de formule I de la revendication 1 ; et chaque D, A et L est indépendamment tel que défini dans la revendication 1 ; c vaut de 1 à 10 et a multiplié par c vaut de 1 à 10 ; ou
b) comprenant un polymère d'un monomère réticulable ayant la formule partielle Ib

$-(S'')_c\text{-}D\text{-}S'\text{-}L_a-$ (Ib)

où $L_a$ est choisi parmi -BRB'- et -BR- ; B, R, B' et S' sont tels que définis dans la revendication 1, et où S", c, D, A et L sont tels que définis ci-dessus.

**15.** Dispositif de la revendication 14, où a vaut 1.

**16.** Dispositif de la revendication 14, où D est un oxygène.

**17.** Dispositif de la revendication 14, où chaque L représente -BRB'-, chaque B et B' représente -C(O)NH- où l'atome d'azote est lié à R, et R représente

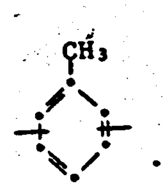

**18.** Dispositif de la revendication 14, où R représente

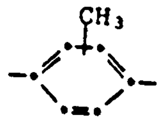

**19.** Dispositif de la revendication 14, où chaque $R^1$ et $R^2$ est un méthyle.

**20.** Dispositif de la revendication 14, où h et i valent chacun 4.

**21.** Dispositif de la revendication 14, où v vaut d'environ 15 à environ 50.

**22.** Dispositif de la revendication 14, où h vaut 4 ; i vaut 4 ; et v vaut d'environ 15 à environ 50.

**23.** Dispositif de la revendication 14, où (x + y + z) multiplie par q vaut d'environ 25 à environ 75.

**24.** Dispositif de la revendication 14, où
a) chaque b, de et f vaut 1, et $R^3$-$R^{20}$ représentent tous des hydrogènes ou b) chaque b, d et f vaut zéro, chaque $R^3$, $R^4$, $R^8$-$R^{10}$, $R^{14}$-$R^{16}$, et $R^{20}$ est un hydrogène et chaque $R^7$, $R^{13}$ et $R^{19}$ est un méthyle.

**25.** Dispostifi de la revendication 24 où (x + y + z) mulpiplié par q vaut d'environ 25 à environ 75.

**26.** Dispositif de la revendication 14 ou 24 où c vaut 1.

**27.** Dispositif de la revendication 14, où $L_a$ représente -BRB'-.

**28.** Dispositif de la revendication 14, où a vaut 1 ; chaque D est un oxygène, chaque L représente -BRB'- ; chaque B et B représente -C(O)NH-avec l'atome d'azote lié à R ; chaque R représente

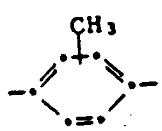 ;

chaque $R^1$ et $R^2$ est un méthyle ; h et i valent chacun 4 ; v vaut d'environ 15 o environ 50 ; (x + y + z) multiplié par q vaut d'environ 25 à environ 75 ; et

a) chaque b, d et f vaut 1 et $R^3$-$R^{20}$ sont des hydrogènes ; ou

b) chaque b, d, et f vaut zéro ; chaque $R^3$, $R^4$, $R^8$-$R^{10}$, $R^{14}$-$R^{16}$ et $R^{20}$ est un hydrogène ; et chaque $R^7$, $R^{13}$ et $R^{19}$ est un méthyle ; c vaut 1, et $L_a$ représente -BRB'-

**29.** Dispositif ophtalmique mouillable, flexible, perméable à l'oxygène, essentiellement non-gonflable de la revendication 14, comprenant un polymère d'un monomère de formule Ic

L'{(D-A-L)$_e$-S"}L"     (Ic)

où e vaut zéro ou 1 ; S" est de formule $-(D-S'-L-D-A-L)_a$ telle définie dans la revendication 1 ; chaque D, A, L, S', a et c est indépendamment tel que défini dans la revendication 14 ; à condition que lorsque E = 1, le groupe L terminal (non compris L' et L") de formule Ic peut également être choisi parmi -BR- ; L' est un hydrogène, P'-BRB'- ; ou P'-RB'- ; L" représente P' ; ou, dans le cas où e vaut zéro également D-S'-BR-P' ou D-S'-BRB'-P'- ; et P' est un hydrogène, amino, hydroxy ou une partie contenant un groupe réticulable qui peut être réticulée lorsqu'on la fait coréagir avec un agent réticulant approprié ou lorsqu'on l'irradie par un rayonnement actinique.

**30.** Dispositif de la revendication 29, où a vaut 1.

**31.** Dispositif de la revendication 29 où chaque D est un oxygène.

**32.** Dispositif de la revendication 29, où chaque L représente -BRB'-, chaque B et B' représente -C(O)NH- où l'atome d'azote est lié à R, et R représente

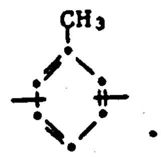

**33.** Dispositif de la revendication 29, où R représente

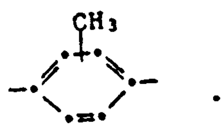

**34.** Dispositif de la revendication 29, où chaque $R^1$ et $R^2$ est un méthyle.

**35.** Dispositif de la revendication 29, où h et i valent 4.

**36.** Dispositif de la revendication 29, où v vaut d'environ 15 à environ 50.

**37.** Dispositif de la revendication 29, où h vaut 4 ; v vaut 4 ; et v vaut d'environ 15 à environ 50.

**38.** Dispositif de la revendication 29, où (x + u + z) multiplié par q vaut d'environ 25 à environ 75.

**39.** Dispositif de la revendication 29, oùa) chaque b, d et f vaut 1 et $R^3$-$R^{20}$ sont tous des hydrogènes ou bà chaque b, d et f vaut zéro, chaque $R^3$, $R^4$, $R^8$-$R^{10}$, $R^{14}$-$R^{16}$ et $R^{20}$ est un hydrogène, et chaque $R^7$, $R^{13}$ et $R^{19}$ est un méthyle.

**40.** Dispositif de la revendication 39, où (x + y + z) multiplié par q vaut d'environ 25 à environ 75.

**41.** Dispositif de la revendication 29, où c vaut 1.

**42.** Dispositif de la revendication 29, où L' représente P'-BRB'-.

**43.** Dispositif de la revendication 29, où L" représente -D-S'-BRB'-P'.

**44.** Dispositif de la revendication 29, dans lequel chaque P' représente

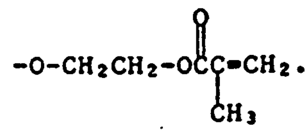

**45.** Dispositif de la revendication 29, où
a vaut 1 ; chaque D est un oxygène ; chaque L est un -BRB' ; chaque B et B' vaut -C(O)NH- avec l'atome d'azote lié à R ; chaque R représente

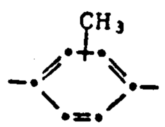 ;

chaque $R^1$ et $R^2$ est un méthyle ; h et i valent chacun 4 ; v vaut d'environ 15 à environ 50 ; (x + y + z) multiplié par q vaut d'environ 25 à environ 75 ;
et

a) chaque b, d et f vaut 1 et $R^3$-$R^{20}$ est un hydrogène ; ou
b) chaque b, d, et f vaut zéro ; chaque $R^3$, $R^4$, $R^6$-$R^{10}$, $R^{14}$-$R^{16}$ et $R^{20}$ est un hydrogène, et chaque $R^7$, et $R^{13}$ et $R^{19}$ est un méthyle ;

L' représente P'-BRB' ; et P' représente

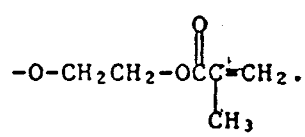

**46.** Dispositif de la revendication 29, où c vaut 1 et L" représente -D-S'-BRB'-P'.

**47.** Utilisation d'un dispositif selon l'une des revendications 1 à 46, ou 48 à 52 pour la correction des défauts visuels.

**48.** Dispositif de la revendication 1, où chaque A est de formule V

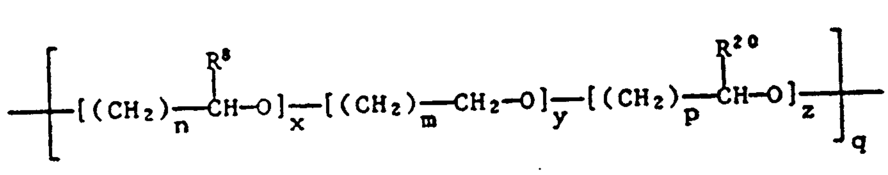 (V)

où n, m, et p valent indépendamment 1 - 3 ; et x, y, z et q sont tels que définis dans la revendication 1, à condition que chacun d'entre eux soit supérieur à zéro ; $R^8$ et $R^{20}$ représentent des alcoyles ayant jusqu'à six atomes de carbone ; ou de formule VI

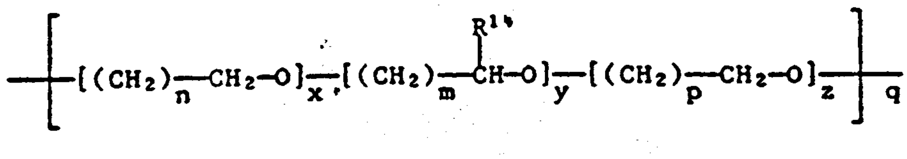 (VI)

où n, m, p, x, y, z et q sont tels que définis ci-dessus pour la formule V et $R^{14}$ est un alcoyle ayant jusqu'à six atomes de carbone.

**49.** Dispositif de la revendication 48, où dans la formule V, chacun des symboles n, m et p vaut 1 et x, y, z et q sont tels que définis dans la revendication 48, et $R^8$ et $R^{20}$ sont un méthyle et où dans la formule VI chaque n, m et p vaut 1, x, y, z et q sont tels que définis dans la revendication 48, et $R^{14}$ est un méthyle.

**50.** Dispositif de la revendication 49, où q vaut 1.

**51.** Dispositif de la revendication 49, où x et z dans chaque A sont identiques.

**52.** Dispositif de la revendication 49, où chaque x et chaque z a la même valeur.

**53.** Polymère optiquement clair, mouillable, flexible, essentiellement non-gonflable, perméable à l'oxygène, d'un monomère réticulable ayant un segment S" de formule I,

$-(W\text{-}S'\text{-}L\text{-}D\text{-}A\text{-}L)_a-$ (Ia)

où a vaut de 1 à 10 ;
chaque D représente indépendamment un oxygène, ou - $N(R^{21})$- ;
chaque S' représente indépendamment un segment de formle II,

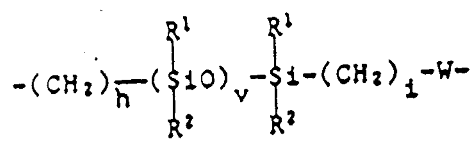 (II

chaque A représente indépendamment un segment de formule III,

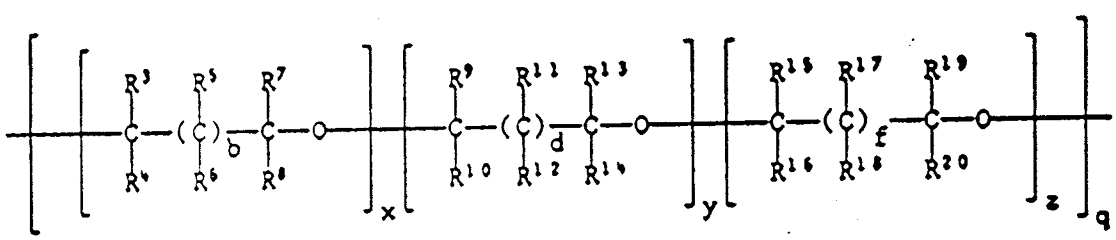

(III)

l'oxygène terminal dans chaque unité de formule II et III étant remplaçable par $-N(R^{21})-$ ;
chaque L représente indépendamment -BRB'-, le groupe L-terminal dans n'importe quel monomère de formule I pouvant également être -BR- ;
l'oxygène terminal dans chaque unité de formule III étant remplaçable par $-N(R^{21})-$ ;
où chaque b, d et f vaut indépendamment 0-4 ; q est un nombre allant de 1 à 1000 ; chaque x, y et z vaut indépendamment 0 à 100, à condition qu'au moins un des symboles x, y et z vale au moins 1 ; de manière que (x + y + z) multiplié par q vaille de 4 à 1000 ; chaque h et est un nombre entier allant de 1 à 6, v est un nombre entier allant de 2 à 75 ; $R^1$ et $R^2$ représentent indépendamment un alcoyle ayant jusqu'à 18 atomes de carbone, ou un aryle ayant jusqu'à 12 atomes de carbone ;

chacun des radicaux $R^3$, $R^4$, $R^7$-$R^{10}$, $R^{13}$-$R^{16}$ et $R^{20}$ est indépendamment choisi dans le groupe constitué par hydrogène, halogène un radical aliphatique, aromatique ou hétérocyclique choisi parmi : alcoyle en $C_{1-16}$ non-substitué ; alcoyle en $C_{1-16}$ substitué ; alcényle en $C_{2-16}$ non substitué ; et alcényle en $C_{2-16}$ substitué où les substituants alcoyle et alcényle sont choisis indépendamment parmi un alcoxy en $C_{1-16}$-carbonyle, alcényloxy en $C_{2-16}$-carbonyle, fluoro, aryle ayant jusqu'à 10 atomes de carbone, alcoxy en $C_{1-16}$, de préférence en $C_{1-8}$, alcanoyloxy en $C_{1-16}$, aryloxy ayant jusqu'à 10 atomes de carbone, alcénoyloxy en $C_{2-6}$, aroyle ayant jusqu'à 10 atomes de carbone, aroyloxy ayant jusqu'à 11 atomes de carbone, cycloalcoyle en $C_{3-8}$, cycloalcoxy en $C_{3-8}$, cycloalcoyle en $C_{3-8}$-carbonyloxy, cycloalcoxy en $C_{3-8}$-carbonyle, oxacycloalcoyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy et aryl (jusqu'à 10 atomes de carbone)-oxy-carbonyle, chacun desdits substituants alcoyle et alcényle étant à son tour éventuellement substitué par un alcoyle en $C_{1-6}$, un fluoro ou un alcoxy en $C_{1-6}$ à condition que ledit alcoxy mentionné en dernier ne soit pas lié à un atome de carbone déjà lié par une liaison simple à un autre atome d'oxygène ;
$R^3$, $R^4$, $R^{7-10}$, $R^{13-16}$, $R^{19}$ et $R^{20}$ étant en outre indépendamment choisis parmi aryle ayant jusqu'à 10 atomes de carbone cycloalcoyle en $C_{3-8}$, et oxacycloalcoyle ayant jusqu'à 7 atomes de carbone, dont chacun peut être non substitué ou encore substitué par un substituant choisi dans le groupe des substituants pour ledit $R^3$ alcoyle exposé ci-dessus ;
$R^5$, $R^6$, $R^{11}$, $R^{12}$, $R^{17}$ et $R^{18}$ sont choisis dans le même groupe que celui présenté ci-dessus pour $R^3$ ; et $R^5$, $R^6$, $R^{11}$, $R^{12}$, $R^{17}$ et $R^{18}$ sont en outre indépendamment choisis parmi alcoxy en $C_{1-6}$-carbonyle, alcénoyloxy en $C_{3-16}$, alcényloxy en $C_{2-16}$-carbonyle, et alcanoyloxy en $C_{1-16}$ et chacun d'entre eux peut être en outre substitué par un fluoro, un aryle allant jusqu'à 10 atomes de carbone, un alcoxy en $C_{1-16}$ et $R^5$, $R^6$, $R^{11}$, $R^{12}$, $R^{17}$ et $R^{18}$ sont encore en outre indépendamment choisis parmi aryloxy allant jusqu'à 10 atomes de carbone, cycloalcoxy allant jusqu'à 8 atomes de carbone, cycloalcoyle (allant jusqu'à 8 atomes de carbone)-carbonyloxy, cycloalcoxy (allant jusqu'à 8 atomes de carbone)-carbonyle, aroyloxy allant jusqu'à 11 atomes de carbone, oxacycloalcoxy allant jusqu'à 7 atomes de carbone, oxacycloalcényloxy allant jusqu'à 7 atomes de carbone, oxacycloalcoxy (allant jusqu'à 7 atomes de carbone)-carbonyle, oxycycloalcoyle (allant jusqu'à 7 atomes de carbone)-carbonyloxy, et aryloxy (allant jusqu'à 10 atomes de carbone)-carbonyle, dont chacun peut être en outre substitué par un fluoro, alcoyle en $C_{1-6}$ ou alcoxy en $C_{1-6}$,
A condition que tout substituant ayant un atome d'oxygène comme liaison au reste de la molécule ne peut pas être un substituant sur le même atome de carbone qui est lié par une liaison simple à un autre atome d'oxygène ; en outre, deux groupes adjacents, choisis parmi $R^3$ à $R^{20}$, ensemble avec les atomes auxquels ils sont attachés, peuvent former un noyau cycloalcoyle, oxacycloalcoyle, ou bicycloalcoyle à 5 à 8 chaînons ; et chaque $R^{21}$est indépendamment choisi parmi hydrogène, alcoyle en $C_{1-4}$ et phényle

chaque B et B' est choisi parmi

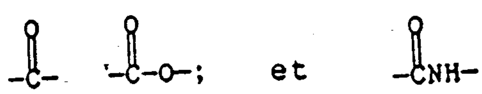

le groupe carbonyle étant lié à A, S' ou D ;
et chaque R est indépendamment un groupe de liaison bivalent chosi parmi

a) un groupe aliphatique bivalent allant jusqu'à 25 atomes de carbone, qui peut être interrompu par un oxy carbonyloxy, amino, aminocarbonyle, oxycarbonyle, uréido, oxycarbonylamino- ou carbonylamino ;
b) un groupe cycloaliphatique bivalent à 5 à 7 chaînons ayant de 5 à 25 atomes de carbone ;
c) un groupe arylène bivalent ayant de 6 à 25 atomes de carbone ; et
d) un groupe aralcoyle ou aryle différent ayant de 7 à 25 atomes de carbone ; où les groupes b) et d) peuvent être éventuellement interrompus par les mêmes groupes que dans le groupe a) et où les noyaux aryle dans les groupes c) et d) peuvent être encore substitués par un ou plusieurs substituants choisis parmi halogène, alcoyle en $C_{1-4}$ et perhalo-alcoyle en $C_{1-12}$ ; ledit dispositif ayant un angle de contact de fuite inférieur à 60°, ayant absorbé moins d'environ 10% d'eau dans

son état gonflé ; et ayant un Dk x $10^{-10}$ (mm.ml $O_2$/$cm^2$.sec. mmHg) d'au moins environ 7.

**54.** Polymère mouillable, flexible, perméable à l'oxygène, essentiellement non-glonflable de la revendication 53

a) d'un monomère réticulable ayant une formule partielle Ia,

-(D-A-L-S")$_c$- (Ia)

où chaque S" est indépendamment un segment de formule I de la revendication 53 ; chaque D, A et L est indépendamment tel que défini dans la revendication 53 ;
c vaut 1-10 ; et a multiplié par c vaut de 1 à 10 ;
ou
b) d'un monomère réticulable ayant une formule partielle Ib

-(S")$_c$-D-S'-$L_a$- (Ib)

où $L_a$ est choisi parmi -BRB'-, et -BR- ; B, R, B' et S' sont tels que définis dans la revendication 53, et où S", c, D, A et L sont tels que définis ci-dessus.

**55.** Polymère mouillable, flexible, perméable à l'oxygène, essentiellement non-gonflable, de la revendication 54, d'un monomère de formule Ic

L'{(D-A-L)$_e$-S"}$_c$L" (Ic)

où e vaut zéro ou 1 ; S" est de formule
-(D-S'-L-D-A-L)$_a$ telle que définie dans la revendication 54 ; chaque D, A, L, S', a et c est indépendamment tel que défini dans la revendication 53 ;
à condition que lorsque e = 1, le groupe L terminal (non compris L'et L") de formule Ic peut également être choisi parmi -BR- ;
L' est un hydrogène, P'-BRB4- ; ou P'-RB'- ;
L" représente -P' ; ou, dans le cas où e vaut zéro, également D-S'-BR-P' ou D-S'-BRB'-P'- ; et P' est un hydrogène, amino, hydroxy, ou une fraction contenant un groupe réticulable qui peut être réticulée lorsqu'on la fait coréagir avec un agent réticulant approprié ou lorsqu'on l'irradie par un rayonnement actinique.

**Revendications pour l'Etat contractant suivant : ES**

**1.** Dispositif ophtalmique optiquement clair, mouillable, flexible, essentiellement non gonflable dans le fluide lacrymal oculaire aqueux, perméable à l'oxygène, comprenant un polymère réticulé d'un monomère réticulable ayant un segment S" de formule I,

-(W-S'L-D-A-L)$_a$- (Ia)

où a vaut de 1 à 10 ;
chaque D représente indépendamment un oxygène, ou - N($R^{21}$)- ;
chaque S' représente indépendamment un segment de formle II,

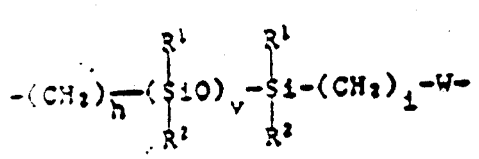

(II

chaque A représente indépendamment un segment de formule III,

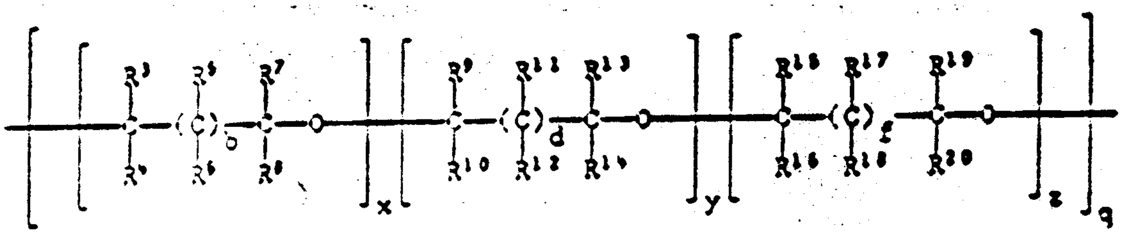

(III)

l'oxygène terminal dans chaque unité de formule II et III étant remplaçable par -N($R^{21}$)- ;
chaque L représente indépendamment -BRB'-, le groupe L-terminal dans n'importe quel monomère de formule I pouvant également être -BR- ;
l'oxygène terminal dans chaque unité de formule III étant remplaçable par -N($R^{21}$)- ;
où chaque b, d et f vaut indépendamment 0-4 ; q est un nombre allant de 1 à 1000 ; chaque x, y et z vaut indépendamment 0 à 100, à condition qu'au moins un des symboles x, y et z vale au moins 1 ; de manière que (x + y + z) multiplié par q vaille de 4 à 1000 ; chaque h et est un nombre entier allant de 1 à 6, v est un nombre entier allant de 2 à 75 ; $R^1$ et $R^2$ représentent indépendamment un alcoyle ayant jusqu'à 18 atomes de carbone, ou un aryle ayant jusqu'à 12 atomes de carbone ;
chacun des radicaux $R^3$, $R^4$, $R^7$-$R^{10}$, $R^{13}$-$R^{16}$ et $R^{20}$ est indépendamment choisi dans le groupe constitué par hydrogène, halogène, un radical aliphatique, aromatique ou héterocyclique choisi parmi : alcoyle en $C_{1-16}$ non-substitué ; alcoyle en $C_{1-16}$ substitué ; alcényle en $C_{2-16}$ non substitué ; et alcényle en $C_{2-16}$ substitué où les substituants alcoyle et alcényle sont choisis indépendamment parmi un alcoxy en $C_{1-16}$-carbonyle, alcényloxy en $C_{2-16}$-carbonyle, fluoro, aryle ayant jusqu'à 10 atomes de carbone, alcoxy en $C_{1-16}$, de préférence en $C_{1-8}$, alcanoyloxy en $C_{1-16}$, aryloxy ayant jusqu'à 10 atomes de carbone, alcénoyloxy en $C_{3-6}$, aroyle ayant jusqu'à 10 atomes de carbone, aroyloxy ayant jusqu'à 11 atomes de carbone, cycloalcoyle en $C_{3-8}$, cycloalcoxy en $C_{3-8}$, cycloalcoyle en $C_{3-8}$-carbonyloxy, cycloalcoxy en $C_{3-8}$-carbonyle, oxacycloalcoyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy et aryl (jusqu'à 10 atomes de carbone)-oxy-carbonyle, chacun desdits substituants alcoyle et alcényle étant à son tour éventuellement substitué par un alcoyle en $C_{1-6}$, un fluoro ou un alcoxy en, $C_{1-6}$ à condition que ledit alcoxy mentionné en dernier ne soit pas lié à un atome de carbone déjà lié par une liaison simple à un autre atome d'oxygène ;
$R^3$, $R^4$, $R^{7-10}$, $R^{13-16}$, $R^{19}$ et $R^{20}$ étant en outre indépendamment choisis parmi aryle ayant jusqu'à 10 atomes de carbone, cycloalcoyle en $C_{3-8}$, et oxacycloalcoyle ayant jusqu'a 7 atomes de carbone, dont chacun peut être non substitué ou encore substitué par un substituant choisi dans le groupe des substituants pour ledit $R^3$ alcoyle exposé ci-dessus ;
$R^5$, $R^6$, $R^{11}$, $R^{12}$, $R^{17}$ et $R^{18}$ sont choisis dans le même groupe que celui présenté ci-dessus pour $R^3$ ; et $R^5$, $R^6$, $R^{11}$, $R^{12}$, $R^{17}$ et $R^{18}$ sont en outre indépendamment choisis parmi alcoxy en $C_{1-16}$-carbonyle, alcénoyloxy en $C_{3-16}$, alcényloxy en $C_{2-16}$-carbonyle, et alcanoyloxy en $C_{1-16}$ et chacun d'entre eux peut être en outre substitué par un fluoro, un aryle allant jusqu'à 10 atomes de carbone, un alcoxy en $C_{1-16}$ et $R^5$, $R^6$, $R^{11}$, $R^{12}$, $R^{17}$ et $R^{18}$ sont encore en outre indépendamment choisis parmi aryloxy allant jusqu'à 10 atomes de carbone, cycloalcoxy allant jusqu'à 8 atomes de carbone, cycloalcoyle (allant jusqu'à 8 atomes de carbone)-carbonyloxy, cycloalcoxy (allant jusqu'à 8 atomes de carbone)-carbonyle, aroyloxy allant jusqu'à 11 atomes de carbone, oxacycloalcoxy allant jusqu'à 7 atomes de carbone, oxacycloalcényloxy allant jusqu'à 7 atomes de carbone, oxacycloalcoxy (allant jusqu'à 7 atomes de carbone)-carbonyle, oxycycloalcoyle (allant jusqu'à 7 atomes de carbone)-carbonyloxy, et aryloxy (allant jusqu'à 10 atomes de carbone)-carbonyle, dont chacun peut être en outre substitué par un fluoro, alcoyle en $C_{1-6}$ ou alcoxy en $C_{1-6}$,
à condition que tout substituant ayant un atome d'oxygène comme liaison au reste de la molécule ne peut pas être un substituant sur le même atome de carbone qui est lié par une liaison simple à un autre atome d'oxygène ; en outre, deux groupes adjacents, choisis parmi $R^3$ à $R^{20}$, ensemble avec les atomes auxquels ils sont attachés, peuvent former un noyau cycloalcoyle, oxacycloalcoyle, ou bicycloalcoyle à 5 à 8 chaînons ; et chaque $R^{21}$ est indépendamment choisi parmi hydrogène, alcoyle en $C_{1-4}$ et phényle

chaque B et B' est choisi parmi

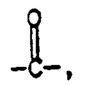, 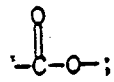; et 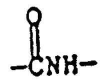

le groupe carbonyle étant lié à A, S' ou D ;

et chaque R est indépendamment un groupe de liaison bivalent chosi parmi

a) un groupe aliphatique bivalent allant jusqu'à 25 atomes de carbone, qui peut être interrompu par un oxy, carbonyloxy, amino, aminocarbonyle, oxycarbonyle, uréido, oxycarbonylamino- ou carbonylamino ;

b) un groupe cycloaliphatique bivalent à 5 à 7 chaînons ayant de 5 à 25 atomes de carbone ;

c) un groupe arylène bivalent ayant de 6 à 25 atomes de carbone ; et

d) un groupe aralcoyle ou aryle différent ayant de 7 à 25 atomes de carbone ; où les groupes b) et d) peuvent être éventuellement interrompus par les mêmes groupes que dans le groupe a) et où les noyaux aryle dans les groupes c) et d) peuvent être encore substitués par un ou plusieurs substituants choisis parmi halogène, alcoyle en $C_{1-4}$ et perhalo-alcoyle en $C_{1-12}$ ; ledit dispositif ayant un angle de contact de fuite inférieur à $60^{\circ}$, ayant absorbé moins d'environ 10% d'eau dans son état gonflé ; et ayant un Dk x $10^{-10}$ (mm.ml $O_2$/$cm^2$.sec. mmHg) d'au moins environ 7.

**2.** Dispositif de la revendication 1, où a vaut 1.

**3.** Dispositif de la revendication 1, où chaque D est un oxygène.

**4.** Dispositif de la revendication 1, où chaque L est -BRB'-, chaque B et B' est -C(O)NH-, où l'atome d'azote est lié à R et R représente

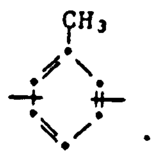

**5.** Dispositif de la revendication 4 où R représente

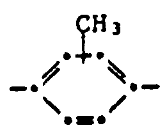

**6.** Dispositif de la revendication 1, où chaque $R^1$ et $R^2$ est un méthyle.

**7.** Dispositif de la revendication 1, où h et i valent tous deux 4.

**8.** Dispositif de la revendication 1, où v vaut d'environ 15 à environ 50.

**9.** Dispositif de la revendication 6, où h vaut 4 ; i vaut 4 ; et v vaut d'environ 15 à environ 50.

**10.** Dispositif de la revendication 1, où (x + y + z) multiplié par q vaut d'environ 25 à environ 75.

**11.** Dispositif de la revendication 1 où

a)chaque b, d et f vaut 1 et $R^3$-$R^{20}$ représentent tous des hydrogène ou

b) chaque b, d, et f vaut zéro, chaque $R^3$, $R^4$, $R^8$-$R^{10}$$R^{14}$-$R^{16}$, et $R^{20}$ est un hydrogène, et chaque $R^7$, $R^{13}$ et $R^{19}$ est un méthyle.

**12.** Dispositif de la revendication 11, où (x + y + z) multiplié par q vaut d'environ 25 à environ 75.

**13.** Dispositif de la revendication 1, où a vaut 1 ; chaque D est un oxygène ; chaque L est -BRB'- ; chaque B et B' sont -C(O)NH- avec l'atome d'azote lié à R ; chaque R est

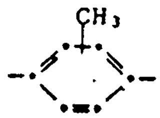 ;

chaque $R^1$ et $R^2$ est un méthyle ; h et i valent chacun 4 ; v vaut d'environ 15 à environ 50 ; (x + y + z) multiplié par q vaut d'environ 25 à environ 75 ; et

a) chaque b, d, et f vaut 1 et $R^3$-$R^{20}$ sont des hydrogènes ; ou

b) chaque b, d et f vaut zéro ; chaque $R^3$, $R^4$, $R^8$-$R^{10}$, $R^{14}$-$R^{16}$ et $R^{20}$ est un hydrogène ; chaque $R^7$, $R^{13}$ et $R^{19}$ est un méthyle.

**14.** Dispositif ophtalmique mouillable, flexible, perméable à l'oxygène, essentiellement non-gonflable, de la revendication 1

a) comprenant un polymère d'un monomère réticulable ayant la formule partielle Ia,

$-(D-A-L-S")_c-$ (Ia)

où chaque S" est indépendamment un segment de formule I de la revendication 1 ; et chaque D, A et L est indépendamment tel que défini dans la revendication 1 ; c vaut de 1 à 10 et a multiplié par c vaut de 1 à 10 ; ou

b) comprenant un polymère d'un monomère réticulable ayant la formule partielle Ib

$-(S")_c-D-S'-L_a-$ (Ib)

où $L_a$ est choisi parmi -BRB'- et -BR- ; B, R, B' et S' sont tels que définis dans la revendication 1, et où S", c, D, A et L sont tels que définis ci-dessus.

**15.** Dispositif de la revendication 14, où a vaut 1.

**16.** Dispositif de la revendication 14, où D est un oxygène.

**17.** Dispositif de la revendication 14, où chaque L représente -BRB'-, chaque B et B' représente -C(O)NH- où l'atome d'azote est lié à R, et R représente

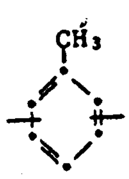 .

**18.** Dispositif de la revendication 14, où R représente

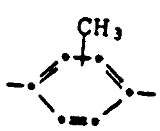 .

**19.** Dispositif de la revendication 14, où chaque $R^1$ et $R^2$ est un méthyle.

**20.** Dispositif de la revendication 14, où h et i valent chacun 4.

**21.** Dispositif de la revendication 14, où v vaut d'environ 15 à environ 50.

**22.** Dispositif de la revendication 14, où h vaut 4 ; i vaut 4 ; et v vaut d'environ 15 à environ 50.

**23.** Dispositif de la revendication 14, où (x + y + z) multiplie par q vaut d'environ 25 à environ 75.

**24.** Dispositif de la revendication 14, où
a) chaque b, de et f vaut 1, et $R^3$-$R^{20}$ représentent tous des hydrogènes ou b) chaque b, d et f vaut zéro, chaque $R^3$, $R^4$, $R^8$-$R^{10}$, $R^{14}$-$R^{16}$, et $R^{20}$ est un hydrogène et chaque $R^7$, $R^{13}$ et $R^{19}$ est un méthyle.

**25.** Dispostifi de la revendication 24 où (x + y + z) mulpiplié par q vaut d'environ 25 à environ 75.

**26.** Dispositif de la revendication 14 ou 24 où c vaut 1.

**27.** Dispositif de la revendication 14, où $L_a$ représente -BRB'-.

**28.** Dispositif de la revendication 14, où a vaut 1 ; chaque D est un oxygène, chaque L représente -BRB'- ; chaque B et B représente -C(O)NH- avec l'atome d'azote lié à R ; chaque R représente

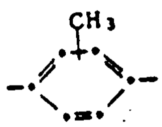 ;

chaque $R^1$ et $R^2$ est un méthyle ; h et i valent chacun 4 ; v vaut d'environ 15 o environ 50 ; (x + y + z) multiplié par q vaut d'environ 25 à environ 75 ; et
a) chaque b, d et f vaut 1 et $R^3$-$R^{20}$ sont des hydrogènes ; ou
b) chaque b, d, et f vaut zéro ; chaque $R^3$, $R^4$, $R^8$-$R^{10}$, $R^{14}$-$R^{16}$ et $R^{20}$ est un hydrogène ; et chaque $R^7$, $R^{13}$ et $R^{19}$ est un méthyle ; c vaut 1, et $L_a$ représente -BRB'-

**29.** Dispositif ophtalmique mouillable, flexible, perméable à l'oxygène, essentiellement non-gonflable de la revendication 14, comprenant un polymère d'un monomère de formule Ic

$$L'\{(D\text{-}A\text{-}L)_e\text{-}S''\}_c L'' \qquad (Ic)$$

où e vaut zéro ou 1 ; S" est de formule $-(D\text{-}S'\text{-}L\text{-}D\text{-}A\text{-}L)_a$ telle définie dans la revendication 1 ;
chaque D, A, L, S', a et c est indépendamment tel que défini dans la revendication 14 ;
à condition que lorsque E = 1, le groupe L terminal (non compris L' et L") de formule Ic peut également être choisi parmi -BR- ;
L' est un hydrogène, P'-BRB'- ; ou P'-RB'- ;
L" représente P' ; ou, dans le cas où e vaut zéro également D-S'-BR-P' ou D-S'-BRB'-P'- ; et P' est un hydrogène, amino, hydroxy ou une partie contenant un groupe réticulable qui peut être réticulée lorsqu'on la fait coréagir avec un agent réticulant approprié ou lorsqu'on l'irradie par un rayonnement actinique.

**30.** Dispositif de la revendication 29, où a vaut 1.

**31.** Dispositif de la revendication 29 où chaque D est un oxygène.

**32.** Dispositif de la revendication 29, où chaque L représente -BRB'-, chaque B et B' représente -C(O)NH- où l'atome d'azote est lié à R, et R représente

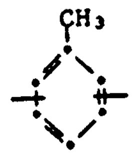 .

**33.** Dispositif de la revendication 29, où R représente

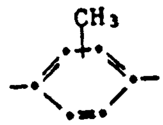 .

**34.** Dispositif de la revendication 29, où chaque $R^1$ et $R^2$ est un méthyle.

**35.** Dispositif de la revendication 29, où h et i valent 4.

**36.** Dispositif de la revendication 29, où v vaut d'environ 15 à environ 50.

**37.** Dispositif de la revendication 29, où h vaut 4 ; v vaut 4 ; et v vaut d'environ 15 à environ 50.

**38.** Dispositif de la revendication 29, où $(x + u + z)$ multiplié par q vaut d'environ 25 à environ 75.

**39.** Dispositif de la revendication 29, oùa) chaque b, d et f vaut 1 et $R^3$-$R^{20}$ sont tous des hydrogènes ou bà chaque b, d et f vaut zéro, chaque $R^3$, $R^4$, $R^8$-$R^{10}$, $R^{14}$-$R^{16}$ et $R^{20}$ est un hydrogène, et chaque $R^7$, $R^{13}$ et $R^{19}$ est un méthyle.

**40.** Dispositif de la revendication 39, où $(x + y + z)$ multiplié par q vaut d'environ 25 à environ 75.

**41.** Dispositif de la revendication 29, où c vaut 1.

**42.** Dispositif de la revendication 29, où L' représente P'-BRB'-.

**43.** Dispositif de la revendication 29, où L" représente -D-S'-BRB'-P'.

**44.** Dispositif de la revendication 29, dans lequel chaque P' représente

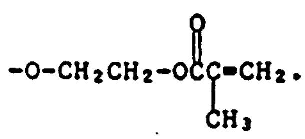

**45.** Dispositif de la revendication 29, où
a vaut 1 ; chaque D est un oxygène ; chaque L est un -BRB' ; chaque B et B' vaut -C(O)NH- avec l'atome d'azote lié à R ; chaque R représente

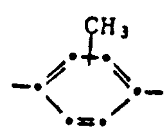 ;

chaque $R^1$ et $R^2$ est un méthyle ; h et i valent chacun 4 ; v vaut d'environ 15 à environ 50 : (x+y+z) multiplié par q vaut d'environ 25 à environ 75 ;
et

a) chaque b, d et f vaut 1 et $R^3$-$R^{20}$ est un hydrogène ; ou

b) chaque b, d, et f vaut zéro ; chaque $R^3$, $R^4$, $R^6$-$R^{10}$, $R^{14}$-$R^{16}$ et $R^{20}$ est un hydrogène, et chaque $R^7$, et $R^{13}$ et $R^{19}$ est un méthyle ;

L' représente P'-BRB' ; et P' représente

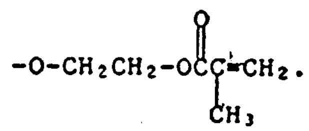

**46.** Dispositif de la revendication 29, où c vaut 1 et L" représente -D-S'-BRB'-P'.

**47.** Utilisation d'un dispositif selon l'une des revendications 1 à 46, ou 48 à 52 pour la correction des défauts visuels.

**48.** Dispositif de la revendication 1, où chaque A est de formule V

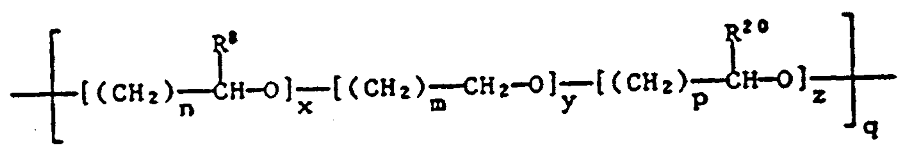
(V)

où n, m, et p valent indépendamment 1 - 3 ; et x, y, z et q sont tels que définis dans la revendication 1, à condition que chacun d'entre eux soit supérieur à zéro ; $R^8$ et $R^{20}$ représentent des alcoyles ayant jusqu'à six atomes de carbone ; ou de formule VI

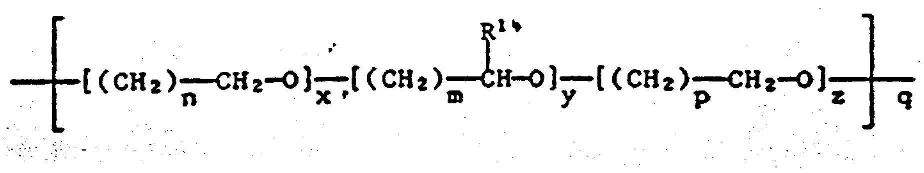
(VI)

où n, m, p, x, y, z et q sont tels que définis ci-dessus pour la formule V et $R^{14}$ est un alcoyle ayant jusqu'à six atomes de carbone.

**49.** Dispositif de la revendication 48, où dans la formule V, chacun des symboles n, m et p vaut 1 et x, y, z et q sont tels que définis dans la revendication 48, et $R^8$ et $R^{20}$ sont un méthyle et où dans la formule VI chaque n, m et p vaut 1, x, y, z et q sont tels que définis dans la revendication 48, et $R^{14}$ est un méthyle.

**50.** Dispositif de la revendication 49, où q vaut 1.

**51.** Dispositif de la revendication 49, où x et z dans chaque A sont identiques.

**52.** Dispositif de la revendication 49, où chaque x et chaque z a la même valeur.

**53.** Procédé de préparation d'un polymère optiquement clair, mouillable, flexible, essentiellement non-gonflable, perméable à l'oxygène, d'un monomère réticulable ayant un segment S" de formule I,

-(W-S'-L-D-A-L)$_a$-    (Ia)

où a vaut de 1 à 10 ;
chaque D représente indépendamment un oxygène, ou - N($R^{21}$)-;
chaque S' représente indépendamment un segment de formle II,

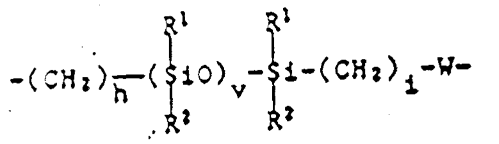

(II

chaque A représente indépendamment un segment de formule III,

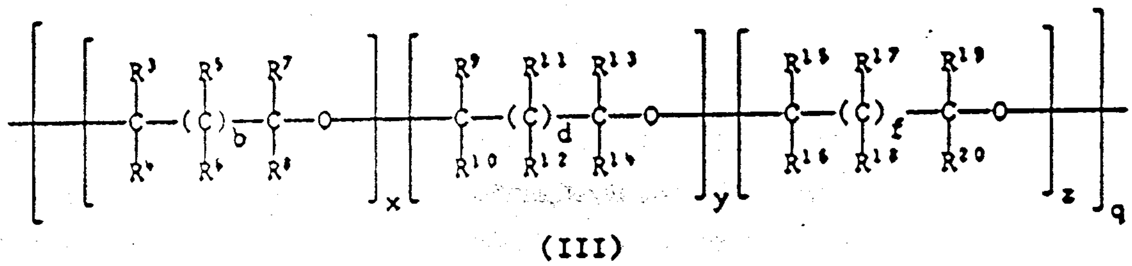

(III)

l'oxygène terminal dans chaque unité de formule II et III étant remplaçable par -N($R^{21}$)- ;
chaque L représente indépendamment -BRB'-, le groupe L-terminal dans n'importe quel monomère de formule I pouvant également être -BR- ;
l'oxygène terminal dans chaque unité de formule III étant remplaçable par -N($R^{21}$)- ;
où chaque b, d et f vaut indépendamment 0-4 ; q est un nombre allant de 1 à 1000 ; chaque x, y et z vaut indépendamment 0 à 1 00, à condition qu'au moins un des symboles x, y et z vale au moins 1 ; de manière que (x+y+z) multiplié par q vaille de 4 à 1000 ; chaque h et est un nombre entier allant de 1 à 6, v est un nombre entier allant de 2 à 75 ; $R^1$ et $R^2$ représentent indépendamment un alcoyle ayant jusqu'à 18 atomes de carbone, ou un aryle ayant jusqu'à 12 atomes de carbone ;
chacun des radicaux $R^3$, $R^4$, $R^7$-$R^{10}$, $R^{13}$-$R^{16}$ et $R^{20}$ est indépendamment choisi dans le groupe constitué par hydrogène, halogène un radical aliphatique, aromatique ou hétérocyclique choisi parmi : alcoyle en $C_{1-16}$ non-substitué ; alcoyle en $C_{1-16}$ substitué ; alcényle en $C_{2-16}$ non substitué ; et alcényle en $C_{2-16}$ substitué où les substituants alcoyle et alcényle sont choisis indépendamment parmi un alcoxy en $C_{1-16}$-carbonyle, alcényloxy en $C_{2-16}$-carbonyle, fluoro, aryle ayant jusqu'à 10 atomes de carbone, alcoxy en $C_{1-16}$, de préférence en $C_{1-8}$, alcanoyloxy en $C_{1-16}$, aryloxy ayant jusqu'à 10 atomes de carbone, alcénoyloxy en $C_{3-6}$, aroyle ayant jusqu'à 10 atomes de carbone, aroyloxy ayant jusqu'à 11 atomes de carbone, cycloalcoyle en $C_{3-8}$, cycloalcoxy en $C_{3-8}$, cycloalcoyle en $C_{3-8}$-carbonyloxy, cycloalcoxy en $C_{3-8}$-carbonyle, oxacycloalcoyle ayant jusqu'à 7 atomes de carbone, oxacycloalcoxy ayant jusqu'à 7 atomes de carbone, oxacycloalcoxy (jusqu'à 7 atomes de carbone)-carbonyle, oxacycloalcoyle (jusqu'à 7 atomes de carbone)-carbonyloxy et aryl (jusqu'à 10 atomes de carbone)-oxy-carbonyle, chacun desdits substituants alcoyle et alcényle étant à son tour éventuellement substitué par un alcoyle en $C_{1-6}$, un fluoro ou un alcoxy en $C_{1-6}$ à condition que ledit alcoxy mentionné en dernier ne soit pas lié à un atome de carbone déjà lié par une liaison simple à un autre atome d'oxygène ;
$R^3$, $R^4$, $R^{7-10}$, $R^{13-16}$, $R^{19}$ et $R^{20}$ étant en outre indépendamment choisis parmi aryle ayant jusqu'à 10 atomes de carbone, cycloalcoyle en $C_{3-8}$, et oxacycloalcoyle ayant jusqu'à 7 atomes de carbone, dont chacun peut être non substitué ou encore substitué par un substituant choisi dans le groupe des substituants pour ledit $R^3$ alcoyle exposé ci-dessus ;
$R^5$, $R^6$, $R^{11}$, $R^{12}$, $R^{17}$ et $R^{18}$ sont choisis dans le même groupe que celui présenté ci-dessus pour $R^3$ ; et $R^5$, $R^6$, $R^{11}$, $R^{12}$, $R^{17}$ et $R^{18}$ sont en outre indépendamment choisis parmi alcoxy en $C_{1-16}$-carbonyle, alcénoyloxy en $C_{3-16}$, alcényloxy en $C_{2-16}$-carbonyle, et alcanoyloxy en $C_{1-16}$ et chacun d'entre eux peut être en outre substitué par un fluoro, un aryle allant jusqu'à 10 atomes de carbone, un alcoxy en

$C_{1-16}$ et $R^5$, $R^6$, $R^{11}$, $R^{12}$ $R^{17}$ et $R^{18}$ sont encore en outre indépendamment choisis parmi aryloxy allant jusqu'à 10 atomes de carbone, cycloalcoxy allant jusqu'à 8 atomes de carbone, cycloalcoyle (allant jusqu'à 8 atomes de carbone)-carbonyloxy, cycloalcoxy (allant jusqu'à 8 atomes de carbone)-carbonyle, aroyloxy allant jusqu'à 11 atomes de carbone, oxacycloalcoxy allant jusqu'à 7 atomes de carbone, oxacycloalcényloxy allant jusqu'à 7 atomes de carbone, oxacycloalcoxy (allant jusqu'à 7 atomes de carbone)-carbonyle, oxycycloalcoyle (allant jusqu'à 7 atomes de carbone)-carbonyloxy, et aryloxy (allant jusqu'à 10 atomes de carbone)-carbonyle, dont chacun peut être en outre substitué par un fluoro, alcoyle en $C_{1-6}$ ou alcoxy en $C_{1-6}$,
à condition que tout substituant ayant un atome d'oxygène comme liaison au reste de la molécule ne peut pas être un substituant sur le même atome de carbone qui est lié par une liaison simple à un autre atome d'oxygène ; en outre, deux groupes adjacents, choisis parmi $R^3$ à $R^{20}$, ensemble avec les atomes auxquels ils sont attachés, peuvent former un noyau cycloalcoyle, oxacycloalcoyle, ou bicycloalcoyle à 5 à 8 chaînons ; et chaque $R^{21}$ est indépendamment choisi parmi hydrogène, alcoyle en $C_{1-4}$ et phényle

chaque B et B' est choisi parmi

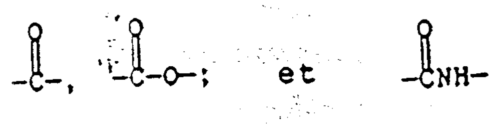
et

le groupe carbonyle étant lié à A, S' ou D ;
et chaque R est indépendamment un groupe de liaison bivalent chosi parmi

a) un groupe aliphatique bivalent allant jusqu'à 25 atomes de carbone, qui peut être interrompu par un oxy, carbonyloxy, amino, aminocarbonyle, oxycarbonyle, uréido, oxycarbonylamino- ou carbonylamino ;
b) un groupe cycloaliphatique bivalent à 5 à 7 chaînons ayant de 5 à 25 atomes de carbone ;
c) un groupe arylène bivalent ayant de 6 à 25 atomes de carbone ; et
d) un groupe aralcoyle ou aryle différent ayant de 7 à 25 atomes de carbone ; où les groupes b) et d) peuvent être éventuellement interrompus par les mêmes groupes que dans le groupe a) et où les noyaux aryle dans les groupes c) et d) peuvent être encore substitués par un ou plusieurs substituants choisis parmi halogène, alcoyle en $C_{1-4}$ et perhalo-alcoyle en $C_{1-12}$ ; ledit dispositif ayant un angle de contact de fuite inférieur à 60$^\circ$, ayant absorbé moins d'environ 10% d'eau dans son état gonflé ; et ayant un Dk x $10^{-10}$ (mm.ml $O_2$/$cm^2$.sec. mmHg) d'au moins environ 7 par réaction de l'intermédiaire requis de manière connue.

**54.** Procédé de la revendication 53, dans lequel ledit polymère essentiellement non-gonflable est
a) préparé à partir d'un monomère réticulable de formule partielle Ia,

$-(D\text{-}A\text{-}L\text{-}S")_c-$ (Ia)

où chaque S" est indépendamment un segment de formule I de la revendication 53 ; chaque D, A et L est indépendamment tel que défini dans la revendication 53 ;
c vaut 1-10 ; et a multiplié par c vaut de 1 à 10 ;
ou
b) préparé à partir d'un monomère réticulable ayant la formule partielle Ib

$-(S")_c\text{-}D\text{-}S'\text{-}L_a-$ (Ib)

où $L_a$ est choisi parmi -BRB'-, et -BR- ; B, R, B' et S' sont tels que définis dans la revendication 53, et où S", c, D, A et L sont tels que définis ci-dessus.

**55.** Procédé de la revendication 53, dans lequel ledit polymère mouillable, flexible, perméable à l'oxygène, essentiellement non-gonflable, est préparé à partir d'un monomère ayant la formule Ic

$L'\{(D-A-L)_e-S"\}_cL"$ (Ic)

où e vaut zéro ou 1 ; S" est de formule $-(D-S'-L-D-A-L)_a$ telle que définie dans la revendication 54 ; chaque D, A, L, S', a et c est indépendamment tel que défini dans la revendication 53 ;
à condition que lorsque e = 1, le groupe L terminal (non compris L' et L") de formule Ic peut également être choisi parmi -BR- ;
L' est un hydrogène, P'-BRB4- ; ou P'-RB'- ;
L" représente -P' ; ou, dans le cas où e vaut zéro, également D-S'-BR-P' ou D-S'-BRB'-P'- ; et P' est un hydrogène, amino, hydroxy, ou une fraction contenant un groupe réticulable qui peut être réticulée lorsqu'on la fait coréagir avec un agent réticulant approprié ou lorsqu'on l'irradie par un rayonnement actinique.

## Patentansprüche

**Patentansprüche für folgende Vertragsstaaten : AT, BE, CH, DE, FR, GB, GR, IT, LI, LU, NL, SE**

**1.** Optisch klares, benetzbares, flexibles, im wesentlichen in der wäßrigen okularen Tränenflüssigkeit nicht quellbares, sauerstoffdurchlässiges ophthalmisches Mittel, umfassend ein vernetzbares Polymer aus einem vernetzbaren Monomer mit einem Segment S" der Formel I,
$-(D-S'-L-D-A-L)_a-$ (I) worin a 1 bis 10 ist; jedes D unabhängig Sauerstoff oder $-N(R^{21})-$ ist; jedes S' unabhängig ein Segment der Formel II ist,

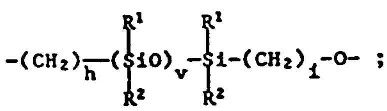

(II)

jedes A unabhängig ein Segment der Formel III ist,

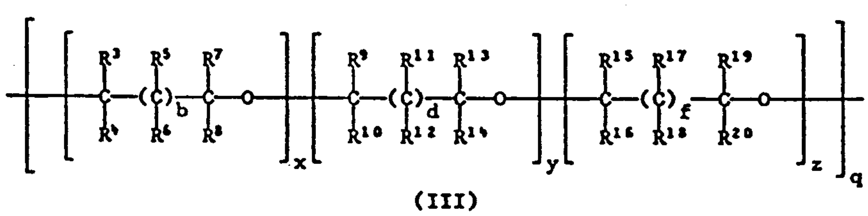

(III)

der endständige Sauerstoff innerhalb jeder Einheit der Formel II und III durch $-N(R^{21})-$ ersetzbar ist;
jedes L unabhängig -BRB'- ist, die endständige L-Gruppe innerhalb irgendeines Monomers der Formel I auch befähigt ist, -BR- zu sein;
worin jedes b, d und f unabhängig 0 - 4 ist; q eine Zahl von 1 bis 1000 ist; jedes x, y und z unabhängig 0 bis 100 ist, vorausgesetzt, daß wenigstens eines von x, y und z wenigstens 1 ist; sodaß (x + y + z) multipliziert mit q 4 bis 1000 ist;
jedes h und i eine ganze Zahl von 1 bis 6 ist, v eine ganze Zahl von 2 bis 75 ist;
$R^1$ und $R^2$ unabhängig Alkyl mit bis zu 18 Kohlenstoffatomen oder Aryl mit bis zu 12 Kohlenstoffatomen sind;
jedes von $R^3$, $R^4$, $R^7$-$R^{10}$, $R^{13}$-$R^{16}$, $R^{19}$ und $R^{20}$ unabhängig ausgewählt wird aus der Gruppe bestehend aus Wasserstoff, Halogen, einem aliphatische, aromatische oder heterocyclische Gruppe enthaltenden Rest ausgewählt aus unsubstituiertem $C_1$-$C_{16}$-Alkyl; substituiertem $C_1$-$C_{16}$-Alkyl; unsubstituiertem $C_2$-$C_{16}$-Alkenyl; und substituiertem $C_2$-$C_{16}$-Alkenyl; worin die Alkyl- und Alkenyl-Substituenten unabhängig ausgewählt werden aus $C_1$-$C_{16}$-Alkoxycarbonyl, $C_2$-$C_{16}$-Alkenyloxycarbonyl, Fluoro, Aryl mit bis zu 10 Kohlenstoffatomen, $C_1$-$C_{16}$-Alkoxy, $C_1$-$C_{16}$-Alkanoyloxy, Aryloxy mit bis zu 10 Kohlenstoffatomen, $C_3$-$C_6$-Alkenoyloxy, Aroyl mit bis zu 10 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy (bis zu 7 Kohlenstoffatome)-carbonyl, Oxacycloalkyl (bis zu 7 Kohlenstoffatome)-carbonyloxy und Aryl (mit bis zu 10 Kohlenstoffatomen)-oxycarbonyl, wobei jeder der genannten Alkyl- und Alkenyl-Substituenten seinerseits wahlweise substituiert ist durch $C_1$-$C_6$-Alkyl, Fluoro oder ein $C_1$-$C_6$-Alkoxy, vorausgesetzt, daß das letztgenannte Alkoxy nicht an ein Kohlenstoffatom gebunden ist, das schon einfach an ein anderes Sauerstoffatom gebunden ist;
$R^3$, $R^4$, $R^7$-$R^{10}$, $R^{13}$-$R^{16}$, $R^{19}$ und $R^{20}$ weiters unabhängig ausgewählt werden aus Aryl mit bis zu 10 Kohlenstoffatomen, $C_3$-$C_8$-Cycloalkyl und Oxacycloalkyl mit bis zu 7 Kohlenstoffatomen, von denen jedes unsubstituiert sein kann oder weiter substituiert durch einen Substituenten ausgewählt aus der Gruppe der Substituenten für das genannte $R^3$-Alkyl, die oben dargelegt werden;
$R^5$, $R^6$, $R^{11}$, $R^{12}$, $R^{17}$ und $R^{18}$ ausgewählt werden aus der gleichen Gruppe, die oben für $R^3$ dargelegt ist; und $R^5$, $R^6$, $R^{11}$, $R^{12}$, $R^{17}$ und $R^{18}$ weiters unabhängig ausgewählt werden aus $C_1$-$C_{16}$-Alkoxycarbonyl, $C_3$-$C_{16}$-Alkenoyloxy, $C_2$-$C_{16}$-Alkenyloxycarbonyl und $C_1$-$C_{16}$-Alkanoyloxy, von denen jedes weiter substituiert sein kann durch Fluor, Aryl mit bis zu 10 Kohlenstoffatomen, oder $C_1$-$C_{16}$-Alkoxy, und $R^5$, $R^6$, $R^{11}$, $R^{12}$, $R^{17}$ und $R^{18}$ weiter unabhängig ausgewählt werden aus Aryloxy mit bis zu 10 Kohlenstoffatomen, Cycloalkoxy mit bis zu 8 Kohlenstoffatomen, Cycloalkyl (mit bis zu 8 Kohlenstoffatomen)-carbonyloxy, Cycloalkoxy (mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy (mit bis zu 7 Kohlenstoffatomen)-carbonyl, Oxacycloalkyl (mit bis zu 7 Kohlenstoffatomen)-carbonyloxy und Aryloxy (mit bis zu 10 Kohlenstoffatomen)-carbonyl, von denen jedes weiter substituiert sein kann durch Fluor, $C_1$-$C_6$-Alkyl oder $C_1$-$C_6$-Alkoxy, vorausgesetzt, daß ein Substituent, der ein einfach gebundenes Sauerstoffatom an der Verbindung zum Rest des Moleküls hat, nicht ein Substituent am gleichen Kohlenstoffatom sein kann, das einfach an ein anderes Sauerstoffatom gebunden ist; oder 2 benachbarte Gruppen ausgewählt aus $R^3$-$R^{20}$ zusammen mit den Atomen, an die sie gebunden sind, einen 5-8gliedrigen Cycloalkyl-, Oxacycloalkyl- oder Bicycloalkylring bilden können; $R^{21}$ unabhängig ausgewählt wird aus Wasserstoff, $C_1$-$C_4$-Alkyl und Phenyl; und worin jedes B und B' ausgewählt wird aus

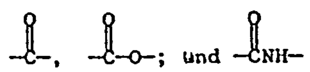

wobei die Carbonylgruppe an A, S' oder D gebunden ist;
jedes R unabhängig eine divalente Verknüpfungsgruppe ist, die ausgewählt wird aus

a) einer divalenten aliphatischen Gruppe mit bis zu 25 Kohlenstoffatomen, die durch Oxy, Carbonyloxy, Amino, Aminocarbonyl, Oxycarbonyl, Ureido, Oxycarbonylamino oder Carbonylamino unterbrochen sein kann;
b) einer divalenten 5-7gliedrigen cycloaliphatischen Gruppe mit 5 - 25 Kohlenstoffatomen;
c) einer divalenten Arylengruppe mit 6 - 25 Kohlenstoffatomen; und
d) einer divalenten Aralkyl- oder Alkarylgruppe mit 7 - 25 Kohlenstoffatomen;

worin die Gruppen b) und d) wahlweise unterbrochen sein können durch die gleichen Gruppen wie in Gruppe a) und worin die Arylringe in den Gruppen c) und d) weiters substituiert sein können mit einem oder mehreren Substituenten ausgewählt aus Halogen, $C_1$-$C_4$-Alkyl und $C_1$-$C_{12}$-Perhaloalkyl; dieses Mittel einen zurückweichenden Kontaktwinkel von weniger als 60° hat; weniger als etwa 10% Wasser im gequollenen Zustand absorbiert hat und Dk x$10^{-10}$ (mm.ml $O_2$/$cm^2$.s.mmHg) von wenigstens etwa 7 hat.

**2.** Mittel nach Anspruch 1, worin a 1 ist.

**3.** Mittel nach Anspruch 1, worin jedes D Sauerstoff ist.

**4.** Mittel nach Anspruch 1, worin jedes L gleich -BRB'-, jedes 19 und B' gleich -C(O)NH-, worin das Stickstoffatom an R gebunden ist, und R gleich

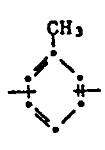

ist.

**5.** Mittel nach Anspruch 4, worin R für

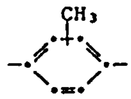

steht.

**6.** Mittel nach Anspruch 1, worin jedes $R^1$ und $R^2$ Methyl ist.

**7.** Mittel nach Anspruch 1, worin h und i jedes 4 sind.

**8.** Mittel nach Anspruch 1, worin v etwa 15 bis etwa 50 beträgt.

**9.** Mittel nach Anspruch 6, worin h 4 ist; i 4 ist und v etwa 15 bis etwa 50 ist.

**10.** Mittel nach Anspruch 1, worin (x + y + z) multipliziert mit q etwa 25 bis etwa 75 ist.

**11.** Mittel nach Anspruch 1, worin
a) jedes b, d und f 1 ist und $R^3$-$R^{20}$ alle Wasserstoff sind oder
b) jedes b, d und f Null ist, jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist.

**12.** Mittel nach Anspruch 11, worin (x + y + z) multipliziert mit q etwa 25 bis etwa 75 ist.

**13.** Mittel nach Anspruch 1, worin a 1 ist; jedes D Sauerstoff ist; jedes L gleich -BRB'- ist; jedes B und B' gleich -C(O)NH- ist, wobei das Stickstoffatom an R gebunden ist; jedes R gleich

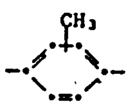 ;

ist; jedes $R^1$ und $R^2$ Methyl ist; h und i jedes 4 sind; v etwa 15 bis etwa 50 ist; (x + y + z) multipliziert mit q etwa 25 bis etwa 75 ist; und
a) jedes b, d und f 1 ist und $R^3$-$R^{20}$ alle Wasserstoff sind; oder
b) jedes b, d und f Null ist; jedes $R^3$, $R^4$, $R^8$-$R^{10}$, $R^{14}$-$R^{16}$ und $R^{20}$ Wasserstoff ist; und jedes $R^7$, $R^{13}$ und $R^{19}$ Methyl ist.

**14.** Benetzbares, flexibles, sauerstoffdurchlässiges, im wesentlichen nicht quellbares ophthalmisches Mittel nach Anspruch 1,
a) umfassend ein Polymer aus einem vernetzbaren Monomer mit einer Teilformel Ia
-(D-A-L-S")c- (Ia) worin jedes S" unabhängig ein Segment der Formel I von Anspruch 1 ist; jedes D, A und L unabhängig wie im Anspruch 1 definiert ist; c 1 - 10 ist; und a mal c 1 - 10 ist; oder
b) umfassend ein Polymer aus einem vernetzbaren Monomer mit einer Teilformel Ib
-$(S")_c$-D-S'-La- (Ib) worin $L_a$ ausgewählt wird aus -BRB'- und -BR-; B, R, B' und S' wie im Anspruch 1 definiert sind und S", c, D, A und L wie oben definiert sind.

**15.** Mittel nach Anspruch 14, worin a 1 ist.

**16.** Mittel nach Anspruch 14, worin jedes D Sauerstoff ist.

**17.** Mittel nach Anspruch 14, worin jedes L gleich -BRB'-, jedes B und B' gleich -C(O)NH-, worin das Stickstoffatom an R gebunden ist, und R gleich

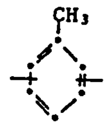

ist.

**18.** Mittel nach Anspruch 14, worin R für

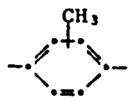

steht.

**19.** Mittel nach Anspruch 14, worin jedes $R^1$ und $R^2$ Methyl ist.

**20.** Mittel nach Anspruch 14, worin h und i jedes 4 sind.

**21.** Mittel nach Anspruch 14, worin v etwa 15 bis etwa 50 beträgt.

**22.** Mittel nach Anspruch 14, worin h 4 ist; i 4 ist und v etwa 15 bis etwa 50 ist.

**23.** Mittel nach Anspruch 14, worin (x + y + z) multipliziert mit q etwa 25 bis etwa 75 ist.

**24.** Mittel nach Anspruch 14, worin
a) jedes b, d und f 1 ist und $R^3$-$R^{20}$ alle Wasserstoff sind oder
b) jedes b, d und f Null ist, jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist.

**25.** Mittel nach Anspruch 24, worin (x + y + z) multipliziert mit q etwa 25 bis etwa 75 ist.

**26.** Mittel nach Anspruch 14 oder 24, worin c 1 ist.

**27.** Mittel nach Anspruch 14, worin $L_a$ gleich -BRB'- ist.

**28.** Mittel nach Anspruch 14, worin a 1 ist; jedes D Sauerstoff ist; jedes L gleich -BRB'- ist; jedes B und B' gleich -C(O)NH- ist, wobei das Stickstoffatom an R gebunden ist; jedes R gleich

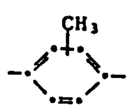 ;

ist; jedes $R^1$ und $R^2$ Methyl ist; h und i jedes 4 sind; v etwa 15 bis etwa 50 ist; (x + y + z) multipliziert mit q etwa 25 bis etwa 75 ist; und
a) jedes b, d und f 1 ist und $R^3$-$R^{20}$ alle Wasserstoff sind; oder
b) jedes b, d und f Null ist; jedes $R^3$, $R^4$, $R^8$-$R^{10}$, $R^{14}$-$R^{16}$ und $R^{20}$ Wasserstoff ist; und jedes $R^7$, $R^{13}$ und $R^{19}$ Methyl ist; c 1 ist; und $L_a$ gleich -BRB'- ist.

**29.** Benetzbares, flexibles, sauerstoffdurchlässiges, im wesentlichen nicht quellbares ophthalmisches Mittel nach Anspruch 14, umfassend ein Polymer aus einem Monomer mit der Formel Ic

$L'\{(D\text{-}A\text{-}L)_e\text{-}S''\}L''$ (Ic)

worin e 0 oder 1 ist; S" die Formel $-(D-S'-L-D-A-L)_a$ wie im Anspruch 1 definiert hat; jedes D, A, L S', a und c unabhängig wie im Anspruch 14 definiert ist;
vorausgesetzt, daß, wenn e = 1, die endständige L-Gruppe (exklusive L' und L") der Formel Ic auch aus -BR- ausgewählt werden kann;
L' Wasserstoff, P'-BRB'- oder P'-RB'- ist;
L'' gleich -P' ist; oder, im Falle, daß e Null ist, auch D-S'-BR-P' oder D-S'-BRB'-P'; und P' ist Wasserstoff, Amino, Hydroxy oder eine Einheit, die eine vernetzbare Gruppe enthält, die vernetzt werden kann, wenn sie mit einem geeigneten Vernetzungsmittel coreagiert oder mit wirksamer Strahlung bestrahlt wird.

**30.** Mittel nach Anspruch 29, worin a 1 ist.

**31.** Mittel nach Anspruch 29, worin jedes D Sauerstoff ist.

**32.** Mittel nach Anspruch 29, worin jedes L gleich -BRB'-, jedes B und B' gleich -C(O)NH-, worin das Stickstoffatom an R gebunden ist, und R gleich

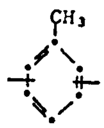

ist.

**33.** Mittel nach Anspruch 29, worin R für

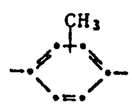

steht.

**34.** Mittel nach Anspruch 29, worin jedes $R^1$ und $R^2$ Methyl ist.

**35.** Mittel nach Anspruch 29, worin h und i jedes 4 sind.

**36.** Mittel nach Anspruch 29, worin v etwa 15 bis etwa 50 beträgt.

**37.** Mittel nach Anspruch 29, worin h 4 ist; i 4 ist und v etwa 15 bis etwa 50 ist.

**38.** Mittel nach Anspruch 29, worin (x + y + z) multipliziert mit q etwa 25 bis etwa 75 ist.

**39.** Mittel nach Anspruch 29, worin
a) jedes b, d und f 1 ist und $R^3$-$R^{20}$ alle Wasserstoff sind, oder
b) jedes b, d und f Null ist, jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist.

**40.** Mittel nach Anspruch 39, worin (x + y + z) multipliziert mit q etwa 25 bis etwa 75 ist.

**41.** Mittel nach Anspruch 29, worin c 1 ist.

**42.** Mittel nach Anspruch 29, worin L' gleich P'-BRB'- ist.

**43.** Mittel nach Anspruch 29, worin L" gleich -D-S'-BRB'-P' ist.

**44.** Mittel nach Anspruch 29, worin jedes P'

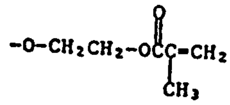

ist.

**45.** Mittel nach Anspruch 29, worin a 1 ist; jedes D Sauerstoff ist; jedes L gleich -BRB'- ist; jedes B und B' gleich -C(O)NH- ist, wobei das Stickstoffatom an R gebunden ist; jedes R gleich

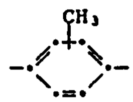 ;

ist; jedes $R^1$ und $R^2$ Methyl ist; h und i jedes 4 sind; v etwa 15 bis etwa 50 ist; (x + y + z) multipliziert mit q etwa 25 bis etwa 75 ist; und

a) jedes b, d und f ist und $R^3$-$R^{20}$ alle Wasserstoff sind; oder

b) jedes b, d und f Null ist; jedes $R^3$, $R^4$, $R^8$-$R^{10}$, $R^{14}$-$R^{16}$ und $R^{20}$ Wasserstoff ist; und jedes $R^7$, $R^{13}$ und $R^{19}$ Methyl ist;

L' gleich P'-BRB'- ist; und P' gleich

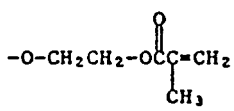

ist.

**46.** Mittel nach Anspruch 29, worin c 1 ist und L" für -D-S'-BRB'-P' steht.

**47.** Verwendung eines Mittels nach Anspruch 1 bis 46 oder 48 bis 52 für das Korrigieren von Sehfehlern.

**48.** Mittel nach Anspruch 1, worin jedes A die Formel V hat,

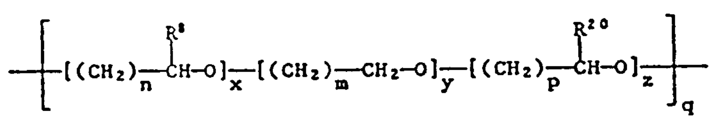 (V)

worin n, m und p unabhängig 1 - 3 sind; und x, y, z und q wie im Anspruch 1 definiert sind, vorausgesetzt, daß jedes von ihnen größer als 0 ist; $R^8$ und $R^{20}$ Alkyl mit bis zu 6 Kohlenstoffatomen sind; oder die Formel VI hat,

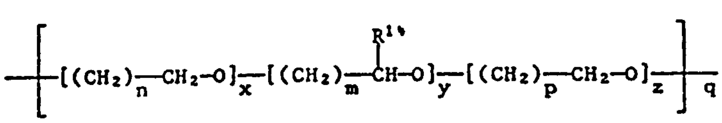 (VI)

worin n, m, p, x, y, z und q wie oben für die Formel V definiert sind und $R^{14}$ Alkyl mit bis zu 6 Kohlenstoffatomen ist.

**49.** Mittel nach Anspruch 48, worin in der Formel V jedes von n, m und p 1 ist, x, y, z und q wie im Anspruch 48 definiert sind, und $R^8$ und $R^{20}$ Methyl sind und worin in der Formel VI jedes von n, m und p 1 ist, x, y, z und q wie im Anspruch 48 definiert sind und $R^{14}$ Methyl ist.

**50.** Mittel nach Anspruch 49, worin q 1 ist.

**51.** Mittel nach Anspruch 49, worin x und z innerhalb irgendeines A gleich sind.

**52.** Mittel nach Anspruch 49, worin jedes x und jedes z den gleichen Wert hat.

**53.** Optisch klares, benetzbares, flexibles, im wesentlichen nicht quellbares, sauerstoffdurchlässiges Polymer aus einem vernetzbaren Monomer mit einem Segment S" der Formel I, $-(D\text{-}S'\text{-}L\text{-}D\text{-}A\text{-}L)_a-$ (I) worin a 1 bis 10 ist; jedes D unabhängig Sauerstoff oder $-N(R^{21})-$ ist; jedes S' unabhängig ein Segment der Formel II ist,

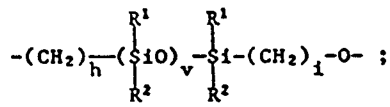 (II)

jedes A unabhängig ein Segment der Formel III ist,

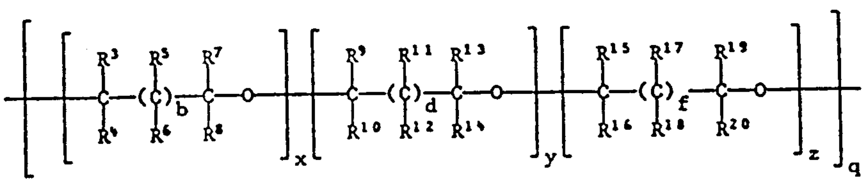

(III)

der endständige Sauerstoff innerhalb jeder Einheit der Formel II und III durch $-N(R^{21})-$ ersetzbar ist; jedes L unabhängig -BRB'- ist, die endständige L-Gruppe innerhalb irgendeines Monomers der Formel I auch befähigt ist, -BR- zu sein;
worin jedes b, d und f unabhängig 0 - 4 ist; q eine Zahl von 1 bis 1000 ist; jedes x, y und z unabhängig 0 bis 100 ist, vorausgesetzt, daß wenigstens eines von x, y und z wenigstens 1 ist; sodaß (x + y + z) multipliziert mit q 4 bis 1000 ist;
jedes h und i eine ganze Zahl von 1 bis 6 ist, v eine ganze Zahl von 2 bis 75 ist;
$R^1$ und $R^2$ unabhängig Alkyl mit bis zu 18 Kohlenstoffatomen oder Aryl mit bis zu 12 Kohlenstoffatomen sind;
jedes von $R^3$, $R^4$, $R^7$-$R^{10}$, $R^{13}$-$R^{16}$, $R^{19}$ und $R^{20}$ unabhängig ausgewählt wird aus der Gruppe bestehend aus Wasserstoff, Halogen, einem aliphatische, aromatische oder heterocyclische Gruppe enthaltenden Rest ausgewählt aus unsubstituiertem $C_1$-$C_{16}$-Alkyl; substituiertem $C_1$-$C_{16}$-Alkyl; unsubstituiertem $C_2$-$C_{16}$-Alkenyl; worin die Alkyl- und Alkenyl-Substituenten unabhängig ausgewählt werden aus $C_1$-$C_{16}$-Alkoxycarbonyl, $C_2$-$C_{16}$-Alkenyloxycarbonyl, Fluoro, Aryl mit bis zu 10 Kohlenstoffatomen, $C_1$-$C_{16}$-Alkoxy, $C_1$-$C_{16}$-Alkanoyloxy, Aryloxy mit bis zu 10 Kohlenstoffatomen, $C_3$-$C_6$-Alkenoyloxy, Aroyl mit bis zu 10 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy (bis zu 7 Kohlenstoffatome)-carbonyl, Oxacycloalkyl (bis zu 7 Kohlenstoffatome)-carbonyloxy und Aryl (mit bis zu 10 Kohlenstoffatomen)-oxycarbonyl, wobei jeder der genannten Alkyl- und Alkenyl-Substituenten seinerseits wahlweise substituiert ist durch $C_1$-$C_6$-Alkyl, Fluoro oder ein $C_1$-$C_6$-Alkoxy, vorausgesetzt, daß das letztgenannte Alkoxy nicht an ein Kohlenstoffatom gebunden ist, das schon einfach an ein anderes Sauerstoffatom gebunden ist;
$R^3$, $R^4$, $R^7$-$R^{10}$, $R^{13}$-$R^{16}$, $R^{19}$ und $R^{20}$ weiters unabhängig ausgewählt werden aus Aryl mit bis zu 10 Kohlenstoffatomen, $C_3$-$C_8$-Cycloalkyl und Oxacycloalkyl mit bis zu 7 Kohlenstoffatomen, von denen

jedes unsubstituiert sein kann oder weiter substituiert durch einen Substituenten ausgewählt aus der Gruppe der Substituenten für das genannte $R^3$-Alkyl, die oben dargelegt werden;
$R^5$, $R^6$, $R^{11}$, $R^{12}$, $R^{17}$ und $R^{18}$ ausgewählt werden aus der gleichen Gruppe, die oben für $R^3$ dargelegt ist; und $R^5$, $R^6$, $R^{11}$, $R^{12}$, $R^{17}$ und $R^{18}$ weiters unabhängig ausgewählt werden aus $C_1$-$C_{16}$-Alkoxycarbonyl, $C_3$-$C_{16}$-Alkenoyloxy, $C_2$-$C_{16}$-Alkenyloxycarbonyl und $C_1$-$C_{16}$-Alkanoyloxy, von denen jedes weiter substituiert sein kann durch Fluor, Aryl mit bis zu 10 Kohlenstoffatomen, oder $C_1$-$C_{16}$-Alkoxy, und $R^5$, $R^6$, $R^{11}$, $R^{12}$, $R^{17}$ und $R^{18}$ weiter unabhängig ausgewählt werden aus Aryloxy mit bis zu 10 Kohlenstoffatomen, Cycloalkoxy mit bis zu 8 Kohlenstoffatomen, Cycloalkyl (mit bis zu 8 Kohlenstoffatomen)-carbonyloxy, Cycloalkoxy (mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy (mit bis zu 7 Kohlenstoffatomen)-carbonyl, Oxacycloalkyl (mit bis zu 7 Kohlenstoffatomen)-carbonyloxy und Aryloxy (mit bis zu 10 Kohlenstoffatomen)-carbonyl, von denen jedes weiter substituiert sein kann durch Fluor, $C_1$-$C_6$-Alkyl oder $C_1$-$C_6$-Alkoxy, vorausgesetzt, daß ein Substituent, der ein einfach gebundenes Sauerstoffatom an der Verbindung zum Rest des Moleküls hat, nicht ein Substituent am gleichen Kohlenstoffatom sein kann, das einfach an ein anderes Sauerstoffatom gebunden ist; oder 2 benachbarte Gruppen ausgewählt aus $R^3$-$R^{20}$ zusammen mit den Atomen, an die sie gebunden sind, einen 5-8gliedrigen Cycloalkyl-, Oxacycloalkyl- oder Bicycloalkylring bilden können; $R^{21}$ unabhängig ausgewählt wird aus Wasserstoff, $C_1$-$C_4$-Alkyl und Phenyl; und worin jedes B und B' ausgewählt wird aus

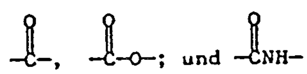

wobei die Carbonylgruppe an A, S' oder D gebunden ist;
jedes R unabhängig eine divalente Verknüpfungsgruppe ist, die ausgewählt wird aus

a) einer divalenten aliphatischen Gruppe mit bis zu 25 Kohlenstoffatomen, die durch Oxy, Carbonyloxy, Amino, Aminocarbonyl, Oxacarbonyl, Ureido, Oxycarbonylamino oder Carbonylamino unterbrochen sein kann;
b) einer divalenten 5-7gliedrigen cycloaliphatischen Gruppe mit 5 - 25 Kohlenstoffatomen;
c) einer divalenten Arylengruppe mit 6 - 25 Kohlenstoffatomen; und
d) einer divalenten Aralkyl- oder Alkarylgruppe mit 7 - 25 Kohlenstoffatomen;

worin die Gruppen b) und d) wahlweise unterbrochen sein können durch die gleichen Gruppen wie in Gruppe a) und worin die Arylringe in den Gruppen c) und d) weiters substituiert sein können mit einem oder mehreren Substituenten ausgewählt aus Halogen, $C_1$-$C_4$-Alkyl und $C_1$-$C_{12}$-Perhaloalkyl; dieses Polymer einen zurückweichenden Kontaktwinkel von weniger als 60° hat; weniger als etwa 10% Wasser im gequollenen Zustand absorbiert hat und Dk $x10^{-10}$ (mm.ml $O_2$/$cm^2$.s.mmHg) von wenigstens etwa 7 hat.

**54.** Benetzbares, flexibles, sauerstoffdurchlässiges, im wesentlichen nicht quellbares Polymer nach Anspruch 53,

a) aus einem vernetzbaren Monomer mit einer Teilformel Ia $-(D-A-L-S'')_c-$ (Ia)
worin jedes S" unabhängig ein Segment der Formel I von Anspruch 53 ist; jedes D, A und L unabhängig wie im Anspruch 53 definiert ist; c 1 - 10 ist; und a mal c 1 - 10 ist; oder
b) aus einem vernetzbaren Monomer mit einer Teilformel Ib $-(S'')_c-D-S'-L_a-$ (Ib)
worin $L_a$ ausgewählt wird aus -BRB'- und -BR-; B, R, B' und S' wie im Anspruch 53 definiert sind und S", c, D, A und L wie oben definiert sind.

**55.** Benetzbares, flexibles, sauerstoffdurchlässiges, im wesentlichen nicht quellbares Polymer nach Anspruch 54 aus einem Monomer mit der Formel Ic

$$L'-[(D-A-L)_e-S'']_c-L'' \qquad (Ic)$$

worin e 0 oder 1 ist; S" die Formel $-(D-S'-L-D-A-L)_a$ wie im Anspruch 54 definiert hat; jedes D, A, L, S', a und c unabhängig wie im Anspruch 53 definiert ist;

vorausgesetzt, daß, wenn e = 1, die endständige L-Gruppe (exklusive L' und L") der Formel Ic auch aus -BR- ausgewählt werden kann;
L' Wasserstoff, P'-BRB'- oder P'-RB'- ist;
L" gleich -P' ist; oder, im Falle, daß e Null ist, auch D-S'-BR-P' oder D-S'-BRB'-P'; und P' ist Wasserstoff, Amino, Hydroxy oder eine Einheit, die eine vernetzbare Gruppe enthält, die vernetzt werden kann, wenn sie mit einem geeigneten Vernetzungsmittel coreagiert oder mit wirksamer Strahlung bestrahlt wird.

**Patentansprüche für folgenden Vertragsstaat : ES**

1. Optisch klares, benetzbares, flexibles, im wesentlichen in der wäßrigen okularen Tränenflüssigkeit nicht quellbares, sauerstoffdurchlässiges ophthalmisches Mittel, umfassend ein vernetzbares Polymer aus einem vernetzbaren Monomer mit einem Segment S" der Formel I,
$-(D\text{-}S'\text{-}L\text{-}D\text{-}A\text{-}L)_a-$ (I) worin a 1 bis 10 ist; jedes D unabhängig Sauerstoff oder $-N(R^{21})-$ ist; jedes S' unabhängig ein Segment der Formel II ist,

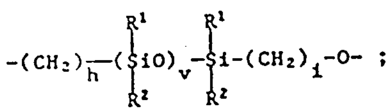

(II)

jedes A unabhängig ein Segment der Formel III ist,

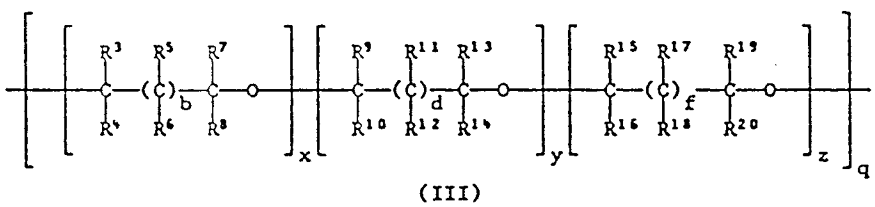

(III)

der endständige Sauerstoff innerhalb jeder Einheit der Formel II und III durch $-N(R^{21})-$ ersetzbar ist;
jedes L unabhängig -BRB'- ist, die endständige L-Gruppe innerhalb irgendeines Monomers der Formel I auch befähigt ist, -BR- zu sein;
worin jedes b, d und f unabhängig 0 - 4 ist; q eine Zahl von 1 bis 1000 ist; jedes x, y und z unabhängig 0 bis 100 ist, vorausgesetzt, daß wenigstens eines von x, y und z wenigstens 1 ist; sodaß (x + y + z) multipliziert mit q 4 bis 1000 ist;
jedes h und i eine ganze Zahl von 1 bis 6 ist, v eine ganze Zahl von 2 bis 75 ist;
$R^1$ und $R^2$ unabhängig Alkyl mit bis zu 18 Kohlenstoffatomen oder Aryl mit bis zu 12 Kohlenstoffatomen sind;
jedes von $R^3$, $R^4$, $R^7$-$R^{10}$, $R^{13}$-$R^{16}$, $R^{19}$ und $R^{20}$ unabhängig ausgewählt wird aus der Gruppe bestehend aus Wasserstoff, Halogen, einem aliphatische, aromatische oder heterocyclische Gruppe enthaltenden Rest ausgewählt aus unsubstituiertem $C_1$-$C_{16}$-Alkyl; substituiertem $C_1$-$C_{16}$-Alkyl; unsubstituiertem $C_2$-$C_{16}$-Alkenyl; und substituiertem $C_2$-$C_{16}$-Alkenyl; worin die Alkyl- und Alkenyl-Substituenten unabhängig ausgewählt werden aus $C_1$-$C_{16}$-Alkoxycarbonyl, $C_2$-$C_{16}$-Alkenyloxycarbonyl, Fluoro, Aryl mit bis zu 10 Kohlenstoffatomen, $C_1$-$C_{16}$-Alkoxy, $C_1$-$C_{16}$-Alkanoyloxy, Aryloxy mit bis zu 10 Kohlenstoffatomen, $C_3$-$C_6$-Alkenoyloxy, Aroyl mit bis zu 10 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy (bis zu 7 Kohlenstoffatome)-carbonyl, Oxacycloalkyl (bis zu 7 Kohlenstoffatome)-carbonyloxy und Aryl (mit bis zu 10 Kohlenstoffatomen)-oxycarbonyl, wobei jeder der genannten Alkyl- und Alkenyl-Substituenten seinerseits wahlweise substituiert ist durch $C_1$-$C_6$-Alkyl, Fluoro oder ein $C_1$-$C_6$-Alkoxy, vorausgesetzt, daß das letztgenannte Alkoxy nicht an ein Kohlenstoffatom gebunden ist, das schon einfach an ein anderes Sauerstoffatom gebunden ist;
$R^3$, $R^4$, $R^7$-$R^{10}$, $R^{13}$-$R^{16}$, $R^{19}$ und $R^{20}$ weiters unabhängig ausgewählt werden aus Aryl mit bis zu 10

Kohlenstoffatomen, $C_3$-$C_8$-Cycloalkyl und Oxacycloalkyl mit bis zu 7 Kohlenstoffatomen, von denen jedes unsubstituiert sein kann oder weiter substituiert durch einen Substituenten ausgewählt aus der Gruppe der Substituenten für das genannte $R^3$-Alkyl, die oben dargelegt werden;

$R^5$, $R^6$, $R^{11}$, $R^{12}$, $R^{17}$ und $R^{18}$ ausgewählt werden aus der gleichen Gruppe, die oben für $R^3$ dargelegt ist; und $R^5$, $R^6$, $R^{11}$, $R^{12}$, $R^{17}$ und $R^{18}$ weiters unabhängig ausgewählt werden aus $C_1$-$C_{16}$-Alkoxycarbonyl, $C_3$-$C_{16}$-Alkenoyloxy, $C_2$-$C_{16}$-Alkenyloxycarbonyl und $C_1$-$C_{16}$-Alkanoyloxy, von denen jedes weiter substituiert sein kann durch Fluor, Aryl mit bis zu 10 Kohlenstoffatomen, oder $C_1$-$C_{16}$-Alkoxy, und $R^5$, $R^6$, $R^{11}$, $R^{12}$, $R^{17}$ und $R^{18}$ weiter unabhängig ausgewählt werden aus Aryloxy mit bis zu 10 Kohlenstoffatomen, Cycloalkoxy mit bis zu 8 Kohlenstoffatomen, Cycloalkyl (mit bis zu 8 Kohlenstoffatomen)-carbonyloxy, Cycloalkoxy (mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlensloffatomen, Oxacycloalkoxy (mit bis zu 7 Kohlenstoffatomen)-carbonyl, Oxacycloalkyl (mit bis zu 7 Kohlenstoffatomen)-carbonyloxy und Aryloxy (mit bis zu 10 Kohlenstoffatomen)-carbonyl, von denen jedes weiter substituiert sein kann durch Fluor, $C_1$-$C_6$-Alkyl oder $C_1$-$C_6$-Alkoxy, vorausgesetzt, daß ein Substituent, der ein einfach gebundenes Sauerstoffatom an der Verbindung zum Rest des Moleküls hat, nicht ein Substituent am gleichen Kohlenstoffatom sein kann, das einfach an ein anderes Sauerstoffatom gebunden ist; oder 2 benachbarte Gruppen ausgewählt aus $R^3$-$R^{20}$ zusammen mit den Atomen, an die sie gebunden sind, einen 5-8gliedrigen Cycloalkyl-, Oxacycloalkyl- oder Bicycloalkylring bilden können; $R^{21}$ unabhängig ausgewählt wird aus Wasserstoff, $C_1$-$C_4$-Alkyl und Phenyl; und worin jedes B und B' ausgewählt wird aus

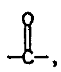 , 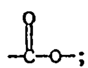 ; und 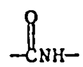

wobei die Carbonylgruppe an A, S' oder D gebunden ist;

jedes R unabhängig eine divalente Verknüpfungsgruppe ist, die ausgewählt wird aus

a) einer divalenten aliphatischen Gruppe mit bis zu 25 Kohlenstoffatomen, die durch Oxy, Carbonyloxy, Amino, Aminocarbonyl, Oxycarbonyl, Ureido, Oxycarbonylamino oder Carbonylamino unterbrochen sein kann;

b) einer divalenten 5-7gliedrigen cycloaliphatischen Gruppe mit 5 - 25 Kohlenstoffatomen;

c) einer divalenten Arylengruppe mit 6 - 25 Kohlenstoffatomen; und

d) einer divalenten Aralkyl- oder Alkarylgruppe mit 7 - 25 Kohlenstoffatomen;

worin die Gruppen b) und d) wahlweise unterbrochen sein können durch die gleichen Gruppen wie in Gruppe a) und worin die Arylringe in den Gruppen c) und d) weiters substituiert sein können mit einem oder mehreren Substituenten ausgewählt aus Halogen, $C_1$-$C_4$-Alkyl und $C_1$-$C_{12}$-Perhaloalkyl; dieses Mittel einen zurückweichenden Kontaktwinkel von weniger als $60^\circ$ hat; weniger als etwa 10% Wasser im gequollenen Zustand absorbiert hat und Dk $x10^{-10}$ (mm.ml $O_2$/$cm^2$.s.mmHg) von wenigstens etwa 7 hat.

**2.** Mittel nach Anspruch 1, worin a 1 ist.

**3.** Mittel nach Anspruch 1, worin jedes D Sauerstoff ist.

**4.** Mittel nach Anspruch 1, worin jedes L gleich -BRB'-, jedes B und B' gleich -C(O)NH-, worin das Stickstoffatom an R gebunden ist, und R gleich

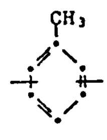

ist.

**5.** Mittel nach Anspruch 4, worin R für

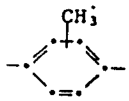

steht.

**6.** Mittel nach Anspruch 1, worin jedes $R^1$ und $R^2$ Methyl ist.

**7.** Mittel nach Anspruch 1, worin h und jedes 4 sind.

**8.** Mittel nach Anspruch 1, worin v etwa 15 bis etwa 50 beträgt.

**9.** Mittel nach Anspruch 6, worin h 4 ist; i 4 ist und v etwa 15 bis etwa 50 ist.

**10.** Mittel nach Anspruch 1, worin (x + y + z) multipliziert mit q etwa 25 bis etwa 75 ist.

**11.** Mittel nach Anspruch 1, worin
a) jedes b, d und f 1 ist und $R^3$-$R^{20}$ alle Wasserstoff sind oder
b) jedes b, d und f Null ist, jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist.

**12.** Mittel nach Anspruch 11, worin (x + y + z) multipliziert mit q etwa 25 bis etwa 75 ist.

**13.** Mittel nach Anspruch 1, worin a 1 ist; jedes D Sauerstoff ist; jedes L gleich -BRB'- ist; jedes B und B' gleich -C(O)NH- ist, wobei das Stickstoffatom an R gebunden ist; jedes R gleich

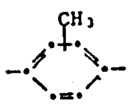 ;

ist; jedes $R^1$ und $R^2$ Methyl ist; h und i jedes 4 sind; v etwa 15 bis etwa 50 ist; (x + y + z) multipliziert mit q etwa 25 bis etwa 75 ist; und
a) jedes b, d und f 1 ist und $R^3$-$R^{20}$ alle Wasserstoff sind; oder
b) jedes b, d und f Null ist; jedes $R^3$, $R^4$, $R^8$-$R^{10}$, $R^{14}$-$R^{16}$ und $R^{20}$ Wasserstoff ist; und jedes $R^7$, $R^{13}$ und $R^{19}$ Methyl ist.

**14.** Benetzbares, flexibles, sauerstoffdurchlässiges, im wesentlichen nicht quellbares ophthalmisches Mittel nach Anspruch 1,
a) umfassend ein Polymer aus einem vernetzbaren Monomer mit einer Teilformel Ia
$(D\text{-}A\text{-}L\text{-}S'')_c$- (Ia) worin jedes S" unabhängig ein Segment der Formel I von Anspruch 1 ist; jedes D, A und L unabhängig wie im Anspruch 1 definiert ist; c 1 - 10 ist; und a mal c 1 - 10 ist; oder
b) umfassend ein Polymer aus einem vernetzbaren Monomer mit einer Teilformel Ib
$-(S'')_c\text{-}D\text{-}S'\text{-}L_a$- (Ib) worin $L_a$ ausgewählt wird aus -BRB'- und -BR-; B, R, B' und S' wie im Anspruch 1 definiert sind und S", c, 10, A und L wie oben definiert sind.

**15.** Mittel nach Anspruch 14, worin a 1 ist.

**16.** Mittel nach Anspruch 14, worin jedes D Sauerstoff ist.

**17.** Mittel nach Anspruch 14, worin jedes L gleich -BRB'-, jedes B und B' gleich -C(O)NH-, worin das Stickstoffatom an R gebunden ist, und R gleich

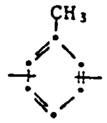

ist.

**18.** Mittel nach Anspruch 14, worin R für

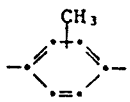

steht.

**19.** Mittel nach Anspruch 14, worin jedes $R^1$ und $R^2$ Methyl ist.

**20.** Mittel nach Anspruch 14, worin h und i jedes 4 sind.

**21.** Mittel nach Anspruch 14, worin v etwa 15 bis etwa 50 beträgt.

**22.** Mittel nach Anspruch 14, worin h 4 ist; i 4 ist und v etwa 15 bis etwa 50 ist.

**23.** Mittel nach Anspruch 14, worin (x + y + z) multipliziert mit q etwa 25 bis etwa 75 ist.

**24.** Mittel nach Anspruch 14, worin
a) jedes b, d und f 1 ist und $R^3$-$R^{20}$ alle Wasserstoff sind oder
b) jedes b, d und f Null ist, jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist.

**25.** Mittel nach Anspruch 24, worin (x + y + z) multipliziert mit q etwa 25 bis etwa 75 ist.

**26.** Mittel nach Anspruch 14 oder 24, worin c 1 ist.

**27.** Mittel nach Anspruch 14, worin $L_a$ gleich -BRB'- ist.

**28.** Mittel nach Anspruch 14, worin a 1 ist; jedes D Sauerstoff ist; jedes L gleich -BRB'- ist; jedes B und B' gleich -C(O)NH- ist, wobei das Stickstoffatom an R gebunden ist; jedes R gleich

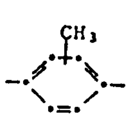 ;

ist; jedes $R^1$ und $R^2$ Methyl ist; h und i jedes 4 sind; v etwa 15 bis etwa 50 ist; (x + y + z) multipliziert mit q etwa 25 bis etwa 75 ist; und
a) jedes b, d und f 1 ist und $R^3$-$R^{20}$ alle Wasserstoff sind; oder
b) jedes b, d und f Null ist; jedes $R^3$, $R^4$, $R^8$-$R^{10}$, $R^{14}$-$R^{16}$ und $R^{20}$ Wasserstoff ist; und jedes $R^7$, $R^{13}$ und $R^{19}$ Methyl ist; c 1 ist; und $L_a$ gleich -BRB'- ist.

**29.** Benetzbares, flexibles, sauerstoffdurchlässiges, im wesentlichen nicht quellbares ophthalmisches Mittel nach Anspruch 14, umfassend ein Polymer aus einem Monomer mit der Formel Ic

L'{(D-A-L)$_e$-S"}L" (Ic)

worin e 0 oder 1 ist; S" die Formel -(D-S'-L-D-A-L)$_a$ wie im Anspruch 1 definiert hat; jedes D, A, L, S', a und c unabhängig wie im Anspruch 14 definiert ist;
vorausgesetzt, daß, wenn e = 1, die endständige L-Gruppe (exklusive L' und L") der Formel Ic auch aus -BR- ausgewählt werden kann;
L' Wasserstoff, P'-BRB'- oder P'-RB'- ist;
L" gleich -P' ist; oder, im Falle, daß e Null ist, auch D-S'-BR-P' oder D-S'-BRB'-P'; und P, ist Wasserstoff, Amino, Hydroxy oder eine Einheit, die eine vernetzbare Gruppe enthält, die vernetzt werden kann, wenn sie mit einem geeigneten Vernetzungsmittel coreagiert oder mit wirksamer Strahlung bestrahlt wird.

**30.** Mittel nach Anspruch 29, worin a 1 ist.

**31.** Mittel nach Anspruch 29, worin jedes D Sauerstoff ist.

**32.** Mittel nach Anspruch 29, worin jedes L gleich -BRB'-, jedes B und B' gleich -C(O)NH-, worin das Stickstoffatom an R gebunden ist, und R gleich

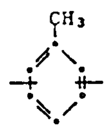

ist.

**33.** Mittel nach Anspruch 29, worin R für

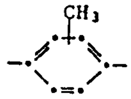

steht.

**34.** Mittel nach Anspruch 29, worin jedes $R^1$ und $R^2$ Methyl ist.

**35.** Mittel nach Anspruch 29, worin h und i jedes 4 sind.

**36.** Mittel nach Anspruch 29, worin v etwa 15 bis etwa 50 beträgt.

**37.** Mittel nach Anspruch 29, worin h 4 ist; i 4 ist und v etwa 15 bis etwa 50 ist.

**38.** Mittel nach Anspruch 29, worin (x + y + z) multipliziert mit q etwa 25 bis etwa 75 ist.

**39.** Mittel nach Anspruch 29, worin
a) jedes b, d und f 1 ist und $R^3$-$R^{20}$ alle Wasserstoff sind, oder
b) jedes b, d und f Null ist, jedes $R^3$, $R^4$, $R^8$-$R^{10}$, $R^{14}$-$R^{16}$ und $R^{20}$ Wasserstoff ist und jedes $R^7$, $R^{13}$ und $R^{19}$ Methyl ist.

**40.** Mittel nach Anspruch 39, worin (x + y + z) multipliziert mit q etwa 25 bis etwa 75 ist.

**41.** Mittel nach Anspruch 29, worin c 1 ist.

**42.** Mittel nach Anspruch 29, worin L' gleich P'-BRB'- ist.

**43.** Mittel nach Anspruch 29, worin L" gleich -D-S'-BRB'-P' ist.

**44.** Mittel nach Anspruch 29, worin jedes P'

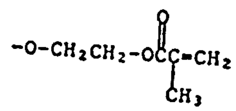

ist.

**45.** Mittel nach Anspruch 29, worin a 1 ist; jedes D Sauerstoff ist; jedes L gleich -BRB'- ist; jedes B und B' gleich -C(O)NH- ist, wobei das Stickstoffatom an R gebunden ist; jedes R gleich

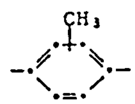 ;

ist; jedes $R^1$ und $R^2$ Methyl ist; h und i jedes 4 sind; v etwa 15 bis etwa 50 ist; (x + y + z) multipliziert mit q etwa 25 bis etwa 75 ist; und

a) jedes b, d und f 1 ist und $R^3$-$R^{20}$ alle Wasserstoff sind; oder

b) jedes b, d und f Null ist; jedes $R^3$, $R^4$, $R^8$-$R^{10}$, $R^{14}$-$R^{16}$ und $R^{20}$ Wasserstoff ist; und jedes $R^7$, $R^{13}$ und $R^{19}$ Methyl ist;

L' gleich P'-BRB'- ist; und P' gleich

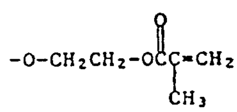

ist.

**46.** Mittel nach Anspruch 29, worin c 1 ist und L" für -D-S'-BRB'-P' steht.

**47.** Verwendung eines Mittels nach Anspruch 1 bis 46 oder 48 bis 52 für das Korrigieren von Sehfehlern.

**48.** Mittel nach Anspruch 1, worin jedes A die Formel V hat,

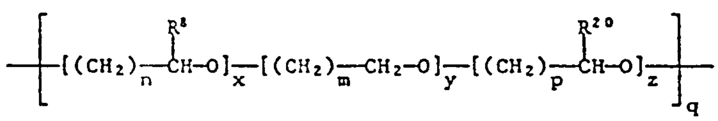 (V)

worin n, m und p unabhängig 1 - 3 sind; und x, y, z und q wie im Anspruch 1 definiert sind, vorausgesetzt, daß jedes von ihnen größer als 0 ist; $R^8$ und $R^{20}$ Alkyl mit bis zu 6 Kohlenstoffatomen sind; oder die Formel VI hat,

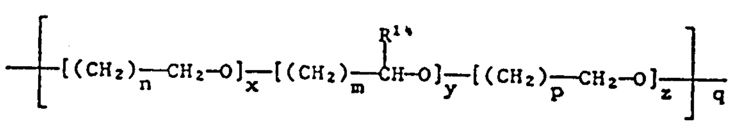 (VI)

worin n, m, p, x, y, z und q wie oben für die Formel V definiert sind und $R^{14}$ Alkyl mit bis zu 6 Kohlenstoffatomen ist.

**49.** Mittel nach Anspruch 48, worin in der Formel V jedes von n, m und p 1 ist, x, y, z und q wie im Anspruch 48 definiert sind, und $R^8$ und $R^{20}$ Methyl sind und worin in der Formel VI jedes von n, m und p 1 ist, x, y, z und q wie im Anspruch 48 definiert sind und $R^{14}$ Methyl ist.

**50.** Mittel nach Anspruch 49, worin q 1 ist.

**51.** Mittel nach Anspruch 49, worin x und z innerhalb irgendeines A gleich sind.

**52.** Mittel nach Anspruch 49, worin jedes x und jedes z den gleichen Wert hat.

**53.** Verfahren zur Herstellung eines optisch klaren, benetzbaren, flexiblen, im wesentlichen nicht quellbaren, sauerstoffdurchlässigen Polymers aus einem vernetzbaren Monomer mit einem Segment S" der Formel I, $(D\text{-}S'\text{-}L\text{-}D\text{-}A\text{-}L)_a$- (I) worin a 1 bis 10 ist; jedes D unabhängig Sauerstoff oder -N($R^{21}$)- ist; jedes S' unabhängig ein Segment der Formel II ist,

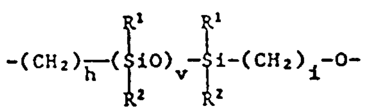 ; (II)

jedes A unabhängig ein Segment der Formel III ist,

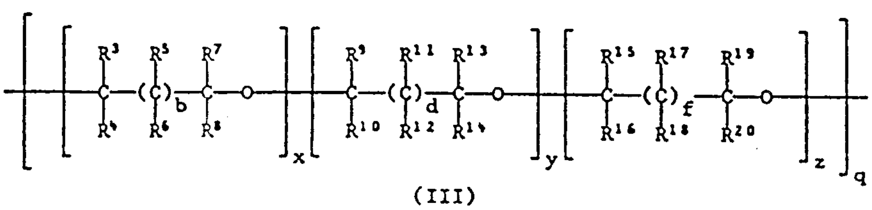

(III)

der endständige Sauerstoff innerhalb jeder Einheit der Formel II und III durch -N($R^{21}$)- ersetzbar ist;
jedes L unabhängig -BRB'- ist, die endständige L-Gruppe innerhalb irgendeines Monomers der Formel I auch befähigt ist, -BR- zu sein;
worin jedes b, d und f unabhängig 0 - 4 ist; q eine Zahl von 1 bis 1000 ist; jedes x, y und z unabhängig 0 bis 100 ist, vorausgesetzt, daß wenigstens eines von x, y und z wenigstens 1 ist; sodaß (x + y + z) multipliziert mit q 4 bis 1000 ist;
jedes h und i eine ganze Zahl von 1 bis 6 ist, v eine ganze Zahl von 2 bis 75 ist;
$R^1$ und $R^2$ unabhängig Alkyl mit bis zu 18 Kohlenstoffatomen oder Aryl mit bis zu 12 Kohlenstoffatomen sind;
jedes von $R^3$, $R^4$, $R^7$-$R^{10}$, $R^{13}$-$R^{16}$, $R^{19}$ und $R^{20}$ unabhängig ausgewählt wird aus der Gruppe bestehend aus Wasserstoff, Halogen, einem aliphatische, aromatische oder heterocyclische Gruppe enthaltenden Rest ausgewählt aus unsubstituiertem $C_1$-$C_{16}$-Alkyl; substituiertem $C_1$-$C_{16}$-Alkyl; unsubstituiertem $C_2$-$C_{16}$-Alkenyl; worin die Alkyl- und Alkenyl-Substituenten unabhängig ausgewählt werden aus $C_1$-$C_{16}$-Alkoxycarbonyl, $C_2$-$C_{16}$-Alkenyloxycarbonyl, Fluoro, Aryl mit bis zu 10 Kohlenstoffatomen, $C_1$-$C_{16}$-Alkoxy, $C_1$-$C_{16}$-Alkanoyloxy, Aryloxy mit bis zu 10 Kohlenstoffatomen, $C_3$-$C_6$-Alkenoyloxy, Aroyl mit bis zu 10 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy (bis zu 7 Kohlenstoffatome)-carbonyl, Oxacycloalkyl (bis zu 7 Kohlenstoffatome)-carbonyloxy und Aryl (mit bis zu 10 Kohlenstoffatomen)-oxycarbonyl, wobei jeder der genannten Alkyl- und Alkenyl-Substituenten seinerseits wahlweise substituiert ist durch $C_1$-$C_6$-Alkyl, Fluoro oder ein $C_1$-$C_6$-Alkoxy, vorausgesetzt, daß das letztgenannte Alkoxy nicht an ein Kohlenstoffatom gebunden ist, das schon einfach an ein anderes Sauerstoffatom gebunden ist;

$R^3$, $R^4$, $R^7$-$R^{10}$, $R^{13}$-$R^{16}$, $R^{19}$ und $R^{20}$ weiters unabhängig ausgewählt werden aus Aryl mit bis zu 10 Kohlenstoffatomen, $C_3$-$C_8$-Cycloalkyl und Oxacycloalkyl mit bis zu 7 Kohlenstoffatomen, von denen jedes unsubstituiert sein kann oder weiter substituiert durch einen Substituenten ausgewählt aus der Gruppe der Substituenten für das genannte $R^3$-Alkyl, die oben dargelegt werden;
$R^5$, $R^6$, $R^{11}$, $R^{12}$, $R^{17}$ und $R^{18}$ ausgewählt werden aus der gleichen Gruppe, die oben für $R^3$ dargelegt ist; und $R^5$, $R^6$, $R^{11}$, $R^{12}$, $R^{17}$ und $R^{18}$ weiters unabhängig ausgewählt werden aus $C_1$-$C_{16}$-Alkoxycarbonyl, $C_3$-$C_{16}$-Alkenoyloxy, $C_2$-$C_{16}$-Alkenyloxycarbonyl und $C_1$-$C_{16}$-Alkanoyloxy, von denen jedes weiter substituiert sein kann durch Fluor, Aryl mit bis zu 10 Kohlenstoffatomen, oder $C_1$-$C_{16}$-Alkoxy, und $R^5$, $R^6$, $R^{11}$, $R^{12}$, $R^{17}$ und $R^{18}$ weiter unabhängig ausgewählt werden aus Aryloxy mit bis zu 10 Kohlenstoffatomen, Cycloalkoxy mit bis zu 8 Kohlenstoffatomen, Cycloalkyl (mit bis zu 8 Kohlenstoffatomen)-carbonyloxy, Cycloalkoxy (mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy (mit bis zu 7 Kohlenstoffatomen)-carbonyl, Oxacycloalkyl (mit bis zu 7 Kohlenstoffatomen)-carbonyloxy und Aryloxy (mit bis zu 10 Kohlenstoffatomen)-carbonyl, von denen jedes weiter substituiert sein kann durch Fluor, $C_1$-$C_6$-Alkyl oder $C_1$-$C_6$-Alkoxy, vorausgesetzt, daß ein Substituent, der ein einfach gebundenes Sauerstoffatom an der Verbindung zum Rest des Moleküls hat, nicht ein Substituent am gleichen Kohlenstoffatom sein kann, das einfach an ein anderes Sauerstoffatom gebunden ist; oder 2 benachbarte Gruppen ausgewählt aus $R^3$-$R^{20}$ zusammen mit den Atomen, an die sie gebunden sind, einen 5-8gliedrigen Cycloalkyl-, Oxacycloalkyl- oder Bicycloalkylring bilden können; $R^{21}$ unabhängig ausgewählt wird aus Wasserstoff, $C_1$-$C_4$-Alkyl und Phenyl; und worin jedes B und B' ausgewählt wird aus

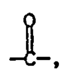, 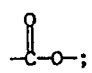; und 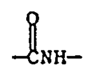

wobei die Carbonylgruppe an A, S' oder D gebunden ist;
jedes R unabhängig eine divalente Verknüpfungsgruppe ist, die ausgewählt wird aus

a) einer divalenten aliphatischen Gruppe mit bis zu 25 Kohlenstoffatomen, die durch Oxy, Carbonyloxy, Amino, Aminocarbonyl, Oxacarbonyl, Ureido, Oxycarbonylamino oder Carbonylamino unterbrochen sein kann;
b) einer divalenten 5-7gliedrigen cycloaliphatischen Gruppe mit 5 - 25 Kohlenstoffatomen;
c) einer divalenten Arylengruppe mit 6 - 25 Kohlenstoffatomen; und
d) einer divalenten Aralkyl- oder Alkarylgruppe mit 7 - 25 Kohlenstoffatomen;

worin die Gruppen b) und d) wahlweise unterbrochen sein können durch die gleichen Gruppen wie in Gruppe a) und worin die Arylringe in den Gruppen c) und d) weiters substituiert sein können mit einem oder mehreren Substituenten ausgewählt aus Halogen, $C_1$-$C_4$-Alkyl und $C_1$-$C_{12}$-Perhaloalkyl; dieses Polymer einen zurückweichenden Kontaktwinkel von weniger als 60° hat; weniger als etwa 10% Wasser im gequollenen Zustand absorbiert hat und Dk x$10^{-10}$ (mm.ml $O_2$/$cm^2$.s.mmHg) von wenigstens etwa 7 hat, durch Umsetzung der erforderlichen Zwischenprodukte auf an sich bekannte Weise.

**54.** Verfahren nach Anspruch 53, worin das genannte benetzbare, flexible, sauerstoffdurchlässige, im wesentlichen nicht quellbare Polymer

a) hergestellt wird aus einem vernetzbaren Monomer mit einer Teilformel Ia $-(D\text{-}A\text{-}L\text{-}S'')_c-$ (Ia)
worin jedes S" unabhängig ein Segment der Formel I von Anspruch 53 ist; jedes D, A und L unabhängig wie im Anspruch 53 definiert ist; c 1 - 10 ist; und a mal c 1 - 10 ist; oder
b) hergestellt wird aus einem vernetzbaren Monomer mit einer Teilformel Ib $-(S'')_c\text{-}D\text{-}S'\text{-}L_a-$ (Ib)
worin $L_a$ ausgewählt wird aus -BRB'- und -BR-; B, R, B' und S' wie im Anspruch 53 definiert sind und S", c, D, A und L wie oben definiert sind.

**55.** Verfahren nach Anspruch 53, worin das genannte benetzbare, flexible, sauerstoffdurchlässige, im wesentlichen nicht quellbare Polymer hergestellt wird aus einem Monomer mit der Formel Ic

$L'\{(D\text{-}A\text{-}L)_e\text{-}S''\}_cL''$ (Ic)

worin e 0 oder 1 ist; S" die Formel $(D\text{-}S'\text{-}L\text{-}D\text{-}A\text{-}L)_a$ wie im Anspruch 54 definiert hat; jedes D, A, L S', a und c unabhängig wie im Anspruch 53 definiert ist;
vorausgesetzt, daß, wenn e = 1, die endständige L-Gruppe (exklusive L' und L") der Formel Ic auch

aus -BR- ausgewählt werden kann;
L' Wasserstoff, P'-BRB'- oder P'- RB'- ist;
L" gleich -P' ist; oder, im Falle, daß e Null ist, auch D-S'-BR-P' oder D-S'-BRB'-P'; und P' ist Wasserstoff, Amino, Hydroxy oder eine Einheit, die eine vernetzbare Gruppe enthält, die vernetzt werden kann, wenn sie mit einem geeigneten Vernetzungsmittel coreagiert oder mit wirksamer Strahlung bestrahlt wird.